# EUROPEAN PATENT APPLICATION

(11) **EP 4 570 877 A1**
(43) Date of publication of application: **18.06.2025**
(21) Application number: 23852630.5
(22) Date of filing: 10.08.2023
(51) Int. Cl.: C09K 3/18, C07F 7/18, C08L 83/00, G02B 1/14, G02B 1/18

(54) **SURFACE TREATMENT AGENT**

(30) Priority: 10.08.2022 JP 2022128447
(71) Applicant: DAIKIN INDUSTRIES, LTD., Osaka-shi, Osaka 530-0001 (JP)
(72) Inventor: KATAOKA, Manami, Osaka-Shi, Osaka 530-0001 (JP); NAITO, Masato, Osaka-Shi, Osaka 530-0001 (JP); KUBOTA, Hiroki, Osaka-Shi, Osaka 530-0001 (JP); TAKANO, Shinya, Osaka-Shi, Osaka 530-0001 (JP); MATSUI, Motoshi, Osaka-Shi, Osaka 530-0001 (JP); YAMAGUCHI, Fumihiko, Osaka-Shi, Osaka 530-0001 (JP); NOMURA, Takashi, Osaka-Shi, Osaka 530-0001 (JP)
(74) Representative: Hoffmann Eitle
(86) International application number: PCT/JP2023/029314
(87) International publication number: WO 2024/034668

(57) **Abstract**

The present invention provides a composition comprising (component A) a silane coupling agent containing a long chain alkyl structure; and (component B) a silane coupling agent containing a siloxane structure.

## Description

### Technical Field

The present disclosure relates to a surface-treating agent.

### Background Art

Certain types of silane compounds are known to be capable of providing excellent water- and oil-repellency, when used in surface treatment of a substrate (Patent Literature 1).

### Citation List

### Patent Literature

Patent Literature 1: JP 2019-44179 A

### Summary of Invention

### Technical Problem

An object of the present disclosure is to provide a surface-treating agent capable of forming a surface-treating layer that has both friction durability and fingerprint removability by wiping.

### Solution to Problem

The present disclosure includes the following embodiments.
[1] A composition comprising:
   (component A) a silane coupling agent containing a long chain alkyl structure; and
   (component B) a silane coupling agent containing a siloxane structure.
[2] The composition according to [1], wherein the component A is
   a compound represented by the following formula (1A):
      [Formula 1]

      R^{A}-X^{A}-R^{Si} (1A)

      wherein
      R^{A} is a linear alkyl group having 7 or more carbon atoms,
      X^{A} is a divalent group, and
      R^{Si} is a monovalent group containing a Si atom to which a hydroxyl group or a hydrolyzable group is bonded, or
   a compound represented by the following formula (1B):
      [Formula 2]

      R^{S}-X^{B}**-**R^{Si} (1B)

      wherein
      R^{S} is a monovalent group containing one or more Si atoms to which a hydroxyl group or a hydrolyzable group is not directly bonded,
      X^{B} is a divalent organic group containing an alkylene group having 7 or more carbon atoms, and
      R^{Si} is a monovalent group containing a Si atom to which a hydroxyl group or a hydrolyzable group is bonded.
[3] The composition according to any one of [1] to [3], wherein the component B is
   a compound represented by the following formula (1B):
   [Formula 3]

   R^{S}-X^{B}-R^{Si} (1B)

   wherein
   R^{S} is a monovalent group containing one or more Si atoms to which a hydroxyl group or a hydrolyzable group is not directly bonded,
   X^{B} is a divalent organic group containing an alkylene group having 7 or more carbon atoms, and
   R^{Si} is a monovalent group containing a Si atom to which a hydroxyl group or a hydrolyzable group is bonded,
      or
   a compound represented by the following formula (1C) or (2C):
      [Formula 4]

      R^{SO1}_{α}-X^{C}-R^{Si}_{β} (1C)

      R^{Si}_{γ}-X^{C}-R^{SO2}-X^{C}-R^{Si}_{γ} (2C)

      wherein
      R^{SO1} is each independently R¹-R^{SO}-SiR²₂-,
      R^{SO2} is -R^{SO}-SiR²₂-,
      R^{SO} is each independently a group represented by the following formula: 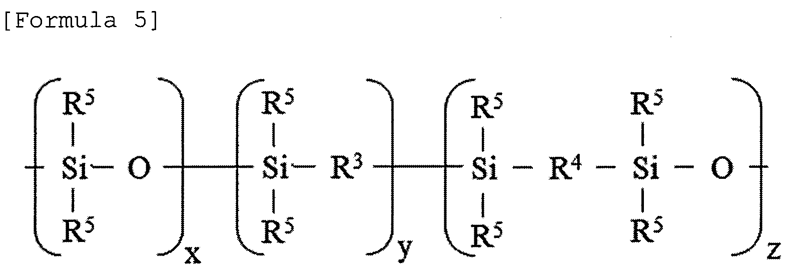 wherein
         R³ is each independently a C₁₋₁₂ alkylene group, -R⁶-OR⁶-, -R⁸-R⁷-R⁸-, -R⁸-R⁷-R⁹-R⁷-R⁸-, -R⁸-R⁷-R⁹-R⁶-R⁹-R⁷-R⁸-, or - R⁹-R⁶-R⁹-R⁷-R⁹-R⁶-R⁹-,
         R⁴ is each independently a C₁₋₁₂ alkylene group, -R⁶-OR⁶-, -R⁸-R⁷-R⁸-, -R⁸-R⁷-R⁹-R⁷-R⁸-, -R⁸-R⁷-R⁹-R⁶-R⁹-R⁷-R⁸-, or - R⁹-R⁶-R⁹-R⁷-R⁹-R⁶-R⁹-,
         R⁶ is each independently a C₁₋₆ alkylene group,
         R⁷ is each independently an optionally substituted arylene group,
         R⁸ is each independently a single bond or a C₁₋₆ alkylene group,
         R⁹ is each independently a single bond or an oxygen atom,
            R⁵ is each independently a hydrocarbon group,
            x is an integer of 0 to 200,
            y is an integer of 0 to 200,
            z is an integer of 0 to 200,
            x + y + z is 1 or more, and
            the occurrence order of the respective repeating units enclosed in parentheses provided with x, y, or z is not limited in the formula,
            R¹ is a hydrocarbon group,
            R² is each independently a hydrocarbon group,
            R^{Si} is each independently a monovalent group containing a Si atom to which a hydroxyl group or a hydrolyzable group is bonded,
            X^{C} is each independently a di- to decavalent organic group,
            α is an integer of 1 to 9,
            β is an integer of 1 to 9, and
            γ is each independently an integer of 1 to 9.
[4] The composition according to [2] or [3], wherein R^{S} is a group represented by the following group:

   R⁴³-(SiR⁴⁴₂O)ₙ-SiR⁴⁴₂-

   wherein
   R⁴³ is a C₁₋₁₂ alkyl group or a group represented by A group:
   [Formula 6]

   R⁵¹ₙₐR⁵²_{3**-**na}Si-(O)_{z}- (A)

   wherein
   R⁵¹ is each independently a group represented by -(R⁵⁴-OSiR53₂)ₘₐ-R⁵³,
      R⁵⁴ is each independently an oxygen atom or a C₁₋₆ alkylene group,
      R⁵³ is each independently a hydrocarbon group or R^{1'},
         R^{51'} has the same definition as R⁵¹,
      ma is each independently an integer of 1 to 5, provided that the number of R^{51'} in R⁵¹ is 20 or less,
      R⁵² is each independently or a hydrocarbon group,
      na is 1 to 3, and
      z is 0 or 1,
      R⁴⁴ is each independently a C₁₋₁₂ alkyl group, and
      n is 0 to 1,500.
[5] The composition according to [2] or [3], wherein R^{S} is a group represented by A group:
   [Formula 7]

   R⁵¹ₙₐR⁵²₃₋ₙₐSi-(O)_{z}- (A)

   wherein
   R⁵¹ is each independently a group represented by -(R⁵⁴-OSiR53₂)ₘₐ-R⁵³,
      R⁵⁴ is each independently an oxygen atom or a C₁₋₆ alkylene group,
      R⁵³ is each independently a hydrocarbon group or R¹',
         R⁵¹' has the same definition as R⁵¹,
      ma is each independently an integer of 1 to 5, provided that the number of R⁵¹' in R⁵¹ is 20 or less,
   R⁵² is each independently or a hydrocarbon group,
   na is 1 to 3, and
   z is 0 or 1.
[6] The composition according to any one of [2] to [5], wherein R^{Si} is a group represented by the following formula (S1), (S2), (S3), (S4), or (S5): 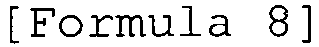 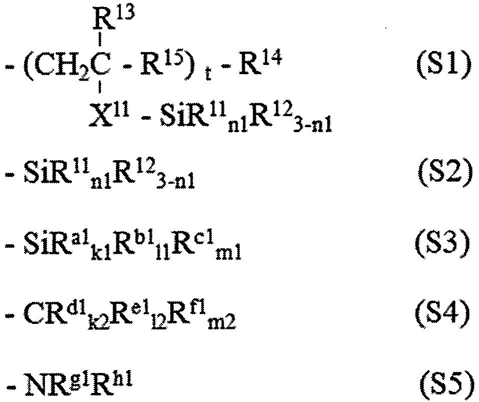 wherein
   R¹¹ is each independently a hydroxyl group or a hydrolyzable group,
   R¹² is each independently a monovalent organic group,
   n1 is each independently an integer of 0 to 3 for each (SiR¹¹ₙ₁R¹²₃₋ₙ₁) unit,
   X¹¹ is each independently a single bond or a divalent organic group,
   R¹³ is each independently a hydrogen atom or a monovalent organic group,
   t is each independently an integer of 2 or more,
   R¹⁴ is each independently a hydrogen atom, a halogen atom, or -X¹¹-SiR¹¹ₙ₁R¹²₃₋ₙ₁,
   R¹⁵ is each independently a single bond, an oxygen atom, an alkylene group having 1 to 6 carbon atoms, or an alkyleneoxy group having 1 to 6 carbon atoms,
   R^{a1} is each independently -Z¹-SiR²¹ₚ₁R²²_{q1}R²³ᵣ₁,
   Z¹ is each independently a divalent organic group,
   R²¹ is each independently -Z^{1'}-SiR^{21'}ₚ₁,R^{22'}_{q1'}R^{23'}_{r1'},
   R²² is each independently a hydroxyl group or a hydrolyzable group,
   R²³ is each independently a monovalent organic group,
   p1 is each independently an integer of 0 to 3,
   q1 is each independently an integer of 0 to 3,
   r1 is each independently an integer of 0 to 3,
   Z¹' is each independently a divalent organic group,
   R²¹' is each independently -Z¹"-SiR²²"_{q1"}R²³"_{r1"},
   R²²' is each independently a hydroxyl group or a hydrolyzable group,
   R²³' is each independently a monovalent organic group,
   p1' is each independently an integer of 0 to 3,
   q1' is each independently an integer of 0 to 3,
   r1' is each independently an integer of 0 to 3,
   Z¹" is each independently a divalent organic group,
   R²²" is each independently a hydroxyl group or a hydrolyzable group,
   R²³" is each independently a monovalent organic group,
   q1" is each independently an integer of 0 to 3,
   r1" is each independently an integer of 0 to 3,
   R^{b1} is each independently a hydroxyl group or a hydrolyzable group,
   R^{c1} is each independently a monovalent organic group,
   k1 is each independently an integer of 0 to 3,
   l1 is each independently an integer of 0 to 3,
   m1 is each independently an integer of 0 to 3,
   provided that, in the formula (S3), at least two Si atoms to which a hydroxyl group or a hydrolyzable group is bonded are present,
   R^{d1} is each independently -Z²-CR³¹ₚ₂R³²_{q2}R³³ᵣ₂,
   Z² is each independently a single bond, an oxygen atom, or a divalent organic group,
   R³¹ is each independently -Z²'-CR³²'_{q2'}R³³'_{r2'},
   R³² is each independently -Z³-SiR³⁴ₙ₂R³⁵₃₋ₙ₂,
   R³³ is each independently a hydrogen atom, a hydroxyl group, or a monovalent organic group,
   p2 is each independently an integer of 0 to 3,
   q2 is each independently an integer of 0 to 3,
   r2 is each independently an integer of 0 to 3,
   Z²' is each independently a single bond, an oxygen atom, or a divalent organic group,
   R³²' is each independently -Z³-SiR³⁴ₙ₂R³⁵₃₋ₙ₂,
   R³³' is each independently a hydrogen atom, a hydroxyl group, or a monovalent organic group,
   q2' is each independently an integer of 0 to 3,
   r2' is each independently an integer of 0 to 3,
   Z³ is each independently a single bond, an oxygen atom, or a divalent organic group,
   R³⁴ is each independently a hydroxyl group or a hydrolyzable group,
   R³⁵ is each independently a monovalent organic group,
   n2 is each independently an integer of 0 to 3,
   R^{e1} is each independently -Z³-SiR³⁴ₙ₂R³⁵₃₋ₙ₂,
   R^{f1} is each independently a hydrogen atom, a hydroxyl group, or a monovalent organic group,
   k2 is each independently an integer of 0 to 3,
   l2 is each independently an integer of 0 to 3,
   m2 is each independently an integer of 0 to 3,
   provided that, in the formula (S4), at least two Si atoms to which a hydroxyl group or a hydrolyzable group is bonded are present,
   R^{g1} and R^{h1} are each independently -Z⁴-SiR¹¹ₙ₁R¹²₃₋ₙ₁, -Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂, and
   Z⁴ is each independently a single bond, an oxygen atom, or a divalent organic group,
   provided that, in the formula (S5), at least two Si atoms to which a hydroxyl group or a hydrolyzable group is bonded are present.
[7] The composition according to [2] or [4], wherein
   X^{A} is a single bond, or a divalent group containing - CO-, -COO-, -NR⁴¹-, -CONR⁴¹-, -OCONR⁴¹-, -NR⁴¹-CO-NR⁴¹-, -O- or -S-, and
   R⁴¹ is a hydrogen atom or a C₁₋₆ alkyl group.
[8] The composition according to any one of [2] to [6], wherein X^{B} is further a divalent organic group containing - CO-, -COO-, -NR⁴¹-, -CONR⁴¹-, -OCONR⁴¹-, -NR⁴¹-CO-NR⁴¹-, -O- or -S-.
[9] The composition according to any one of [2] to [6], wherein the number of carbon atoms in the alkylene group in X^{B} in the formula (1B) is larger than the number of Si atoms in R^{S}.
[10] The composition according to any one of [2] to [6], wherein the number of carbon atoms in the alkylene group in X^{B} in the formula (1B) is 2.5 or more times the number of Si atoms in R^{S}.
[11] The composition according to any one of [2] to [6], wherein the number of carbon atoms in the alkylene group in X^{B} in the formula (1B) is larger than the number of atoms in a main chain in R^{S}.
[12] The composition according to any one of [2] to [6], wherein the number of carbon atoms in the alkylene group in X^{B} in the formula (1B) is 2.0 or more times the number of atoms in a main chain in R^{S}.
[13] The composition according to [5] or [6], wherein X^{c} is a divalent organic group represented by the following formula:

   -(R⁵¹)ₚ₅-(X⁵¹)_{q5}-

   wherein
   R⁵¹ is -(CH₂)ₛ₅-, or an o-, m- or p-phenylene group,
   s5 is an integer of 1 to 20,
   X⁵¹ is -(X⁵²)ₗ₅-,
   X⁵² is each independently a group selected from the group consisting of -O-, -S-, an o-, m- or p-phenylene group, -CO-, -C(O)O-, -CONR⁵⁴-, -O-CONR⁵⁴-, -NR⁵⁴-, and -(CH₂)ₙ₅-,
   R⁵⁴ is each independently a hydrogen atom or a monovalent organic group,
   n5 is each independently an integer of 1 to 20,
   l5 is an integer of 1 to 10,
   p5 is 0 or 1, and
   q5 is 0 or 1,
   where at least one of p5 and q5 is 1, and the occurrence order of the respective repeating units enclosed in parentheses provided with p5 or q5 is not limited.
[14] The composition according to any one of [5] to [13], wherein X^{A} or X^{B} in the component A and X^{B} or X^{C} in the component B have the same structure.
[15] The composition according to any one of [4] to [14], wherein X^{A}, X^{B}, and X^{C} contain an amide bond.
[16] The composition according to any one of [4] to [15], wherein a mixing ratio of the component A and the component B is 1:99 to 99:1 in mass ratio.
[17] The composition according to any one of [1] to [16], wherein at least one of the component A and the component B contains only one of a long chain alkyl structure or a siloxane structure.
[18] The composition according to any one of [1] to [16], further comprising a solvent selected from compounds represented by R⁸¹OR⁸², R⁸³ₙ₈C₆H₆₋ₙ₈, R⁸⁴R⁸⁵R⁸⁶Si-(O-SiR⁸⁷R⁸⁸)ₘ₈-R⁸⁹, and (OSiR⁸⁷R⁸⁸)ₘ₉,
   wherein
   R⁸¹ to R⁸⁹ are each independently a monovalent organic group having 1 to 10 carbon atoms,
   m8 is an integer of 1 to 6,
   m9 is an integer of 3 to 8, and
   n8 is an integer of 0 to 6.
[19] The composition according to [18], wherein the solvent is R⁸⁴R⁸⁵R⁸⁶Si-(O-SiR⁸⁷R⁸⁸)ₘ₈-R⁸⁹.
[20] The composition according to [19] or [20], wherein the solvent is hexamethyldisiloxane, hexaethyldisiloxane, octamethyltrisiloxane, octamethylcyclotetrasiloxane, or decamethylcyclopentasiloxane.
[21] A surface-treating agent comprising the composition according to any one of [1] to [21].
[22] The surface-treating agent according to [22], further comprising a condensed product of a compound of the component A or the component B.
[23] The surface-treating agent according to [22] or [23], which is for vacuum deposition.
[24] The surface-treating agent according to [22] or [23], which is for wet coating.
[25] A pellet comprising the surface-treating agent according to any one of [22] to [24].
[26] An article comprising a substrate and a layer on the substrate, the layer being formed from the surface-treating agent according to any one of [21] to [24].
[27] The article according to [26], comprising a silicon oxide-containing intermediate layer between the substrate and the layer.
[28] The article according to [27], wherein the intermediate layer comprises alkali metal atoms.
[29] The article according to [28], wherein at least a portion of the alkali metal atoms are sodium atoms.
[30] The article according to any one of [26] to [29], which is an optical member.
[31] The article according to any one of [26] to [29], which is a display.

### Advantageous Effect of Invention

According to the present disclosure, there can be provided a surface-treating agent capable of forming a surface-treating layer that has both friction durability and fingerprint removability by wiping.

### Description of Embodiments

The term "monovalent organic group" as used herein refers to a carbon-containing monovalent group. The monovalent organic group is not limited, and may be a hydrocarbon group or a derivative thereof. The derivative of a hydrocarbon group refers to a group that has one or more of N, O, S, Si, amide, sulfonyl, siloxane, carbonyl, carbonyloxy, and the like at an end or in the molecular chain of the hydrocarbon group. The simple term "organic group" refers to a monovalent organic group. The term "divalent organic group" refers to a carbon-containing divalent group. The divalent organic group may be, for example, a divalent group obtained by further removing one hydrogen atom from an organic group. Similarly, an organic group having a valence of 3 or more refers to a group obtained by removing a predetermined number of hydrogen atoms from an organic group.

As used herein, the "hydrocarbon group" refers to a group containing carbon and hydrogen and a group in which a hydrogen atom is removed from the hydrocarbon. Such a hydrocarbon group is not limited, but examples thereof include C₁₋₂₀ hydrocarbon groups, such as an aliphatic hydrocarbon group and an aromatic hydrocarbon group. The "aliphatic hydrocarbon group" may be either linear, branched, or cyclic, and may be either saturated or unsaturated. The hydrocarbon group may contain one or more ring structures. The hydrocarbon group is optionally substituted with one or more substituents.

The substituent of the "hydrocarbon group" as used herein is not limited, and examples thereof include a halogen atom; and one or more groups selected from a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5- to 10-membered heterocyclyl group, a 5- to 10-membered unsaturated heterocyclyl group, a C₆₋₁₀ aryl group, and a 5- to 10-membered heteroaryl group, each of which is optionally substituted with one or more halogen atoms.

The term "hydrolyzable group", as used herein, refers to a group that can undergo a hydrolysis reaction, namely, refers to a group that can be removed from the main backbone of the compound by a hydrolysis reaction. Examples of the hydrolyzable group include -OR^{h}, -OCOR^{h}, -O-N=CR^{h}₂, -NR^{h}₂, - NHR^{h}, -NCO, and a halogen (in these formulae, R^{h} represents a substituted or unsubstituted alkyl group having 1 to 4 carbon atoms), and -OR^{h} (that is, an alkoxy group) is preferred. Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferred, and a methyl group or an ethyl group is more preferred.

### (Composition)

The composition of the present disclosure comprises:
(component A) a silane coupling agent containing a long chain alkyl structure; and
(component B) a silane coupling agent containing a siloxane structure.

### (Component A)

The component A contained in the composition of the present disclosure is a silane coupling agent containing a long chain alkyl structure.

In the present specification, a silane coupling agent means a compound having a Si atom to which a hydroxyl group or a hydrolyzable group is bonded.

The long chain alkyl structure means an alkyl group or alkylene group having 7 or more carbon atoms. The long chain alkyl structure may be present at any location in the silane coupling agent molecule.

The silane coupling agent of the component A may contain any structure other than the long chain alkyl structure.

In one embodiment, the component A is a compound represented by the following formula (1A):
[Formula 9]

R^{A}-X^{A}-R^{Si} (1A)

wherein
R^{A} is a linear alkyl group having 7 or more carbon atoms,
X^{A} is a divalent group, and
R^{Si} is a monovalent group containing a Si atom to which a hydroxyl group or a hydrolyzable group is bonded, or a compound represented by the following formula (1B):
   [Formula 10]

   R^{S}-X^{B}-R^{Si} (1B)

   wherein
   R^{S} is a monovalent group containing one or more Si atoms to which a hydroxyl group or a hydrolyzable group is not directly bonded,
   X^{B} is a divalent organic group containing an alkylene group having 7 or more carbon atoms, and
   R^{Si} is a monovalent group containing a Si atom to which a hydroxyl group or a hydrolyzable group is bonded.

### (Compound represented by formula (1A))

Formula (1A):
[Formula 11]

R^{A}-X^{A}-R^{Si} (1A)

wherein
R^{A} is a linear alkyl group having 7 or more carbon atoms,
X^{A} is a divalent group, and
R^{Si} is a monovalent group containing a Si atom to which a hydroxyl group or a hydrolyzable group is bonded.

R^{A} is a linear alkyl group having 7 or more carbon atoms.

In one embodiment, when the atom in X^{A} bonded to R^{A} is an atom other than a carbon atom, the lower limit of the number of carbon atoms in R^{A} may be preferably 10, more preferably 16, and still more preferably 19, such as 21 or 23. The upper limit of the number of carbon atoms may be preferably 32, and more preferably 28, such as 26 or 23. R^{A} may be preferably a linear C₁₀₋₃₂ alkyl group, and more preferably a C₁₆₋₂₂ alkyl group.

In one embodiment, when the atom in X^{A} bonded to R^{A} is a carbon atom, the lower limit of the number of carbon atoms in R^{A} may be preferably 9, more preferably 15, and still more preferably 18, such as 20 or 22. The upper limit of the number of carbon atoms may be preferably 31, and more preferably 27, such as 25 or 22. R^{A} may be preferably a linear C₉₋₃₁ alkyl group, and more preferably a C₁₅₋₂₁ alkyl group.

X^{A} is interpreted as a linker connecting the alkyl moiety (R^{A}), which mainly provides functions such as water-repellency, to the silane moiety (R^{Si}) providing a binding ability to a substrate. Accordingly, X^{A} is not limited as long as the compounds represented by the formula (1A) can stably exist.

X^{A} is a single bond, or a divalent group containing - CO-, -COO-, -NR⁴¹-, -CONR⁴¹-, -OCONR⁴¹-, -NR⁴¹-CO-NR⁴¹-, -O- or -S-, and R⁴¹ is a hydrogen atom or a C₁₋₆ alkyl group.

The C₁₋₆ alkyl group in R⁴¹ may be linear or may be branched. In one embodiment, the C₁₋₆ alkyl group is linear. In another embodiment, the C₁₋₆ alkyl group is branched. The C₁₋₆ alkyl group is preferably a C₁₋₄ alkyl group, more preferably a C₁₋₃ alkyl group, still more preferably a methyl group or an ethyl group, and particularly preferably a methyl group.

In one embodiment, R⁴¹ is a hydrogen atom.

In one embodiment, X^{A} is a single bond.

In another embodiment, X^{A} is a divalent group containing -CO-, -NR⁴¹-, -COO-, -CONR⁴¹-, -OCONR⁴¹-, -NR⁴¹-CO-NR⁴¹-, -O- or -S-.

The divalent group is preferably a group represented by the following formula:

-X^{11A}-X^{12A}-

wherein
X^{11A} is -CO-, -COO-, -NR⁴¹-, -CONR⁴¹-, -OCONR⁴¹-, -NR⁴¹-CO-NR⁴¹-, -O-, or -S-,
R⁴¹ is a hydrogen atom or a C₁₋₆ alkyl group, and
X^{12A} is a single bond or a C₁₋₆ alkylene group.

X^{11A} is preferably -CO-, -CONR⁴¹-, or -OCONR⁴¹-. R⁴¹ is preferably a hydrogen atom.

In one embodiment, X^{12A} is a single bond.

In another embodiment, X^{12A} is a C₁₋₆ alkylene group.

The C₁₋₆ alkylene group in X^{12A} may be linear or may be branched. In one embodiment, the C₁₋₆ alkylene group is linear. In another embodiment, the C₁₋₆ alkylene group is branched. The C₁₋₆ alkylene group is preferably a C₁₋₄ alkylene group, and more preferably a C₁₋₃ alkylene group.

-X^{11A}-X^{12A}- is preferably -CO- or -CONR⁴¹-X^{12A}-. R⁴¹ is preferably a hydrogen atom. X^{12A} is preferably a C₁₋₆ alkylene group.

R^{Si} is a monovalent group containing a Si atom to which a hydroxyl group or a hydrolyzable group is bonded.

In a preferred embodiment, R^{Si} is a group represented by the following formula (S1), (S2), (S3), (S4), or (S5): 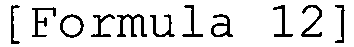 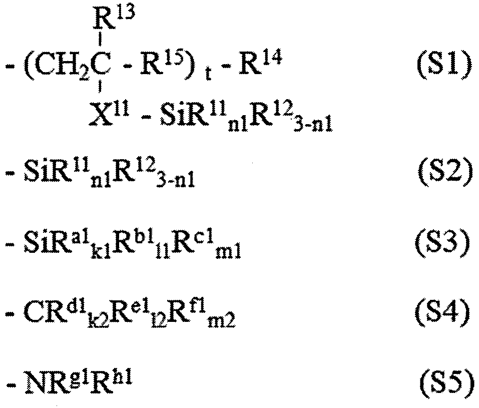 wherein
R¹¹ is each independently a hydroxyl group or a hydrolyzable group,
R¹² is each independently a monovalent organic group,
n1 is each independently an integer of 0 to 3 for each (SiR¹¹ₙ₁R¹²₃₋ₙ₁) unit,
X¹¹ is each independently a single bond or a divalent organic group,
R¹³ is each independently a hydrogen atom or a monovalent organic group,
t is each independently an integer of 2 or more,
R¹⁴ is each independently a hydrogen atom, a halogen atom, or -X¹¹-SiR¹¹ₙ₁R¹²₃₋ₙ₁,
R¹⁵ is each independently a single bond, an oxygen atom, an alkylene group having 1 to 6 carbon atoms, or an alkyleneoxy group having 1 to 6 carbon atoms,
R^{a1} is each independently -Z¹-SiR²¹ₚ₁R²²_{q1}R²³ᵣ₁,
Z¹ is each independently a divalent organic group,
R²¹ is each independently -Z¹'-SiR²¹'_{p1'}R²²'_{q1'}R²³'_{r1'},
R²² is each independently a hydroxyl group or a hydrolyzable group,
R²³ is each independently a monovalent organic group,
p1 is each independently an integer of 0 to 3,
q1 is each independently an integer of 0 to 3,
r1 is each independently an integer of 0 to 3,
Z¹' is each independently a divalent organic group,
R²¹' is each independently -Z¹"-SiR²²"_{q1"}R²³"_{r1"},
R²²' is each independently a hydroxyl group or a hydrolyzable group,
R²³' is each independently a monovalent organic group,
p1' is each independently an integer of 0 to 3,
q1' is each independently an integer of 0 to 3,
r1' is each independently an integer of 0 to 3,
Z¹" is each independently a divalent organic group,
R²²" is each independently a hydroxyl group or a hydrolyzable group,
R²³" is each independently a monovalent organic group,
q1" is each independently an integer of 0 to 3,
r1" is each independently an integer of 0 to 3,
R^{b1} is each independently a hydroxyl group or a hydrolyzable group,
R^{c1} is each independently a monovalent organic group,
k1 is each independently an integer of 0 to 3,
l1 is each independently an integer of 0 to 3,
m1 is each independently an integer of 0 to 3,
provided that, in the formula (S3), at least two Si atoms to which a hydroxyl group or a hydrolyzable group is bonded are present,
R^{d1} is each independently -Z²-CR³¹ₚ₂R³²_{q2}R³³ᵣ₂,
Z² is each independently a single bond, an oxygen atom, or a divalent organic group,
R³¹ is each independently -Z²'-CR³²'_{q2'}R³³'_{r2'},
R³² is each independently -Z³-SiR³⁴ₙ₂R³⁵₃₋ₙ₂,
R³³ is each independently a hydrogen atom, a hydroxyl group, or a monovalent organic group,
p2 is each independently an integer of 0 to 3,
q2 is each independently an integer of 0 to 3,
r2 is each independently an integer of 0 to 3,
Z²' is each independently a single bond, an oxygen atom, or a divalent organic group,
R³²' is each independently -z³-SiR³⁴ₙ₂R³⁵₃₋ₙ₂,
R³³' is each independently a hydrogen atom, a hydroxyl group, or a monovalent organic group,
q2' is each independently an integer of 0 to 3,
r2' is each independently an integer of 0 to 3,
Z³ is each independently a single bond, an oxygen atom, or a divalent organic group,
R³⁴ is each independently a hydroxyl group or a hydrolyzable group,
R³⁵ is each independently a monovalent organic group,
n2 is each independently an integer of 0 to 3,
R^{e1} is each independently -Z³SiR³⁴ₙ₂R³⁵₃₋ₙ₂,
R^{f1} is each independently a hydrogen atom, a hydroxyl group, or a monovalent organic group,
k2 is each independently an integer of 0 to 3,
l2 is each independently an integer of 0 to 3,
m2 is each independently an integer of 0 to 3,
provided that, in the formula (S4), at least two Si atoms to which a hydroxyl group or a hydrolyzable group is bonded are present,
R^{g1} and R^{h1} are each independently -Z⁴-SiR¹¹ₙ₁R¹²₃₋ₙ₁, -Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂, and
Z⁴ is each independently a single bond, an oxygen atom, or a divalent organic group,
provided that, in the formula (S5), at least two Si atoms to which a hydroxyl group or a hydrolyzable group is bonded are present.

In the formulae, R¹¹ is each independently a hydroxyl group or a hydrolyzable group.

R¹¹ is preferably, each independently, a hydrolyzable group.

R¹¹ is preferably, each independently, -OR^{h}, -OCOR^{h}, -ON=CR^{h}₂, -NR^{h}₂, -NHR^{h}, -NCO, or a halogen (in these formulae, R^{h} represents a substituted or unsubstituted C₁₋₄ alkyl group), and more preferably -OR^{h} (that is, an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferred, and a methyl group or an ethyl group is more preferred. In one embodiment, R^{h} is a methyl group, and in another embodiment, R^{h} is an ethyl group.

In the formulae, R¹² is each independently a monovalent organic group. Such a monovalent organic group is a monovalent organic group excluding the hydrolyzable group.

In R¹², the monovalent organic group is preferably a C₁₋₂₀ alkyl group, more preferably a C₁₋₆ alkyl group, and still more preferably a methyl group.

In the formulae, n1 is each independently an integer of 0 to 3 for each (SiR¹¹ₙ₁R¹²₃₋ₙ₁) unit. However, in the formula (S1), at least two (SiR¹¹ₙ₁R¹²₃₋ₙ₁) units with n1 of 1 to 3 are present. In other words, in the formula (S1), at least two Si atoms to which a hydroxyl group or a hydrolyzable group is bonded are present.

n1 is each independently an integer of preferably 1 to 3, more preferably 2 to 3, and still more preferably 3 for each (SiR¹¹ₙ₁R¹²₃₋ₙ₁) unit.

In the formula, X¹¹ is each independently a single bond or a divalent organic group. Such a divalent organic group is preferably -R²⁸-Oₓ-R²⁹- (wherein R²⁸ and R²⁹ are each independently a single bond or a C₁₋₂₀ alkylene group, and x is 0 or 1). Such a C₁₋₂₀ alkylene group may be linear or may be branched, and is preferably linear. Such a C₁₋₂₀ alkylene group is preferably a C₁₋₁₀ alkylene group, more preferably a C₁₋₆ alkylene group, and still more preferably a C₁₋₃ alkylene group.

In one embodiment, X¹¹ is each independently a -C₁₋₆ alkylene-O-C₁₋₆ alkylene- or a -O-C₁₋₆ alkylene-.

In a preferred embodiment, X¹¹ is each independently a single bond or a linear C₁₋₆ alkylene group, preferably a single bond or a linear C₁₋₃ alkylene group, more preferably a single bond or a linear C₁₋₂ alkylene group, and still more preferably a linear C₁₋₂ alkylene group.

In the formula, R¹³ is each independently a hydrogen atom or a monovalent organic group. Such a monovalent organic group is preferably a C₁₋₂₀ alkyl group.

In a preferred embodiment, R¹³ is each independently a hydrogen atom or a linear C₁₋₆ alkyl group, preferably a hydrogen atom or a linear C₁₋₃ alkyl group, and preferably a hydrogen atom or a methyl group.

In the formula, R¹⁵ is each independently a single bond, an oxygen atom, an alkylene group having 1 to 6 carbon atoms, or an alkyleneoxy group having 1 to 6 carbon atoms.

In one embodiment, R¹⁵ is each independently an oxygen atom, an alkylene group having 1 to 6 carbon atoms, or an alkyleneoxy group having 1 to 6 carbon atoms.

In a preferred embodiment, R¹⁵ is a single bond.

In the formula, t is each independently an integer of 2 or more.

In a preferred embodiment, t is each independently an integer of 2 to 10, and preferably an integer of 2 to 6.

In the formula, R¹⁴ is each independently a hydrogen atom, a halogen atom, or -X¹¹-SiR¹¹ₙ₁R¹²₃₋ₙ₁. Such a halogen atom is preferably an iodine atom, a chlorine atom, or a fluorine atom, and more preferably a fluorine atom. In a preferred embodiment, R¹⁴ is a hydrogen atom.

In one embodiment, the formula (S1) is the following formula (S1-a): 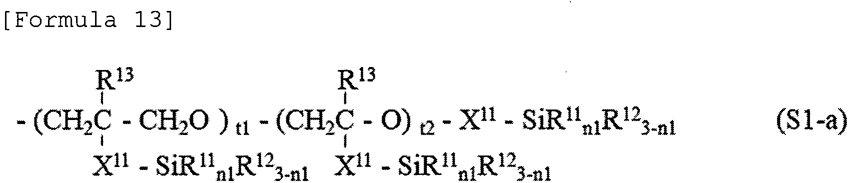 wherein
R¹¹, R¹², R¹³, X¹¹, and n1 have the same definition as described for the formula (S1),
t1 and t2 are each independently an integer of 1 or more, preferably an integer of 1 to 10, and more preferably an integer of 2 to 10, such as an integer of 1 to 5 or an integer of 2 to 5, and
the occurrence order of the respective repeating units enclosed in parentheses provided with t1 and t2 is not limited in the formula.

In a preferred embodiment, the formula (S1) is the following formula (S1-b): 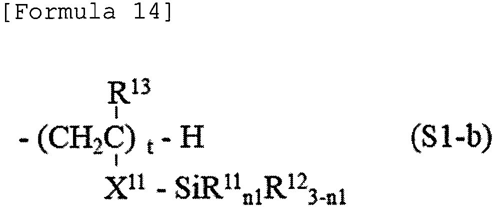 wherein R¹¹, R¹², R¹³, X¹¹, n1, and t have the same definition as described for the formula (S1).

R^{a1} is each independently -Z¹-SiR²¹ₚ₁R²²_{q1}R²³ᵣ₁.

Z¹ is each independently an oxygen atom or a divalent organic group. The structure denoted as Z¹ hereinafter is bonded to (SiR^{2l}ₚ₁R²²_{q1}R²³ᵣ₁) on its right side.

In a preferred embodiment, Z¹ is a divalent organic group.

In a preferred embodiment, Z¹ does not include a group that forms a siloxane bond with the Si atom to which Z¹ is bonded. Preferably, in the formula (S2), (Si-Z¹-Si) does not contain a siloxane bond.

Z¹ is preferably a C₁₋₆ alkylene group, -(CH₂)_{z1}-O-(CH₂)_{z2}-(wherein z1 is an integer of 0 to 6, such as an integer of 1 to 6, and z2 is an integer of 0 to 6, such as an integer of 1 to 6), or -(CH₂)_{z3}-phenylene-(CH₂)_{z4}- (wherein z3 is an integer of 0 to 6, such as an integer of 1 to 6, and z4 is an integer of 0 to 6, such as an integer of 1 to 6). Such a C₁₋₆ alkylene group may be linear or may be branched, and is preferably linear. These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferred embodiment, Z¹ is a C₁₋₆ alkylene group or -(CH₂)_{z3}-phenylene-(CH₂)_{z4}-, and preferably -phenylene-(CH₂)_{z4}-.

In another preferred embodiment, Z¹ is a C₁₋₃ alkylene group. In one embodiment, Z¹ may be -CH₂CH₂CH₂-. In another embodiment, Z¹ may be -CH₂CH₂-.

R²¹ is each independently -Z¹'-SiR²¹'_{p1'}R²²'_{q1'}R²³'_{r1'}.

Z^{1'} is each independently an oxygen atom or a divalent organic group. The structure denoted as Z¹' hereinafter is bonded to (SiR²¹'_{p1'}R²²'_{q1'}R²³'_{r1'}) on its right side.

In a preferred embodiment, Z¹' is a divalent organic group.

In a preferred embodiment, Z¹' does not include a group that forms a siloxane bond with the Si atom to which Z¹' is bonded. Preferably, in the formula (S2), (Si-Z¹'-Si) does not contain a siloxane bond.

Z¹' is preferably a C₁₋₆ alkylene group, -(CH₂)_{z1'}-O-(CH₂)_{z2'}- (wherein z1' is an integer of 0 to 6, such as an integer of 1 to 6, and z2' is an integer of 0 to 6, such as an integer of 1 to 6), or -(CH₂)_{z3'}-phenylene-(CH₂)_{z4'}-(wherein z3' is an integer of 0 to 6, such as an integer of 1 to 6, and z4' is an integer of 0 to 6, such as an integer of 1 to 6). Such a C₁₋₆ alkylene group may be linear or may be branched, and is preferably linear. These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferred embodiment, Z¹' is a C₁₋₆ alkylene group or -(CH₂)_{z3'}-phenylene-(CH₂)_{z4'}-, and preferably -phenylene-(CH₂)_{z4'}-.

In another preferred embodiment, Z¹' is a C₁₋₃ alkylene group. In one embodiment, Z^{1'} may be -CH₂CH₂CH₂-. In another embodiment, Z¹' may be -CH₂CH₂-.

R²¹' is each independently -Z¹"-SiR²²"_{q1"}R²³"_{r1"}.

Z¹" is each independently an oxygen atom or a divalent organic group. The structure denoted as Z¹" hereinafter is bonded to (SiR²²"_{q1"}R²³"_{r1"}) on its right side.

In a preferred embodiment, Z¹" is a divalent organic group.

In a preferred embodiment, Z¹" does not include a group that forms a siloxane bond with the Si atom to which Z¹" is bonded. Preferably, in the formula (S2), (Si-Z¹"-Si) does not contain a siloxane bond.

Z¹" is preferably a C₁₋₆ alkylene group, -(CH₂)_{z1"}-O-(CH₂)_{z2"}- (wherein z1" is an integer of 0 to 6, such as an integer of 1 to 6, and z2" is an integer of 0 to 6, such as an integer of 1 to 6), or -(CH₂)_{z3"}-phenylene-(CH₂)_{z4"}-(wherein z3" is an integer of 0 to 6, such as an integer of 1 to 6, and z4" is an integer of 0 to 6, such as an integer of 1 to 6). Such a C₁₋₆ alkylene group may be linear or may be branched, and is preferably linear. These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferred embodiment, Z¹" is a C₁₋₆ alkylene group or -(CH₂)_{z3"}-phenylene-(CH₂)_{z4"}-, and preferably -phenylene-(CH₂)_{z4"}-. When Z¹" is such a group, light resistance, in particular ultraviolet resistance, can be further enhanced.

In another preferred embodiment, Z¹" is a C₁₋₃ alkylene group. In one embodiment, Z¹" may be -CH₂CH₂CH₂-. In another embodiment, Z¹" may be -CH₂CH₂-.

R²²" is each independently a hydroxyl group or a hydrolyzable group.

R²²" is preferably, each independently, a hydrolyzable group.

R²²" is preferably, each independently, -OR^{h}, -OCOR^{h}, - O-N=CR^{h}₂, -NR^{h}₂, -NHR^{h}, or -NCO (in these formulae, R^{h} represents a substituted or unsubstituted C₁₋₄ alkyl group), and more preferably -OR^{h} (that is, an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferred, and a methyl group or an ethyl group is more preferred. In one embodiment, R^{h} is a methyl group, and in another embodiment, R^{h} is an ethyl group.

R²³" is each independently a monovalent organic group. Such a monovalent organic group is a monovalent organic group excluding the hydrolyzable group.

In R²³", the monovalent organic group is preferably a C₁₋₂₀ alkyl group, more preferably a C₁₋₆ alkyl group, and still more preferably a methyl group.

q1" is each independently an integer of 0 to 3, and r1" is each independently an integer of 0 to 3. The sum of q1" and r1" is 3 in the (SiR²²"_{q1"}R²³"_{r1"}) unit.

q1" is each independently an integer of preferably 1 to 3, more preferably 2 to 3, and still more preferably 3 for each (SiR²²"_{q1"}R²³"_{r1"}) unit.

R²²' is each independently a hydroxyl group or a hydrolyzable group.

R²²' is preferably, each independently, a hydrolyzable group.

R²²' is preferably, each independently, -OR^{h}, -OCOR^{h}, - O-N=CR^{h}₂, -NR^{h}₂, -NHR^{h}, or -NCO (in these formulae, R^{h} represents a substituted or unsubstituted C₁₋₄ alkyl group), and more preferably -OR^{h} (that is, an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferred, and a methyl group or an ethyl group is more preferred. In one embodiment, R^{h} is a methyl group, and in another embodiment, R^{h} is an ethyl group.

R²³' is each independently a monovalent organic group. Such a monovalent organic group is a monovalent organic group excluding the hydrolyzable group.

In R²³', the monovalent organic group is preferably a C₁₋₂₀ alkyl group, more preferably a C₁₋₆ alkyl group, and still more preferably a methyl group.

p1' is each independently an integer 0 to 3, q1' is each independently an integer of 0 to 3, and r1' is each independently an integer of 0 to 3. The sum of p', q1', and r1' is 3 in the (SiR²¹'_{p1'}R²²'_{q1'}R²³'_{r1'}) unit.

In one embodiment, p1' is 0.

In one embodiment, p1' may be each independently an integer of 1 to 3, an integer of 2 to 3, or 3 for each (SiR²¹'_{p1'}R²²'_{q1'}R²³'_{r1'}) unit. In a preferred embodiment, p1' is 3.

In one embodiment, q1' is each independently an integer of 1 to 3, preferably an integer of 2 to 3, and more preferably 3 for each (SiR²¹'_{p1'}R²²'_{q1'}R²³'_{r1'}) unit.

In one embodiment, p1' is 0, and q1' is each independently an integer of 1 to 3, preferably an integer of 2 to 3, and still more preferably 3 for each (SiR²¹'_{p1'}R²²'_{q1'}R²³'_{r1'}) unit.

R²² is each independently a hydroxyl group or a hydrolyzable group.

R²² is preferably, each independently, a hydrolyzable group.

R²² is preferably, each independently, -OR^{h}, -OCOR^{h}, -ON=CR^{h}₂, -NR^{h}₂, -NHR^{h}, or -NCO (in these formulae, R^{h} represents a substituted or unsubstituted C₁₋₄ alkyl group), and more preferably -OR^{h} (that is, an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferred, and a methyl group or an ethyl group is more preferred. In one embodiment, R^{h} is a methyl group, and in another embodiment, R^{h} is an ethyl group.

R²³ is each independently a monovalent organic group. Such a monovalent organic group is a monovalent organic group excluding the hydrolyzable group.

In R²³, the monovalent organic group is preferably a C₁₋₂₀ alkyl group, more preferably a C₁₋₆ alkyl group, and still more preferably a methyl group.

p1 is each independently an integer 0 to 3, q1 is each independently an integer of 0 to 3, and r1 is each independently an integer of 0 to 3. The sum of p1, q1, and r1 is 3 in the (SiR²¹ₚ₁R²²_{q1}R²³ᵣ₁) unit.

In one embodiment, p1 is 0.

In one embodiment, p1 may be each independently an integer of 1 to 3, an integer of 2 to 3, or 3 for each (SiR²¹ₚ₁R²²_{q1}R²³ᵣ₁) unit. In a preferred embodiment, p1 is 3.

In one embodiment, q1 is each independently an integer of 1 to 3, preferably an integer of 2 to 3, and more preferably 3 for each (SiR²¹ₚ₁R²²_{q1}R²³ᵣ₁) unit.

In one embodiment, p1 is 0, and q1 is each independently an integer of 1 to 3, preferably an integer of 2 to 3, and still more preferably 3 for each (S₁R²¹ₚ₁R²²_{q1}R²³ᵣ₁) unit.

In the formula, R^{b1} is each independently a hydroxyl group or a hydrolyzable group.

R^{b1} is preferably, each independently, a hydrolyzable group.

R^{b1} is preferably, each independently, -OR^{h}, -OCOR^{h}, -ON=CR^{h}₂, -NR^{h}₂, -NHR^{h}, or -NCO (in these formulae, R^{h} represents a substituted or unsubstituted C₁₋₄ alkyl group), and more preferably -OR^{h} (that is, an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferred, and a methyl group or an ethyl group is more preferred. In one embodiment, R^{h} is a methyl group, and in another embodiment, R^{h} is an ethyl group.

In the formula, R^{c1} is each independently a monovalent organic group. Such a monovalent organic group is a monovalent organic group excluding the hydrolyzable group.

In R^{c1}, the monovalent organic group is preferably a C₁₋₂₀ alkyl group, more preferably a C₁₋₆ alkyl group, and still more preferably a methyl group.

k1 is each independently an integer 0 to 3, l1 is each independently an integer of 0 to 3, and m1 is each independently an integer of 0 to 3. The sum of k1, l1, and m1 is 3 in the (SiR^{a1}ₖ₁R^{b1}ₗ₁R^{c1}ₘ₁) unit.

In one embodiment, k1 is each independently an integer of 1 to 3, preferably 2 or 3, and more preferably 3 for each (SiR^{a1}ₖ₁R^{b1}ₗ₁R^{c1}ₘ₁) unit. In a preferred embodiment, k1 is 3.

In the formula (S2), at least two Si atoms to which a hydroxyl group or a hydrolyzable group is bonded are present.

In a preferred embodiment, in the end moiety of the formula (S2), at least two Si atoms to which a hydroxyl group or a hydrolyzable group is bonded are present.

In a preferred embodiment, the group represented by the formula (S2) has any one of -Z¹-SiR²²_{q1}R²³ᵣ₁ (wherein q1 is an integer of 1 to 3, preferably 2 or 3, and more preferably 3, and r1 is an integer of 0 to 2), -Z¹'-SiR²²'_{q1'}R²³'_{r1'} (wherein q1' is an integer of 1 to 3, preferably 2 or 3, and more preferably 3, and r1' is an integer of 0 to 2), or -Z¹"-SiR²²"_{q1"}R²³"_{r1"} (wherein q1" is an integer of 1 to 3, preferably 2 or 3, and more preferably 3, and r1" is an integer of 0 to 2). Z¹, Z¹', Z¹", R²², R²³, R²²', R²³', R²²", and R²³" have the same definition as described above.

In a preferred embodiment, when R²¹' is present in the formula (S2), q1" is an integer of 1 to 3, preferably 2 or 3, and more preferably 3 in at least one, preferably all of R²¹' groups.

In a preferred embodiment, when R²¹ is present in the formula (S2), p1' is 0, and q1' is an integer of 1 to 3, preferably 2 or 3, and more preferably 3 in at least one, preferably all of R²¹ groups.

In a preferred embodiment, when R^{a1} is present in the formula (S2), p1 is 0, and q1 is an integer of 1 to 3, preferably 2 or 3, and more preferably 3 in at least one, preferably all of R^{a1} groups.

In a preferred embodiment, in the formula (S2), k1 is 2 or 3, preferably 3, p1 is 0, and q1 is 2 or 3, preferably 3.

R^{d1} is each independently -Z²-CR³¹ₚ₂R³²_{q2}R³³ᵣ₂.

Z² is each independently a single bond, an oxygen atom, or a divalent organic group. The structure denoted as Z² hereinafter is bonded to (CR³¹ₚ₂R³²_{q2}R³³ᵣ₂) on its right side.

In a preferred embodiment, Z² is a divalent organic group.

In a preferred embodiment, Z² does not contain a siloxane bond.

Z² is preferably a C₁₋₆ alkylene group, -(CH₂)_{z5}-O-(CH₂)_{z6}-(wherein z5 is an integer of 0 to 6, such as an integer of 1 to 6, and z6 is an integer of 0 to 6, such as an integer of 1 to 6), or -(CH₂)_{z7}-phenylene-(CH₂)_{z8}- (wherein z7 is an integer of 0 to 6, such as an integer of 1 to 6, and z8 is an integer of 0 to 6, such as an integer of 1 to 6). Such a C₁₋₆ alkylene group may be linear or may be branched, and is preferably linear. These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferred embodiment, Z² is a C₁₋₆ alkylene group or -(CH₂)_{z7}-phenylene-(CH₂)_{z8}-, and preferably -phenylene-(CH₂)_{z8}-. When Z² is such a group, light resistance, in particular ultraviolet resistance, can be further enhanced.

In another preferred embodiment, Z² is a C₁₋₃ alkylene group. In one embodiment, Z² may be -CH₂CH₂CH₂-. In another embodiment, Z² may be -CH₂CH₂-.

R³¹ is each independently -Z²'-CR³²'_{q2'}R³³'_{r2'}.

Z²' is each independently a single bond, an oxygen atom, or a divalent organic group. The structure denoted as Z²' hereinafter is bonded to (CR³²'_{q2'}R³³'_{r2'}) on its right side.

In a preferred embodiment, Z²' does not contain a siloxane bond.

Z²' is preferably a C₁₋₆ alkylene group, -(CH₂)_{z5'}-O-(CH₂)_{z6'}- (wherein z5' is an integer of 0 to 6, such as an integer of 1 to 6, and z6' is an integer of 0 to 6, such as an integer of 1 to 6), or -(CH₂)_{z7'}-phenylene-(CH₂)_{z8'}-(wherein z7' is an integer of 0 to 6, such as an integer of 1 to 6, and z8' is an integer of 0 to 6, such as an integer of 1 to 6). Such a C₁₋₆ alkylene group may be linear or may be branched, and is preferably linear. These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferred embodiment, Z²' is a C₁₋₆ alkylene group or -(CH₂)_{z7'}-phenylene-(CH₂)_{z8'}-, and preferably -phenylene-(CH₂)_{z8'}-. When Z²' is such a group, light resistance, in particular ultraviolet resistance, can be further enhanced.

In another preferred embodiment, Z²' is a C₁₋₃ alkylene group. In one embodiment, Z²' may be -CH₂CH₂CH₂-. In another embodiment, Z²' may be -CH₂CH₂-.

R³²' is each independently -Z³-SiR³⁴ₙ₂R³⁵₃₋ₙ₂.

Z³ is each independently a single bond, an oxygen atom, or a divalent organic group. The structure denoted as Z³ hereinafter is bonded to (SiR³⁴ₙ₂R³⁵₃₋ₙ₂) on its right side.

In one embodiment, Z³ is an oxygen atom.

In one embodiment, Z³ is a divalent organic group.

In a preferred embodiment, Z³ does not contain a siloxane bond.

Z³ is preferably a C₁₋₆ alkylene group, -(CH₂)_{z5"}-O-(CH₂)_{z6"}- (wherein z5" is an integer of 0 to 6, such as an integer of 1 to 6, and z6" is an integer of 0 to 6, such as an integer of 1 to 6), or -(CH₂)_{z7"}-phenylene-(CH₂)_{z8"}-(wherein z7" is an integer of 0 to 6, such as an integer of 1 to 6, and z8" is an integer of 0 to 6, such as an integer of 1 to 6). Such a C₁₋₆ alkylene group may be linear or may be branched, and is preferably linear. These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferred embodiment, Z³ is a C₁₋₆ alkylene group or -(CH₂)_{z7"}-phenylene- (CH₂)_{z8"}-, preferably -phenylene-(CH₂)_{z8"}-. When Z³ is such a group, light resistance, in particular ultraviolet resistance, can be further enhanced.

In another preferred embodiment, Z³ is a C₁₋₃ alkylene group. In one embodiment, Z³ may be -CH₂CH₂CH₂-. In another embodiment, Z³ may be -CH₂CH₂-.

R³⁴ is each independently a hydroxyl group or a hydrolyzable group.

R³⁴ is preferably, each independently, a hydrolyzable group.

R³⁴ is preferably, each independently, -OR^{h}, -OCOR^{h}, -ON=CR^{h}₂, -NR^{h}₂, -NHR^{h}, -NCO, or a halogen (in these formulae, R^{h} represents a substituted or unsubstituted C₁₋₄ alkyl group), and more preferably -OR^{h} (that is, an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferred, and a methyl group or an ethyl group is more preferred. In one embodiment, R^{h} is a methyl group, and in another embodiment, R^{h} is an ethyl group.

R³⁵ is each independently a monovalent organic group. Such a monovalent organic group is a monovalent organic group excluding the hydrolyzable group.

In R³⁵, the monovalent organic group is preferably a C₁₋₂₀ alkyl group, more preferably a C₁₋₆ alkyl group, and still more preferably a methyl group.

n2 is each independently an integer of 0 to 3 for each (SiR³⁴ₙ₂R³⁵₃₋ₙ₂) unit. However, in the end moiety of the formula (S3), at least two (SiR³⁴ₙ₂R³⁵₃₋ₙ₂) units with n2 of 1 to 3 are present. In other words, in the end moiety of the formula (S3), at least two Si atoms to which a hydroxyl group or a hydrolyzable group is bonded are present.

n2 is each independently an integer of preferably 1 to 3, more preferably 2 to 3, and still more preferably 3 for each (SiR³⁴ₙ₂R³⁵₃₋ₙ₂) unit.

R^{33'} is each independently a hydrogen atom, a hydroxyl group, or a monovalent organic group. Such a monovalent organic group is a monovalent organic group excluding the hydrolyzable group.

In R^{33'}, the monovalent organic group is preferably a C₁₋₂₀ alkyl group or -(CₛH₂ₛ)ₜ₁-(O-CₛH₂ₛ)ₜ₂ (wherein s is an integer of 1 to 6, preferably an integer of 2 to 4, t1 is 1 or 0, preferably 0, and t2 is an integer of 1 to 20, preferably an integer of 2 to 10, and more preferably an integer of 2 to 6), more preferably a C₁₋₂₀ alkyl group, still more preferably a C₁₋₆ alkyl group, and particularly preferably a methyl group.

In one embodiment, R^{33'} is a hydroxyl group.

In another embodiment, R^{33'} is a monovalent organic group, preferably a C₁₋₂₀ alkyl group, and more preferably a C₁₋₆ alkyl group.

q2' is each independently an integer of 0 to 3, and r2' is each independently an integer of 0 to 3. The sum of q2' and r2' is 3 in the (CR^{32'}_{q2'}R^{33'}_{r2'}) unit.

q2' is each independently an integer of preferably 1 to 3, more preferably 2 to 3, and still more preferably 3 for each (CR^{32'}_{q2'}R^{33'}_{r2'}) unit.

R³² is each independently -Z³-SiR³⁴ₙ₂R³⁵₃₋ₙ₂. Such -Z³-SiR³⁴ₙ₂R³⁵₃₋ₙ₂ has the same definition as described for R^{32'}.

R³³ is each independently a hydrogen atom, a hydroxyl group, or a monovalent organic group. Such a monovalent organic group is a monovalent organic group excluding the hydrolyzable group.

In R³³, the monovalent organic group is preferably a C₁₋₂₀ alkyl group or - (CₛH₂ₛ)ₜ₁- (O-CₛH₂ₛ)ₜ₂ (wherein s is an integer of 1 to 6, preferably an integer of 2 to 4, t1 is 1 or 0, preferably 0, and t2 is an integer of 1 to 20, preferably an integer of 2 to 10, and more preferably an integer of 2 to 6), more preferably a C₁₋₂₀ alkyl group, still more preferably a C₁₋₆ alkyl group, and particularly preferably a methyl group.

In one embodiment, R³³ is a hydroxyl group.

In another embodiment, R³³ is a monovalent organic group, preferably a C₁₋₂₀ alkyl group, and more preferably a C₁₋₆ alkyl group.

p2 is each independently an integer of 0 to 3, q2 is each independently an integer of 0 to 3, and r2 is each independently an integer of 0 to 3. The sum of p2, q2, and r2 is 3 in the (CR³¹ₚ₂R³²_{q2}R³³ᵣ₂) unit.

In one embodiment, p2 is 0.

In one embodiment, p2 may be each independently an integer of 1 to 3, an integer of 2 to 3, or 3 for each (CR³¹ₚ₂R³²_{q2}R³³ᵣ₂) unit. In a preferred embodiment, p2 is 3.

In one embodiment, q2 is each independently an integer of 1 to 3, preferably an integer of 2 to 3, and more preferably 3 for each (CR³¹ₚ₂R³²_{q2}R³³ᵣ₂) unit.

In one embodiment, p2 is 0, and q2 is each independently an integer of 1 to 3, preferably an integer of 2 to 3, and still more preferably 3 for each (CR³¹ₚ₂R³²_{q2}R³³ᵣ₂) unit.

R^{e1} is each independently -Z³-SiR³⁴ₙ₂R³⁵₃₋ₙ₂. Such -Z³-SiR³⁴ₙ₂R³⁵₃₋ₙ₂ has the same definition as described for R^{32'}.

R^{f1} is each independently a hydrogen atom, a hydroxyl group, or a monovalent organic group. Such a monovalent organic group is a monovalent organic group excluding the hydrolyzable group.

In R^{f1}, the monovalent organic group is preferably a C₁₋₂₀ alkyl group or - (CₛH₂ₛ)ₜ₁- (O-CₛH₂ₛ)ₜ₂ (wherein s is an integer of 1 to 6, preferably an integer of 2 to 4, t1 is 1 or 0, preferably 0, and t2 is an integer of 1 to 20, preferably an integer of 2 to 10, and more preferably an integer of 2 to 6), more preferably a C₁₋₂₀ alkyl group, still more preferably a C₁₋₆ alkyl group, and particularly preferably a methyl group.

In one embodiment, R^{f1} is a hydroxyl group.

In another embodiment, R^{f1} is a monovalent organic group, preferably a C₁₋₂₀ alkyl group, and more preferably a C₁₋₆ alkyl group.

k2 is each independently an integer 0 to 3, l2 is each independently an integer of 0 to 3, and m2 is each independently an integer of 0 to 3. The sum of k2, l2, and m2 is 3 in the (CR^{d1}ₖ₂R^{e1}ₗ₂R^{f1}ₘ₂) unit.

In one embodiment, 2 or more, such as 2 to 27, preferably 2 to 9, more preferably 2 to 6, still more preferably 2 to 3, and particularly preferably 3 (SiR³⁴ₙ₂R³⁵₃₋ₙ₂) units with n2 of 1 to 3, preferably 2 or 3, and more preferably 3 are present in each end moiety of the formula (S3).

In a preferred embodiment, when R^{32'} is present in the formula (S3), n2 is an integer of 1 to 3, preferably 2 or 3, and more preferably 3 in at least one, preferably all of R^{32'} groups.

In a preferred embodiment, when R³² is present in the formula (S3), n2 is an integer of 1 to 3, preferably 2 or 3, and more preferably 3 in at least one, preferably all of R³² groups.

In a preferred embodiment, when R^{e1} is present in the formula (S3), n2 is an integer of 1 to 3, preferably 2 or 3, and more preferably 3 in at least one, preferably all of R^{a1} groups.

In a preferred embodiment, in the formula (S3), k2 is 0, l2 is 2 or 3, preferably 3, and n2 is 2 or 3, preferably 3.

R^{g1} and R^{h1} are each independently -Z⁴-SiR¹¹ₙ₁R¹²₃₋ₙ₁, -Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂. Here, R¹¹, R¹², R^{a1}, R^{b2}, R^{c1}, R^{d1}, R^{e1}, R^{f1}, n1, k1, l1, m1, k2, l2, and m2 have the same definition as described above.

In a preferred embodiment, R^{g1} and R^{h1} are each independently -Z⁴-SiR¹¹ₙ₁R¹²₃₋ₙ₁.

Z⁴ is each independently a single bond, an oxygen atom, or a divalent organic group. The structure denoted as Z⁴ hereinafter is bonded to (SiR¹¹ₙ₁R¹²₃₋ₙ₁) on its right side.

In one embodiment, Z⁴ is an oxygen atom.

In one embodiment, Z⁴ is a divalent organic group.

In a preferred embodiment, Z⁴ does not contain a siloxane bond.

Z⁴ is preferably a C₁₋₆ alkylene group, - (CH₂)_{z5"}-O-(CH₂)_{z6"}- (wherein z5" is an integer of 0 to 6, such as an integer of 1 to 6, and z6" is an integer of 0 to 6, such as an integer of 1 to 6), or - (CH₂)_{z7"}-phenylene- (CH₂) _{z8"}-(wherein z7" is an integer of 0 to 6, such as an integer of 1 to 6, and z8" is an integer of 0 to 6, such as an integer of 1 to 6). Such a C₁₋₆ alkylene group may be linear or may be branched, and is preferably linear. These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferred embodiment, Z⁴ is a C₁₋₆ alkylene group or - (CH₂)_{z7"}-phenylene-(CH₂)_{z8"}-, and preferably -phenylene-(CH₂) _{z8"}-. When Z³ is such a group, light resistance, in particular ultraviolet resistance, can be further enhanced.

In another preferred embodiment, Z⁴ is a C₁₋₃ alkylene group. In one embodiment, Z⁴ may be -CH₂CH₂CH₂-. In another embodiment, Z⁴ may be -CH₂CH₂-.

In one embodiment, the formulae (S1), (S2), (S3), and (S4) do not contain a siloxane bond.

In one embodiment, R^{Si} is a group represented by the formula (S2), (S3), or (S4).

In one embodiment, R^{Si} is a group represented by the formula (S3), (S4), or (S5).

In one embodiment, R^{Si} is a group represented by the formula (S1). In a preferred embodiment, n1 is 1 to 3, preferably 2 to 3, and still more preferably 3.

In one embodiment, R^{Si} is a group represented by the formula (S2). In a preferred embodiment, the formula (S2) is -SiR^{a1}₂R^{c1} or -SiR^{a1}₃, R^{a1} is -Z¹-SiR²²_{q1}R²³ᵣ₁, Z¹ is a C₁₋₆ alkylene group, - (CH₂)_{z1}-O-(CH₂)_{z2}- (wherein z1 is an integer of 0 to 6, such as an integer of 1 to 6, and z2 is an integer of 0 to 6, such as an integer of 1 to 6), or - (CH₂) _{z3}-phenylene-(CH₂)_{z4}- (wherein z3 is an integer of 0 to 6, such as an integer of 1 to 6, and z4 is an integer of 0 to 6, such as an integer of 1 to 6), preferably a C₁₋₆ alkylene group, and q1 is 1 to 3, preferably 2 to 3, and still more preferably 3.

In one embodiment, R^{Si} is a group represented by the formula (S3). In a preferred embodiment, the formula (S3) is -CR^{e1}₂R^{f1} or -CR^{e1}₃, R^{e1} is -Z³-SiR³⁴ₙ₂R³⁵₃₋ₙ₂, Z³ is a C₁₋₆ alkylene group, -(CH₂)_{z5"}-O-(CH₂)_{z6"}- (wherein z5" is an integer of 0 to 6, such as an integer of 1 to 6, and z6" is an integer of 0 to 6, such as an integer of 1 to 6), or - (CH₂)_{z7"}-phenylene-(CH₂)_{z8"}- (wherein z7" is an integer of 0 to 6, such as an integer of 1 to 6, and z8" is an integer of 0 to 6, such as an integer of 1 to 6), preferably a C₁₋₆ alkylene group, and n2 is 1 to 3, preferably 2 to 3, and still more preferably 3.

In one embodiment, R^{Si} is a group represented by the formula (S4). In a preferred embodiment, R^{g1} and R^{h1} are - Z⁴-SiR¹¹ₙ₁R¹²₃₋ₙ₁, Z⁴ is a C₁₋₆ alkylene group, - (CH₂)_{z5"}-O-(CH₂)_{z6"}- (wherein z5" is an integer of 0 to 6, such as an integer of 1 to 6, and z6" is an integer of 0 to 6, such as an integer of 1 to 6), or - (CH₂)_{z7"}-phenylene-(CH₂)_{z8"}-(wherein z7" is an integer of 0 to 6, such as an integer of 1 to 6, and z8" is an integer of 0 to 6, such as an integer of 1 to 6), preferably a C₁₋₆ alkylene group, and n1 is 1 to 3, preferably 2 to 3, and still more preferably 3.

The compound represented by the formula (1A) can be obtained by, for example, allowing a compound represented by the following formula (1Aa):

R^{A}-X^{Aa}-Rⁱ

wherein
R^{A} is a linear alkyl group having 7 or more carbon atoms,
X^{Aa} is a divalent organic group,
Rⁱ is -R⁶¹, -CONR⁶¹₂, -SiR⁶¹₃, or -CR⁶¹₃, and
R⁶¹ is a C₂₋₆ alkenyl group having a double bond at an end,
to react with a compound represented by the following formula (1Ab) :

HSiR63ₘR⁶⁴₃₋ₘ (1Ab)

wherein
R⁶³ is each independently a hydroxyl group or a hydrolyzable group,
R⁶⁴ is each independently a monovalent organic group, and
m is 1 to 3.

Alternatively, it can be obtained by allowing the compound represented by the formula (1Aa) to react with a compound represented by the following formula (1Ac):

HSiClₘR⁶⁴₍₃₋ₘ₎ Formula (1Ac)

wherein
R⁶⁴ is each independently a monovalent organic group, and
m is 1 to 3,
and then to react with an alcohol (such as methanol, ethanol, or isopropanol).

### (Compound represented by formula (1B))

Formula (1B):
[Formula 15]

R^{S}-X^{B}-R^{Si} (1B)

wherein
R^{S} is a monovalent group containing one or more Si atoms to which a hydroxyl group or a hydrolyzable group is not directly bonded,
X^{B} is a divalent organic group containing an alkylene group having 7 or more carbon atoms, and
R^{Si} is a monovalent group containing a Si atom to which a hydroxyl group or a hydrolyzable group is bonded.

R^{S} is a monovalent group containing one or more Si atoms to which a hydroxyl group or a hydrolyzable group is not directly bonded.

The monovalent group containing one or more Si atoms to which a hydroxyl group or a hydrolyzable group is not directly bonded may contain a Si atom to which a hydroxyl group or a hydrolyzable group is directly bonded.

In one embodiment, the monovalent group containing one or more Si atoms to which a hydroxyl group or a hydrolyzable group is not directly bonded does not contain a Si atom to which a hydroxyl group or a hydrolyzable group is directly bonded.

In another embodiment, the monovalent group containing one or more Si atoms to which a hydroxyl group or a hydrolyzable group is not directly bonded contains one or more Si atoms to which a hydroxyl group or a hydrolyzable group is directly bonded.

In one embodiment, R^{S} is a group represented by the following group:

R⁴³- (SiR⁴⁴₂O)ₙ-SiR⁴⁴₂-

wherein
R⁴³ is a C₁₋₁₂ alkyl group or a group represented by A group:
[Formula 16]

R⁵¹ₙₐR⁵²₃₋ₙₐSi-(O)_{z}- (A)

wherein
R⁵¹ is each independently a group represented by -(R⁵⁴-OSiR⁵³2)ₘₐ-R⁵³,
   R⁵⁴ is each independently an oxygen atom or a C₁₋₆ alkylene group,
   R⁵³ is each independently a hydrocarbon group or R^{1'},
      R^{51'} has the same definition as R⁵¹,
   ma is each independently an integer of 1 to 5, provided that the number of R^{51'} in R⁵¹ is 20 or less,
R⁵² is each independently or a hydrocarbon group,
na is 1 to 3, and
z is 0 or 1,
R⁴⁴ is each independently a C₁₋₁₂ alkyl group, and
n is 0 to 1,500.

The C₁₋₁₂ alkyl group in R⁴³ may be linear or may be branched. In one embodiment, the C₁₋₁₂ alkyl group is linear. In another embodiment, the C₁₋₁₂ alkyl group is branched. The C₁₋₁₂ alkyl group is preferably a C₁₋₆ alkyl group, more preferably a C₁₋₃ alkyl group, still more preferably a methyl group or an ethyl group, and particularly preferably a methyl group.

R⁵¹ in the A group is each independently a group represented by -(R⁵⁴-SiR⁵³₂)ₘₐ-R⁵³

R⁵⁴ is each independently an oxygen atom or a C₁₋₆ alkylene group.

The C₁₋₆ alkylene group in R⁵⁴ may be linear or may be branched. The C₁₋₆ alkylene group may be preferably a C₁₋₄ alkylene group, and more preferably a C₂₋₄ alkylene group.

In one embodiment, R⁵⁴ is O.

In one embodiment, part of R⁵⁴ is O and the other R⁵⁴ is a C₁₋₆ alkylene group.

R⁵³ is each independently a hydrocarbon group or R^{1'}.

The hydrocarbon group in R⁵³ may be preferably an alkyl group or an aryl group.

The alkyl group may be linear or may be branched. The alkyl group is preferably an alkyl group having 1 to 6 carbon atoms, and more preferably an alkyl group having 1 to 4 carbon atoms. The alkyl group is particularly preferably a methyl group, an ethyl group, a n-propyl group, an iso-propyl group, or a tert-butyl group.

The aryl group may be monocyclic or may be polycyclic. The aryl is preferably an aryl group having 6 to 20 carbon atoms, and more preferably an aryl group having 6 to 10 carbon atoms. The aryl group is particularly preferably a phenyl group.

R⁵³ is preferably an alkyl group, and more preferably an alkyl group having 1 to 4 carbon atoms.

R^{51'} has the same definition as R⁵¹. That is, R^{51'} is - (R⁵⁴-SiR⁵³₂)ₘₐ-R⁵³. However, the number of R^{51'} in R⁵¹ is 20 or less, preferably 10 or less, more preferably 6 or less, and still more preferably 3 or less.

In one embodiment, R⁵³ is each independently a hydrocarbon group or R^{1'}.

In a preferred embodiment, R⁵³ is each independently a hydrocarbon group.

In one embodiment, R⁵³ is -(R^{54'}-SiR^{53'}₂)_{ma'}-R^{53'}
wherein
R^{53'} is each independently a hydrocarbon group or - (R⁵⁴-SiR⁵³₂)ₘₐ-R⁵³,
at least one R^{53'} is -(R⁵⁴-SiR⁵³₂)ₘₐ-R⁵³,
   R⁵³ is each independently or a hydrocarbon group,
   R⁵⁴ is each independently an oxygen atom or a C₁₋₆ alkylene group,
   ma is each independently an integer of 1 to 5,
R^{54'} is each independently an oxygen atom or a C₁₋₆ alkylene group, and
ma' is each independently an integer of 1 to 5.

In another embodiment, in one embodiment, R⁵³ is -(R^{54'}-SiR^{53'}₂)_{ma'}-R^{53'}
wherein
R^{53'} is each independently a hydrocarbon group or - (R^{54"}-SiR^{54"}₂)_{ma"}-R^{53"},
at least one R^{53'} is - (R^{54"}-SiR^{53"}₂)_{ma"}-R^{53"},
   R^{53"} is each independently a hydrocarbon group or -(R⁵⁴-SiR⁵³₂)ₘₐ-R⁵³,
   at least one R^{53"} is - (R⁵⁴-SiR⁵³₂)ₘₐ-R⁵³
      R⁵³ is each independently or a hydrocarbon group,
      R⁵⁴ is each independently an oxygen atom or a C₁₋₆ alkylene group,
      ma is each independently an integer of 1 to 5,
   R^{54"} is each independently an oxygen atom or a C₁₋₆ alkylene group,
   ma" is each independently an integer of 1 to 5,
R^{54'} is each independently an oxygen atom or a C₁₋₆ alkylene group, and
ma' is each independently an integer of 1 to 5.

ma is each independently an integer of 1 to 5, and preferably 1 or 2.

R⁵² is each independently a hydrocarbon group.

The hydrocarbon group in R⁵² may be preferably an alkyl group or an aryl group.

The alkyl group may be linear or may be branched. The alkyl group is preferably an alkyl group having 1 to 6 carbon atoms, and more preferably an alkyl group having 1 to 4 carbon atoms. The alkyl group is particularly preferably a methyl group, an ethyl group, a n-propyl group, an iso-propyl group, or a tert-butyl group.

The aryl group may be monocyclic or may be polycyclic. The aryl is preferably an aryl group having 6 to 20 carbon atoms, and more preferably an aryl group having 6 to 10 carbon atoms. The aryl group is particularly preferably a phenyl group.

R⁵² is preferably an alkyl group, and more preferably an alkyl group having 1 to 4 carbon atoms.

na is 1 to 3. In one embodiment, na is 2. In another embodiment, na is 3. When R^{51'} is present, na is independently selected for each (R⁵⁴SiR⁵³₂)ₘₐ.

z is 0 or 1. In one embodiment, z is 0. In another embodiment, z is 1.

In R⁵¹, 2 or more, preferably 3 or more, more preferably 4 or more, and still more preferably 6 or more, such as 8 or more, 9 or more, 10 or more, or 12 or more, Si-O bonds are present.

In a preferred embodiment, in the A group,
R⁵¹ is each independently a group represented by -(R⁵⁴-SiR⁵³₂)ₘₐ-R⁵³,
   R⁵⁴ is each independently an oxygen atom or a C₁₋₆ alkylene group,
   R⁵³ is each independently a hydrocarbon group (preferably an alkyl group having 1 to 4 carbon atoms) or R^{51'}, and preferably a hydrocarbon group (preferably an alkyl group having 1 to 4 carbon atoms),
      R^{51'} has the same definition as R⁵¹,
   ma is 1 or 2,
R⁵² is each independently a hydrocarbon group, and preferably an alkyl group having 1 to 4 carbon atoms, and
na is 1 to 3.

Examples of the A group are not limited, and include the following groups:

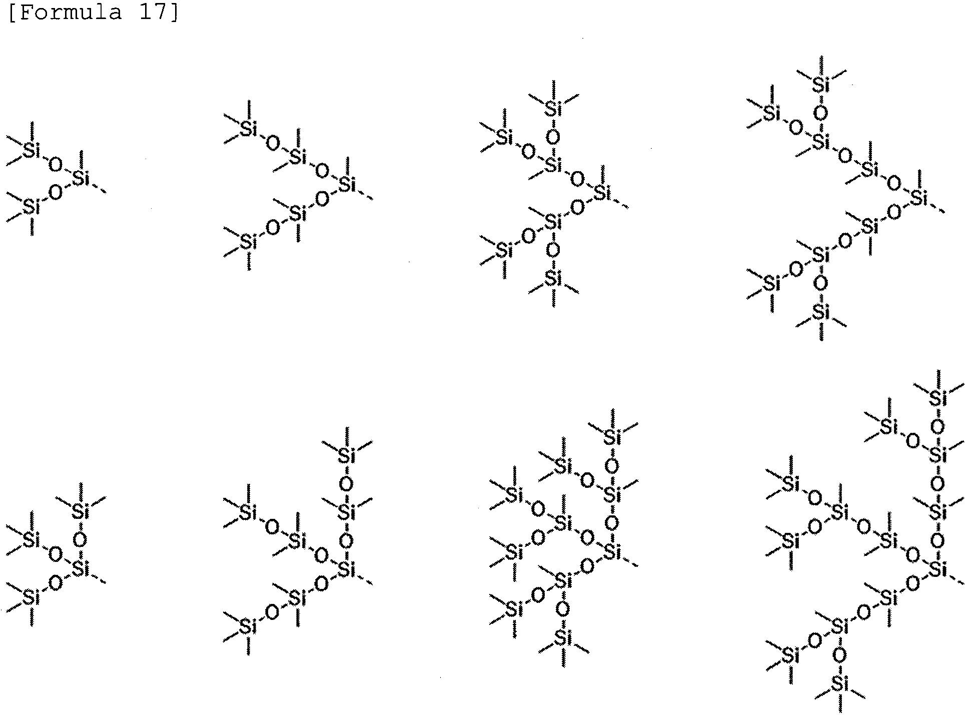

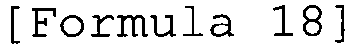

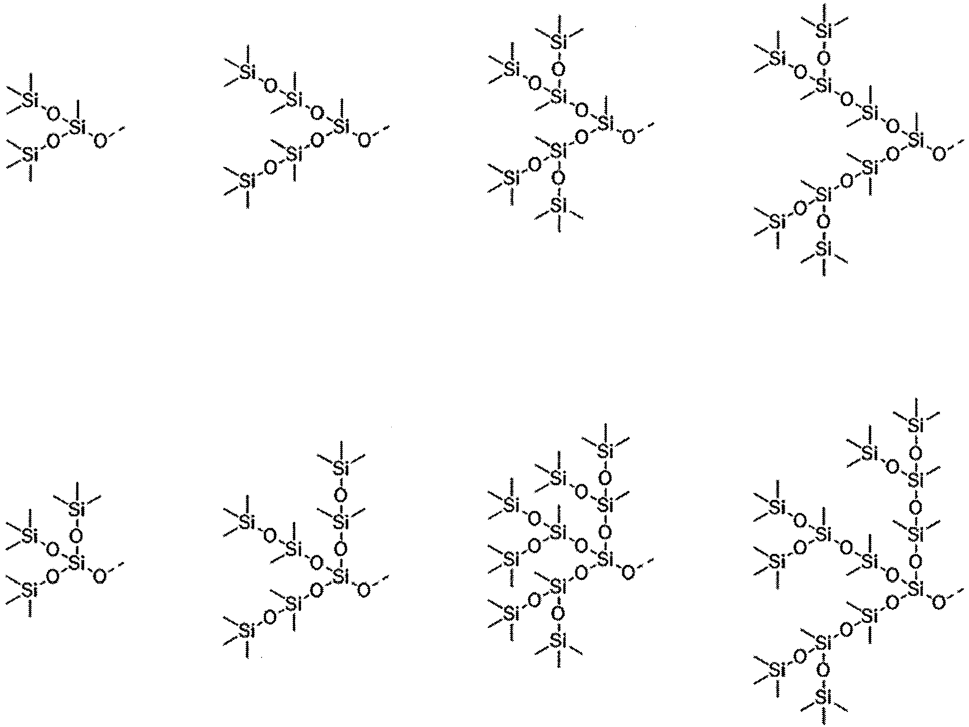

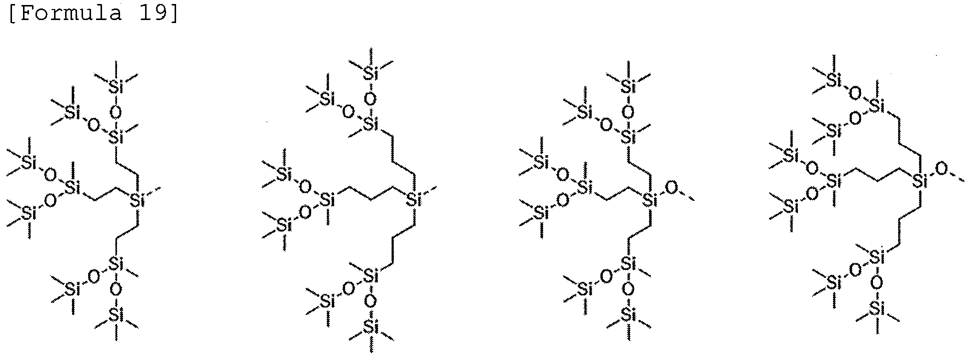

The C₁₋₁₂ alkyl group in R⁴⁴ may be linear or may be branched. In one embodiment, the C₁₋₁₂ alkyl group is linear. In another embodiment, the C₁₋₁₂ alkyl group is branched. The C₁₋₁₂ alkyl group is preferably a C₁₋₆ alkyl group, more preferably a C₁₋₃ alkyl group, still more preferably a methyl group or an ethyl group, and particularly preferably a methyl group.

When utilized as the component A, n may be preferably 0 to 1,500, more preferably 0 to 500, and still more preferably 0 to 10. For example, n may be preferably 1 to 1,500, more preferably 1 to 500, and still more preferably 1 to 10. Even more preferably, n is 0, 1, or 2.

In a preferred embodiment, R⁴³ is methyl, R⁴⁴ is methyl, and n is 1 or 2.

In one embodiment, R^{S} may be a monovalent organic group that contains one or more Si atoms to which a hydroxyl group or a hydrolyzable group is not directly bonded and that does not contain a siloxane bond.

In one embodiment, R^{S} is a group represented by the following formula:

-SiR⁴⁵₃

wherein
R⁴⁵ is each independently a C₁₋₆ alkyl group or -SiR⁴⁶₃, and
R⁴⁶ is each independently a C₁₋₆ alkyl group.

The C₁₋₆ alkyl group in R⁴⁵ may be linear or may be branched. In one embodiment, the C₁₋₆ alkyl group is linear. In another embodiment, the C₁₋₆ alkyl group is branched. The C₁₋₆ alkyl group is preferably a C₁₋₄ alkyl group.

The C₁₋₁₂ alkyl group in R⁴⁶ may be linear or may be branched. In one embodiment, the C₁₋₁₂ alkyl group is linear. In another embodiment, the C₁₋₁₂ alkyl group is branched. The C₁₋₁₂ alkyl group is preferably a C₁₋₆ alkyl group, more preferably a C₁₋₃ alkyl group, still more preferably a methyl group or an ethyl group, and particularly preferably a methyl group.

SiR⁴⁵₃ may be preferably -Si(CH₃)₃, -Si(CH₂CH₃)₃, - Si (CH(CH₃)₂)₃, -Si(CH₃)(CH₃)(C(CH₃)₃)), -Si(Si(CH₃)₃, or - Si (Si(CH₂CH₃)₃.

In one embodiment, R^{S} is the A group.

X^{B} is a divalent organic group containing an alkylene group having 11 or more carbon atoms.

X^{B} is a divalent organic group further containing, in addition to an alkylene group having 11 or more carbon atoms, -CO-, -COO-, -NR⁴¹-, -CONR⁴¹-, -OCONR⁴¹-, -NR⁴¹-CO-NR⁴¹-, -O-, -S-, -O-(CH₂)ₓ-CONR⁴¹-, or -O-(CH₂)ₓ-CO-, R⁴¹ is a hydrogen atom or a C₁₋₆ alkyl group, and x is an integer of 1 to 20.

X^{B} is preferably a group represented by the following formula:

-X^{10B}-X^{11B}-X^{12B}-

wherein
X^{10B} is an alkylene group having 11 or more carbon atoms,
X^{11B} is a single bond, -CO-, -COO-, -NR⁴¹-, -CONR⁴¹-, - OCONR⁴¹-, -NR⁴¹-CO-NR⁴¹-, -O-, -S-, -O-(CH2)ₓ-CONR⁴¹-, or -O-(CH₂)ₓ-CO-,
R⁴¹ is a hydrogen atom or a C₁₋₆ alkyl group,
x is an integer of 1 to 20, and
X^{12B} is a single bond or a C₁₋₆ alkylene group.

The number of carbon atoms in the alkylene group in X^{B} and X^{10B} may be preferably 12 or more, more preferably 16 or more, still more preferably 18 or more, and even more preferably 22 or more. The number of carbon atoms in the alkylene group in X^{B} and X^{10B} may be preferably 60 or less, more preferably 40 or less, still more preferably 30 or less, and even more preferably 24 or less. The number of carbon atoms in the alkylene group in X^{B} and X^{10B} may be preferably 11 to 60, more preferably 12 to 40, and still more preferably 18 to 30.

The alkylene group in X^{B} and X^{10B} may be linear or may be branched. The alkylene group is preferably linear.

X^{10B} is preferably -CO-, -COO-, -NR⁴¹-, -CONR⁴¹-, - OCONR⁴¹-, -NR⁴¹-CO-NR⁴¹-, -O-, -S-, -O-(CH₂)ₓ-CONR⁴¹-, or - O(CH₂)ₓ-CO-, more preferably -CO-, -CONR⁴¹-, or -OCONR⁴¹-, and more preferably -CONR⁴¹-. R⁴¹ is preferably a hydrogen atom, and x is an integer of 1 to 20.

In one embodiment, X^{12B} is a single bond.

In another embodiment, X^{12B} is a C₁₋₆ alkylene group.

The C₁₋₆ alkylene group in X^{12B} may be linear or may be branched. In one embodiment, the C₁₋₆ alkylene group is linear. In another embodiment, the C₁₋₆ alkylene group is branched. The C₁₋₆ alkylene group is preferably a C₁₋₄ alkylene group, and more preferably a C₁₋₃ alkylene group.

In one embodiment, the number of carbon atoms in the alkylene group in X^{B} is larger than the number of Si atoms in R^{S}. By making the number of carbon atoms in the alkylene group in X^{B} larger than the number of Si atoms in R^{S}, the friction durability of the resulting surface-treating layer can be made higher.

In a preferred embodiment, the number of carbon atoms in the alkylene group in X^{B} may be 2.5 or more times, preferably 3.0 or more times, and still more preferably 3.5 or more times, the number of Si atoms in R^{S}. The number of carbon atoms in the alkylene group in X^{B} may also be preferably 50 or less times, such as 30 or less times, 20 or less times, or 10 or less times, the number of Si atoms in R^{S}.

In one embodiment, the number of carbon atoms in the alkylene group in X^{B} is larger than the number of atoms in the main chain in R^{S}. By making the number of carbon atoms in the alkylene group in X^{B} larger than the number of atoms in the main chain in R^{S}, the friction durability of the resulting surface-treating layer can be made higher.

In a preferred embodiment, the number of carbon atoms in the alkylene group in X^{B} may be 2.0 or more times, preferably 2.5 or more times, more preferably 3.0 or more times, and still more preferably 4.0 or more times, the number of atoms in the main chain in R^{S}. The number of carbon atoms in the alkylene group in X^{B} may also be preferably 30 or less times, such as 20 or less times, 10 or less times, or 6.0 or less times, the number of atoms in the main chain in R^{S}.

Here, the main chain in R^{S} means the atomic chain with the largest number of atoms (excluding hydrogen atoms) from the Si atom in R^{S} bonded to X^{B}. For example, the number of atoms in the main chain in R^{S} is 4 for Si(CH₃)₃OSi(CH₃)₂-, the number of atoms in the main chain in R^{S} is 6 for Si(CH₃)₃OSi(CH₃)₃OSi(CH₃)₂-, and 3 for Si(Si(CH₃)₃)₃-.

In the formula (1B), R^{Si} is a monovalent group containing a Si atom to which a hydroxyl group or a hydrolyzable group is bonded. R^{Si} has the same definition as R^{Si} with respect to the formula (1A).

The compound represented by the formula (1B) can be produced by, for example, the following method.

At first, an unsaturated carboxylic acid or an unsaturated carboxylic acid ester, such as a compound represented by the following formula:

CH₂=CH-R⁷¹-COOR⁷²

wherein
R⁷¹ is an alkylene group having 9 or more carbon atoms, and
R⁷² is a hydrogen atom or a C₁₋₃ alkyl group,

is allowed to react with a silane compound, such as a compound represented by the following formula:

   R³-(SiR⁴₂O)ₙ-SiR⁴₂-H

   wherein
   R³ is a C₁₋₁₂ alkyl group,
   R⁴ is each independently a C₁₋₁₂ alkylene group, and
   n is 0 to 1,500,
to obtain a compound represented by the following formula:

   R³-(SiR⁴₂O)ₙ-SiR⁴₂-CH₂CH₂-R⁷¹-COOR⁷².

Then, the obtained compound is allowed to react with an amine derivative having a carbon-carbon double bond at an end, such as a compound represented by the following formula:

NH₂-R⁷³

wherein
R⁷³ is -R⁷⁴-CH=CH₂ or -R⁷⁵(-R⁷⁴-CH=CH₂)₃,
R⁷⁴ is a single bond or a C₁₋₆ alkylene group,
R⁷⁵ is -R⁷⁶-C, and
R⁷⁴ is a single bond or a C₁₋₆ alkylene group,

to obtain a compound represented by
   R³-(SiR⁴₂O)ₙ-SiR⁴₂-CH₂CH₂-R⁷¹-CONH₂-R⁷⁴-CH=CH₂, or
   R³-(SiR⁴₂O)ₙ-SiR⁴₂-CH₂CH₂-R⁷¹-CONH₂-R⁷⁵(-R⁷⁴-CH=CH₂)₃. Finally, the compound obtained as described above is allowed to react with a compound represented by the following formula:

      HSi(R⁷⁶)₃
   wherein R⁷⁶ is a hydrolyzable group,
thereby obtaining the compound represented by the formula (1B).

### (Component B)

The component B contained in the composition of the present disclosure is a silane coupling agent containing a siloxane structure.

The siloxane structure means a structure in which two silicon atoms are bonded via oxygen (-Si-O-Si-). The siloxane structure may be present at any location in the silane coupling agent molecule.

The silane coupling agent of the component B may contain any structure other than the siloxane structure.

In one embodiment, the component B is
a compound represented by the following formula (1B):
[Formula 20]

R^{S}-X^{B}-R^{Si} (1B)

wherein
R^{S} is a monovalent group containing one or more Si atoms to which a hydroxyl group or a hydrolyzable group is not directly bonded,
X^{B} is a divalent organic group containing an alkylene group having 7 or more carbon atoms, and
R^{Si} is a monovalent group containing a Si atom to which a hydroxyl group or a hydrolyzable group is bonded,
   or
a compound represented by the following formula (1C) or (2C) :
   [Formula 21]

   R^{SO1}_{α}-X^{C}-R^{Si}_{β} (1C)

   R^{Si}_{γ}-X^{C}-R^{SO2}-X^{C}-R^{Si}_{γ} (2C)

   wherein
   R^{SO1} is each independently R¹-R^{SO}-SiR²₂-,
   R^{SO2} is -R^{SO}-SiR²₂-,
   R^{SO} is each independently a group represented by the following formula: 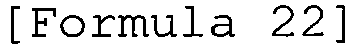 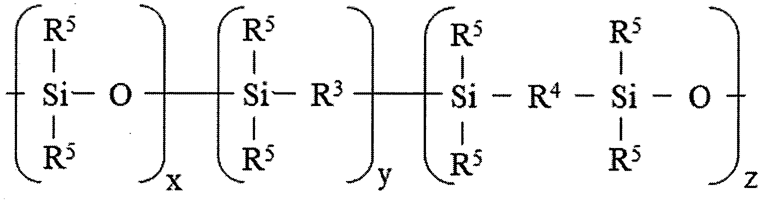 wherein
      R³ is each independently a C₁₋₁₂ alkylene group, -R⁶-OR⁶-, -R⁸-R⁷-R⁸-, -R⁸-R⁷-R⁹-R⁷-R⁸-, -R⁸-R⁷-R⁹-R⁶-R⁹-R⁷-R⁸-, or - R⁹-R⁶-R⁹-R⁷-R⁹-R⁶-R⁹-,
      R⁴ is each independently a C₁₋₁₂ alkylene group, -R⁶-OR⁶-, -R⁸-R⁷-R⁸-, -R⁸-R⁷-R⁹-R⁷-R⁸-, -R⁸-R⁷-R⁹-R⁶-R⁹-R⁷-R⁸-, or - R⁹-R⁶-R⁹-R⁷-R⁹-R⁶-R⁹-,
      R⁶ is each independently a C₁₋₆ alkylene group,
      R⁷ is each independently an optionally substituted arylene group,
      R⁸ is each independently a single bond or a C₁₋₆ alkylene group,
      R⁹ is each independently a single bond or an oxygen atom,
         R⁵ is each independently a hydrocarbon group,
         x is an integer of 0 to 200,
         y is an integer of 0 to 200,
         z is an integer of 0 to 200,
         x + y + z is 1 or more, and
         the occurrence order of the respective repeating units enclosed in parentheses provided with x, y, or z is not limited in the formula,
         R¹ is a hydrocarbon group,
         R² is each independently a hydrocarbon group,
         R^{Si} is each independently a monovalent group containing a Si atom to which a hydroxyl group or a hydrolyzable group is bonded,
         X^{c} is each independently a di- to decavalent organic group,
         α is an integer of 1 to 9,
         β is an integer of 1 to 9, and
         γ is each independently an integer of 1 to 9.

The formula (1B) has the same definition as the formula (1B) described for the component A.

However, when utilized as the component B, n in the formula (1B) is 10 to 500, and more preferably 10 to 100.

### (Compound represented by formula (1C) or (2C))

Formula (1C) or (2C):
[Formula 23]

R^{SO1}_{α}-X^{C}-R^{Si}_{β} (1C)

R^{Si}_{γ}-X^{C}-R^{SO2}-X^{C}-R^{Si}_{γ} (2C)

R^{SO1} is each independently R¹-R^{SO}-SiR²₂-, and
R^{SO2} is -R^{SO}-SiR²₂-.

R^{SO} is each independently a group represented by the following formula: 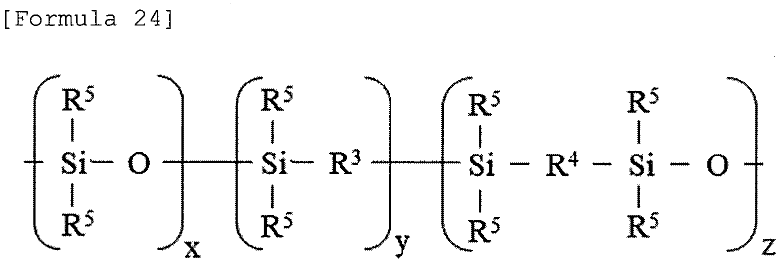 wherein
R³ is each independently a C₁₋₁₂ alkylene group, -R⁶-OR⁶-, -R⁸-R⁷-R⁸-, -R⁸-R⁷-R⁹-R⁷-R⁸⁻, -R⁸-R⁷-R⁹-R⁶-R⁹-R⁷-R⁸-, or - R⁹-R⁶-R⁹-R⁷-R⁹-R⁶-R⁹-,
R⁴ is each independently a C₁₋₁₂ alkylene group, -R⁶-OR⁶-, -R⁸-R⁷-R⁸-, -R⁸-R⁷-R⁹-R⁷-R⁸-, -R⁸-R⁷-R⁹-R⁶-R⁹-R⁷-R⁸-, or - R⁹-R⁶-R⁹-R⁷-R⁹-R⁶-R⁹- ,
R⁶ is each independently a C₁₋₆ alkylene group,
R⁷ is each independently an optionally substituted phenylene group or naphthylene group,
R⁸ is each independently a single bond or a C₁₋₆ alkylene group,
R⁹ is each independently a single bond or an oxygen atom,
   R⁵ is each independently a hydrocarbon group,
   x is an integer of 0 to 200,
   y is an integer of 0 to 200,
   z is an integer of 0 to 200,
   x + y + z is 1 or more, and
   the occurrence order of the respective repeating units enclosed in parentheses provided with x, y, or z is not limited in the formula.

R³ is each independently a C₁₋₁₂ alkylene group, -R⁶-OR⁶-, -R⁸-R⁷-R⁸-, -R⁸-R⁷-R⁹-R⁷-R⁸-, -R⁸-R⁷-R⁹-R⁶-R⁹-R⁷-R⁸-, or - R⁹-R⁶-R⁹-R⁷-R⁹-R⁶-R⁹-, and preferably a C₁₋₁₂ alkylene group or -R⁶-O-R⁶-.

R⁴ is each independently a C₁₋₁₂ alkylene group, -R⁶-OR⁶-, -R⁸-R⁷-R⁸-, -R⁸-R⁷-R⁹-R⁷-R⁸-, -R⁸-R⁷-R⁹-R⁶-R⁹-R⁷-R⁸-, or - R⁹-R⁶-R⁹-R⁷-R⁹-R⁶-R⁹-.

In one embodiment, R⁴ is each independently a C₁₋₁₂ alkylene group or -R⁶-O-R⁶-.

In another embodiment, R⁴ is each independently -R⁸-R⁷-R⁸-, -R⁸-R⁷-R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-.

In one embodiment, R³ is each independently a C₁₋₁₂ alkylene group or -R⁶-O-R⁶-, and R⁴ is each independently a C₁₋₁₂ alkylene group or -R⁶-O-R⁶-.

In another embodiment, R³ is each independently a C₁₋₁₂ alkylene group or -R⁶-O-R⁶-, and R⁴ is each independently - R⁸-R⁷-R⁸-, -R⁸-R⁷-R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-.

The C₁₋₁₂ alkylene group may be linear or may be branched. The C₁₋₁₂ alkylene group is preferably linear.

The C₁₋₁₂ alkylene group is preferably a C₂₋₈ alkylene group, and more preferably a C₂₋₆ alkylene group.

R⁶ is each independently a C₁₋₆ alkylene group. The C₁₋₆ alkylene group may be linear or may be branched. The C₁₋₆ alkylene group is preferably linear.

The C₁₋₆ alkylene group is preferably a C₂₋₄ alkylene group, and more preferably a C₂₋₃ alkylene group.

In a preferred embodiment, in a group containing a plurality of R⁶, all R⁶ are the same group.

R⁷ is each independently an optionally substituted arylene group.

In one embodiment, R⁷ is each independently

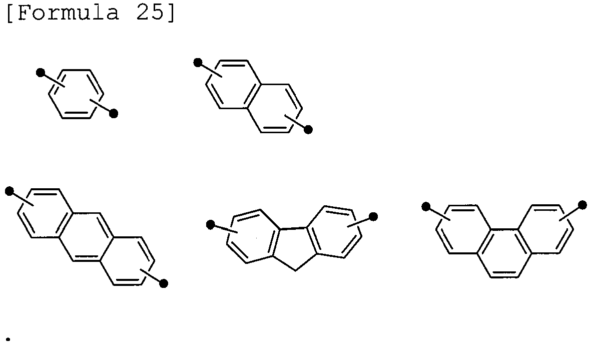

In one embodiment, R⁷ is a phenylene group.

In another embodiment, R⁷ is a naphthylene group.

The arylene group may have a substituent. The number of substituents is not limited, and it is, for example, 1 to 4, and preferably 1 or 2.

In one embodiment, the phenylene group and the naphthylene group may have a substituent. The number of substituents is not limited, and it is, for example, 1 to 4, and preferably 1 or 2. As the substituted phenylene group, 2,5-substituted phenylene is preferred.

The substituent with respect to the arylene group is each independently -R⁴¹-R⁴².

R⁴¹ is a single bond, an oxygen atom, or a sulfur atom, preferably a single bond or an oxygen atom, and more preferably an oxygen atom.

R⁴² is a C₁₋₁₂ alkyl group, -(O-R⁴³)ₚ, -R⁴⁴-R⁴⁵, or -R⁴⁴-OR⁴⁶, all of which are optionally substituted with a halogen.

The halogen is fluorine, chlorine, bromine, or iodine, and is preferably fluorine.

The C₁₋₁₂ alkyl group in R⁴² may be linear or may be branched.

R⁴³ is a C₁₋₆ alkylene group, and preferably a C₂₋₄ alkylene group. Such an alkylene group may be linear or may be branched.

R⁴⁴ is a C₁₋₁₂ alkylene group, and preferably a C₁₋₆ alkylene group. Such an alkylene group may be linear or may be branched.

R⁴⁵ is -CH=CH₂ or -OCOCH=CH₂.

R⁴⁶ is a hydrogen atom or a C₁₋₆ alkyl group. Such an alkyl group may be linear or may be branched. The C₁₋₆ alkyl group is preferably a C₁₋₃ alkyl group, more preferably a C₁₋₂ alkyl group, and still more preferably a methyl group.

R⁸ is each independently a single bond or a C₁₋₆ alkylene group. Such a C₁₋₆ alkylene group may be linear or may be branched.

In one embodiment, R⁸ is a single bond.

In another embodiment, R⁸ is a C₁₋₆ alkylene group.

R⁹ is each independently a single bond or an oxygen atom.

In one embodiment, R⁹ is a single bond.

In another embodiment, R⁹ is an oxygen atom.

R⁵ is each independently a hydrocarbon group. Such a hydrocarbon group is optionally substituted.

R⁵ is, each independently, preferably an unsubstituted hydrocarbon group or a hydrocarbon group substituted with a halogen atom. Such a halogen atom is preferably a fluorine atom.

R⁵ is, each independently, preferably a C₁₋₁₈ alkyl group or aryl group optionally substituted with a halogen atom, and more preferably a C₁₋₁₈ alkyl group or aryl group.

The C₁₋₁₈ alkyl group may be linear or may be branched, and is preferably linear. The C₁₋₁₈ alkyl group is preferably a C₁₋₁₀ alkyl group, more preferably a C₁₋₆ alkyl group, still more preferably a C₁₋₄ alkyl group, and even more preferably a methyl group.

The aryl group is preferably a phenyl group.

In one embodiment, R⁵ is each independently a C₁₋₆ alkyl group, preferably a C₁₋₄ alkyl group, and more preferably a methyl group.

In another embodiment, R⁵ is a phenyl group.

In another embodiment, R⁵ is each independently a methyl group or a phenyl group, and preferably a methyl group.

x is an integer of 0 to 200, preferably an integer of 0 to 100, more preferably an integer of 1 to 100, still more preferably an integer of 5 to 50, and even more preferably an integer of 10 to 30.

In one embodiment, x is 0.

In one embodiment, x is 1 to 200, preferably an integer of 1 to 100, more preferably an integer of 5 to 50, and still more preferably an integer of 10 to 30.

y is an integer of 0 to 200, preferably an integer of 0 to 100, more preferably an integer of 1 to 100, still more preferably an integer of 5 to 50, and even more preferably an integer of 10 to 30.

In one embodiment, y is 0.

In one embodiment, y is 1 to 200, preferably an integer of 1 to 100, more preferably an integer of 5 to 50, and still more preferably an integer of 10 to 30.

z is an integer of 0 to 200, preferably an integer of 0 to 100, more preferably an integer of 1 to 100, still more preferably an integer of 5 to 50, and even more preferably an integer of 10 to 30.

In one embodiment, z is 0.

In one embodiment, z is 1 to 200, preferably an integer of 1 to 100, more preferably an integer of 5 to 50, and still more preferably an integer of 10 to 30.

In one embodiment, y is 0 and z is 0.

R^{SO} may be a random polymer or may be a block polymer.

R¹ is a hydrocarbon group or A group. The A group has the same definition as the A group described for R^{S}.

R² is each independently a hydrocarbon group.

The hydrocarbon group in R¹ and R² is optionally substituted.

R¹ and R² are, each independently, preferably an unsubstituted hydrocarbon group or a hydrocarbon group substituted with a halogen atom. Such a halogen atom is preferably a fluorine atom.

R¹ and R² are, each independently, preferably a C₁₋₁₈ alkyl group or aryl group optionally substituted with a halogen atom, and more preferably a C₁₋₁₈ alkyl group or aryl group.

The C₁₋₁₈ alkyl group may be linear or may be branched, and is preferably linear. The C₁₋₁₈ alkyl group is preferably a C₁₋₁₀ alkyl group, more preferably a C₁₋₆ alkyl group, still more preferably a C₁₋₄ alkyl group, and even more preferably a methyl group.

The aryl group is preferably a phenyl group.

In one embodiment, R¹ and R² are each independently a C₁₋₆ alkyl group, preferably a C₁₋₄ alkyl group, and more preferably a methyl group.

In another embodiment, R¹ and R² are phenyl groups.

In another embodiment, R¹ and R² are each independently a methyl group or a phenyl group, and preferably a methyl group.

In the formula (1C), R^{Si} is a monovalent group containing a Si atom to which a hydroxyl group or a hydrolyzable group is bonded. R^{Si} has the same definition as R^{Si} with respect to the formula (1A).

X^{C} is interpreted as a linker connecting the siloxane moiety or silalkylene moiety (R^{SO1} or R^{SO2}), which mainly provides functions such as water-repellency, to the silane moiety (R^{Si}) providing a binding ability to a substrate. Accordingly, X^{C} may be any group as long as the compounds represented by the formulae (1C) and (2C) can stably exist.

In the formula (1C), α is an integer of 1 to 9, and β is an integer of 1 to 9. These α and β may vary depending on the valence of X^{C}. The sum of α and β is the same as the valence of X^{C}. For example, when X^{C} is a decavalent organic group, the sum of α and β is 10; for example, a case where α is 9 and β is 1, α is 5 and β is 5, or α is 1 and β is 9, can be considered. When X^{C} is a divalent organic group, α and β are 1.

In the formula (2C), γ is an integer of 1 to 9. γ may vary depending on the valence of X^{C}. That is, γ is a value obtained by subtracting 1 from the valence of X^{C}.

X^{C} is each independently a single bond or a di- to decavalent organic group.

The di- to decavalent organic group in X^{C} is preferably a di- to octavalent organic group. In one embodiment, such a di- to decavalent organic group is preferably a di- to tetravalent organic group, and more preferably a divalent organic group. In another embodiment, such a di- to decavalent organic group is preferably a tri- to octavalent organic group, and more preferably a tri- to hexavalent organic group.

In one embodiment, X^{C} is a single bond or a divalent organic group, and α, β, and γ are 1.

In one embodiment, X^{C} is a tri- to hexavalent organic group, α is 1, β is 2 to 5, and γ is 2 to 5.

In one embodiment, X^{C} is a trivalent organic group, α is 1, and β is 2.

When X^{C} is a single bond or a divalent organic group, the formulae (1C) and (2C) are represented by the following formulae (1C') and (2C').
[Formula 26]

R^{SO1}-X^{C}-R^{Si} (1C')

R^{Si}-X^{C}-R^{SO2}-X^{C}-R^{Si} (2C')

In one embodiment, X^{C} is a divalent organic group.

In one embodiment, examples of X^{C} include a divalent organic group represented by the following formula:

- (R⁵¹)ₚ₅-(X⁵¹)_{q5}-

wherein
R⁵¹ is a single bond, - (CH₂)ₛ₅-, or an o-, m- or p-phenylene group, and is preferably -(CH₂)ₛ₅-,
s5 is an integer of 1 to 20, preferably an integer of 1 to 15, more preferably an integer of 1 to 10, and even more preferably an integer of 1 to 6, such as an integer of 1 to 3, or is an integer of 1 to 20, preferably an integer of 4 to 15, and more preferably an integer of 7 to 13,
X⁵¹ is -(X⁵²)ₗ₅-,
X⁵² is each independently a group selected from the group consisting of -O-, -S-, an o-, m- or p-phenylene group, -CO-, -C(O)O-, -CONR⁵⁴-, -O-CONR⁵⁴-, -NR⁵⁴-, and - (CH₂)ₙ₅-,
R⁵⁴ is each independently a hydrogen atom or a monovalent organic group, and is preferably a hydrogen atom, a phenyl group, a C₁₋₆ alkyl group (preferably a methyl group), or an oxyalkylene-containing group having 1 to 10 carbon atoms,
n5 is each independently an integer of 1 to 20, preferably an integer of 1 to 15, more preferably an integer of 1 to 10, and even more preferably an integer of 1 to 6, such as an integer of 1 to 3,
l5 is an integer of 1 to 10, preferably an integer of 1 to 5, and more preferably an integer of 1 to 3,
p5 is 0 or 1, and
q5 is 0 or 1,
where at least one of p5 and q5 is 1, and the occurrence order of the respective repeating units enclosed in parentheses provided with p5 or q5 is not limited. Here, X^{C} (typically a hydrogen atom in X^{C}) is optionally substituted with one or more substituents selected from a fluorine atom, a C₁₋₃ alkyl group, and a C₁₋₃ fluoroalkyl group. In a preferred embodiment, X^{C} is not substituted with any of these groups.

The oxyalkylene-containing group having 1 to 10 carbon atoms is a group containing -O-C₁₋₁₀ alkylene-, for example, -R⁵⁵- (-O-C₁₋₁₀ alkylene)ₙ-R⁵⁶ (wherein R⁵⁵ is a single bond or a divalent organic group, preferably a C₁₋₆ alkylene group, n is an arbitrary integer, preferably an integer of 2 to 10, and R⁵⁶ is a hydrogen atom or a monovalent organic group, preferably a C₁₋₆ alkyl group). The alkylene group may be linear or may be branched.

In a preferred embodiment, X^{C} is each independently - (R⁵¹)ₚ₅-(X⁵¹)_{q5}-R⁵²-. R⁵² is a single bond, -(CH₂)ₜ₅-, or an o-, m- or p-phenylene group, and is preferably -(CH₂)ₜ₅-. t5 is an integer of 1 to 20, preferably an integer of 2 to 6, and more preferably an integer of 2 to 3. Here, R⁵² (typically a hydrogen atom in R⁵²) is optionally substituted with one or more substituents selected from a fluorine atom, a C₁₋₃ alkyl group, and a C₁₋₃ fluoroalkyl group. In a preferred embodiment, R⁵⁶ is not substituted with any of these groups.

Preferably, X^{C} may be each independently
a C₁₋₂₀ alkylene group, or

-R⁵¹-X⁵³-R⁵²-,

wherein R⁵¹ and R⁵² have the same definition as described above, and
X⁵³ is

   -O-,

   -S-,

   -CO-,

   -C(O)O-,

   -CONR⁵⁴-,

   -O-CONR⁵⁴-,

   -O-(CH₂)ᵤ₅-CONR⁵⁴-,

   -O-(CH₂)u₅-CO-,

   or

   -CONR⁵⁴-(CH₂)ᵤ₅-N(R⁵⁴) -,
wherein R⁵⁴ has the same definition as described above, and
u5 is an integer of 1 to 20, preferably an integer of 2 to 6, and more preferably an integer of 2 to 3.

More preferably, X^{C} is each independently
a C₁₋₂₀ alkylene group,

-(CH₂)ₛ₅-X⁵³-,

-X⁵³-(CH₂)ₜ₅-,

or

-(CH₂)ₛ₅-X⁵³-(CH₂)ₜ₅-,

wherein X⁵³, s5, and t5 have the same definition as described above.

In a preferred embodiment, X^{C} may be each independently
a C₁₋₂₀ alkylene group,

-(CH₂)ₛ₅-X⁵³-,

-X⁵³-(CH₂)ₜ₅-,

or

-(CH₂)ₛ₅-X⁵³-(CH₂)ₜ₅-,

wherein
X⁵³ is -O-, -CO-, -CONR⁵⁴-, -O-CONR⁵⁴-,-O-(CH₂)ᵤ₅-CONR⁵⁴-, or -O-(CH₂)ᵤ₅-CO-,
R⁵⁴ is each independently a hydrogen atom, a phenyl group, a C₁₋₆ alkyl group (preferably a methyl group), or an oxyalkylene-containing group having 1 to 10 carbon atoms, and
s5, t5, and u5 have the same definition as described above.

In a preferred embodiment, X^{C} may be each independently

- (CH₂)ₛ₅-O-(CH₂)ₜ₅-,

- (CH₂)ₛ₅-CONR⁵⁴-(CH₂)ₜ₅-,

- (CH₂)ₛ₅-O-(CH₂)ᵤ₅-CO-,

or

-(CH₂)ₛ₅-O-(CH₂)ᵤ₅-CONR⁵⁴-(CH₂)ₜ₅-,

wherein
R⁵⁴ is each independently a hydrogen atom, a phenyl group, a C₁₋₆ alkyl group (preferably a methyl group), or an oxyalkylene-containing group having 1 to 10 carbon atoms, and
s5, t5, and u5 have the same definition as described above.

In a preferred embodiment, X^{C} is a C₁₋₂₀ alkylene group or - (CH₂)ₛ₅-CONH-(CH₂)ₜ₅-.

In one embodiment, X^{C} is a C₁₋₂₀ alkylene group.

In another embodiment, X^{C} is - (CH₂)ₛ₅-CONH-(CH₂)ₜ₅-.

X^{C} is each independently optionally substituted with one or more substituents selected from a fluorine atom, a C₁₋₃ alkyl group, and a C₁₋₃ fluoroalkyl group (preferably a C₁₋₃ perfluoroalkyl group). In one embodiment, X^{C} is unsubstituted.

X^{C} is bonded to R^{S1} or R^{S2} on its left side, and bonded to R^{H} on its right side.

In one embodiment, the silane compound of the present disclosure is a silane compound represented by the formula (1C).

In one embodiment, the silane compound of the present disclosure is a silane compound represented by the formula (2C).

The silane compound represented by the formula (1C) or (2C) is not limited, and it may have a number average molecular weight of 5 × 10² to 1 × 10⁵. It is preferable that the silane compound represented by the formula (1C) or (2C) has a number average molecular weight of preferably 1,000 to 30,000, and more preferably 1,500 to 10,000, from the viewpoint of abrasion durability. The "number average molecular weight" is defined as a value obtained by ¹H-NMR measurement.

The silane compound can be obtained by, for example, allowing a compound having a siloxane or silalkylene structure to react with a compound having a hydrolyzable silane group.

As for the synthesis of a polysilalkylene, a method by ring-opening polymerization of silacyclobutane is known, for example (JP 2015-54945 A).

As a monomer used for the synthesis, a silacycloalkane (a cyclic silalkylene) can be used. Examples thereof include 1,1-dimethylsilacyclobutane, 1,1-dimethylsilacyclopentane, 1,1-dimethylsilacyclohexane, 4,4-dimethyl-1-oxa-4-silacyclohexane, 1-ethyl-1-methylsilacyclobutane, 1-methyl-1-propylsilacyclobutane, 1-butyl-1-methylsilacyclobutane, 1-hexyl-1-methylsilacyclobutane, and 1-methyl-1-octylsilacyclobutane.

As for the synthesis of a polysilalkylenesiloxane, a method by polycondensation of 1,2-bis(chlorodimethylsilyl)ethane or ring-opening polymerization of 2,2,5,5-tetramethyl-2,5-disila-1-oxacyclopentane is known, for example (Org. Lett., Vol. 8, No. 21, 2006, 4683).

As a monomer used for the polycondensation, a dichlorosilane compound or a dialkoxysilane compound can be used. Examples thereof include 1,2-bis(chlorodimethylsilyl)ethane, 1,3-bis(chlorodimethylsilyl)propane, 1,6-bis(chlorodimethylsilyl)hexane, 1,8-bis(chlorodimethylsilyl)octane, 1,2-bis(methoxydimethylsilyl)ethane, 1,3-bis(methoxydimethylsilyl)propane, 1,6-bis(methoxydimethylsilyl)hexane, and 1,8-bis(methoxydimethylsilyl)octane.

As a monomer used for the ring-opening polymerization, a cyclic silalkylenesiloxane compound can be used. Examples thereof include 2,2,5,5-tetramethyl-2,5-disila-1-oxacyclopentane, 2,2,6,6-tetramethyl-2,6-disila-1-oxacyclohexane, and 2,2,4,4,6,6,8,8-octamethyl-2,4,6,8-tetrasila-1,5-dioxacyclooctane.

After the ring-opening polymerization or polycondensation, the resulting polysilalkylene or polysilalkylenesiloxane is allowed to react with a compound having a reactive silane group, thereby introducing an olefin into an end of a compound having a silalkylene structure. As the compound having a reactive silane group, a monochlorosilane compound can be used.

Examples of the monochlorosilane compound include monochlorosilane compounds having an olefinic structure at an end, such as those shown below.

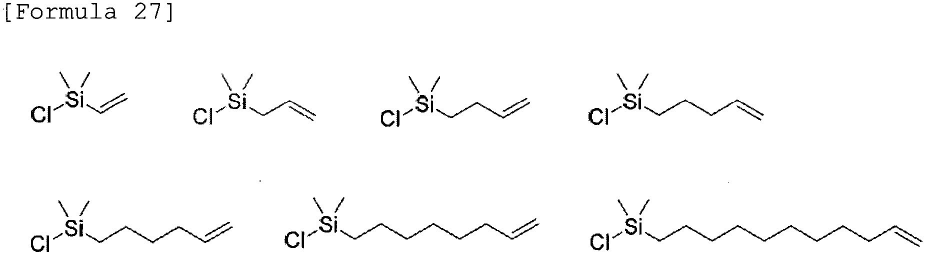

Next, a compound represented by the following formula (1Ca-1) or (2Ca-1):

R^{S1}-R⁶¹-CH=CH₂ (1Ca-1)

CH₂=CH-R⁶¹-R^{S2}-R⁶¹-CH=CH₂ (2Ca-1)

wherein
R^{S1} and R^{S2} have the same definition as for R^{S1} and R^{S2} in the formulae (1C) and (2C), and
R⁶¹ is a single bond or a divalent organic group,

is allowed to react with a compound represented by the following formula (4C):

   HSiR⁶⁰₃ (4C)

   wherein R⁶⁰ is each independently a halogen atom (for example, I, Br, Cl, F, or the like) or a C₁₋₆ alkoxy group, to obtain a compound represented by the following formula (1Ca-2) or (2Ca-2):

      R^{S1}-R⁶¹-CH₂CH₂-SiR⁶⁰₃ (1Ca-2)

      R⁶⁰₃Si-CH₂CH₂-R⁶¹-R^{S2}-R⁶¹-CH₂CH₂-SiR⁶⁰₃ (2Ca-2)
   wherein individual reference symbols have the same definition as described above. Next, the compound represented by the formula (1Ca-2) or (2Ca-2) is allowed to react with a compound represented by the following formula (5C):

      Hal-J-R⁶²-CH=CH₂ (5C)

      wherein
      Hal is a halogen atom (for example, I, Br, Cl, F, or the like),
      J is Mg, Cu, Pd or Zn, and
      R⁶² is a bond or a C₁₋₁₂ alkylene group,
to obtain a compound represented by the following formula (1Ca-3) or (2Ca-3):

   R^{S1}-R⁶¹'-Si(R⁶²-CH=CH₂)₃ (1Ca-3)

   (CH=CH₂-R⁶²)₃Si-R⁶¹'-R^{S2}-R⁶¹'-Si(R⁶²-CH=CH₂)₃ (2Ca-3)

   wherein
   R⁶¹' is a divalent organic group, and
   the other reference symbols have the same definition as described above. Next, the compound represented by the formula (1Ca-3) or (2Ca-3) is allowed to react with a compound represented by the following formula (6C):

      HSiR⁶³ₘR⁶⁴₃₋ₘ (6C)

      wherein
      R⁶³ is each independently a hydroxyl group or a hydrolyzable group,
      R⁶⁴ is each independently a monovalent organic group, and
      m is 1 to 3,
thereby obtaining a silane compound represented by the formula (1C-1) or (2C-1):

   R^{S1}-R⁶¹'-Si(R⁶²'-SiR⁶³ₘR⁶⁴₃₋ₘ)₃ (1C-1)

   (R⁶³ₘR⁶⁴₃₋ₘSi-R⁶²')₃Si-R⁶¹'-R^{S2}-R⁶¹'-Si(R⁶²'-SiR⁶³ₘR⁶⁴₃₋ₘ)₃ (2C-2)

   wherein
   R⁶²' is a C₂₋₁₄ alkylene group, and
   the other reference symbols have the same definition as described above.

As another method, the polysilalkylene or polysilalkylenesiloxane obtained as described above is allowed to react with a compound having a reactive silane group, thereby introducing a carbonyl group into an end of a compound having a silalkylene structure.

The compound having a reactive silane group is, for example, a compound represented by the following formula:

R⁷⁴Si(R⁷¹)₂-R⁷²-COOR⁷³

wherein
R⁷¹ is each independently a C₁₋₁₂ alkyl group, preferably a C₁₋₆ alkyl group, more preferably a C₁₋₃ alkyl group, and still more preferably a methyl group, optionally substituted with a halogen atom,
R⁷² is a C₂₋₁₂ alkylene group, and preferably a C₃₋₅ alkylene group, optionally substituted with a halogen atom,
R⁷³ is a hydrogen atom or a C₁₋₃ alkyl group, preferably a methyl group or an ethyl group, and more preferably a methyl group, optionally substituted with a halogen atom, and
R⁷⁴ is a halogen atom, a hydroxyl group, or a hydrolyzable group, preferably a halogen atom or a hydroxyl group, and more preferably a chlorine atom or a hydroxyl group. The alkyl group may be linear or may be branched. The alkyl group is preferably unsubstituted. The alkylene group may be linear or may be branched, and is preferably linear. The alkylene group is preferably unsubstituted. The halogen atom is, for example, a fluorine atom, a chlorine atom, a bromine atom, or an iodine atom, and preferably a chlorine atom.

Specifically, examples of the compound having a reactive silane group include compounds having monochlorosilane having an ester structure at an end, such as those shown below.

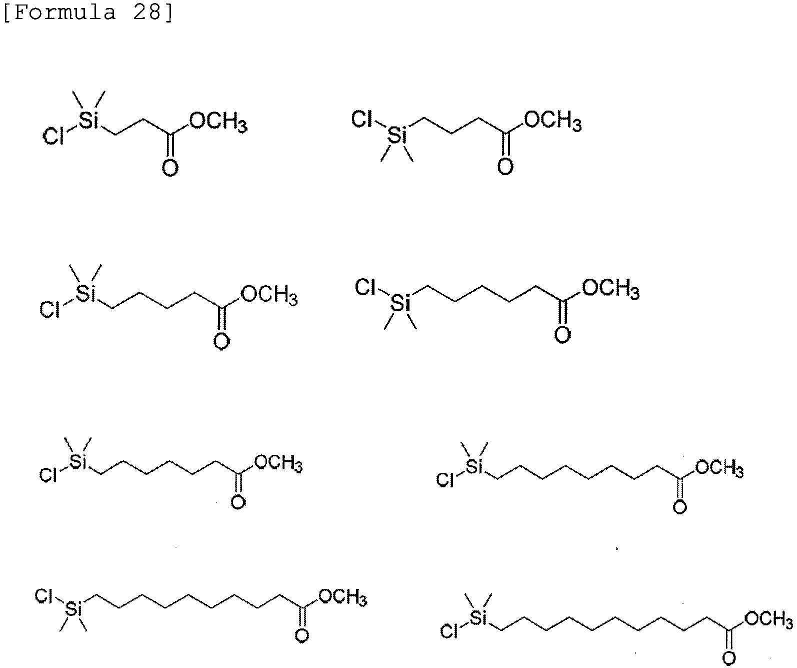

Next, a compound represented by the following formula (1Cb-1) or (2Cb-1):

R^{S1}-R⁶¹-COOR⁶⁵ (1Cb-1)

R⁶⁵OCO-R⁶¹-R^{S2}-R⁶¹-COOR⁶⁵ (2Cb-1)

wherein
R^{S1} and R^{S2} have the same definition as for R^{S1} and R^{S2} in the formulae (1C) and (2C),
R⁶¹ is a single bond or a divalent organic group, and
R⁶⁵ is a hydrogen atom or a C₁₋₆ alkyl group,

is allowed to react with a compound represented by the following formula (7C):

   NH₂-R⁶⁶-C(R⁶²-CH=CH₂)₃ (7C)

   wherein
   R⁶² is a single bond or a C₁₋₁₂ alkylene group, and
   R⁶⁶ is a single bond or a C₁₋₁₂ alkylene group,
to obtain a compound represented by the following formula (1Cb-2) or (2Cb-2):

   R^{S1}-R⁶¹-CONH-R⁶⁶-C(R⁶²-CH=CH₂)₃ (1Cb-2)

   (CH=CH₂-R⁶²)₃C-R⁶⁶-NHCO-R⁶¹-R^{S2}-R⁶¹-CONH-R⁶⁶-C(R⁶²- CH=CH₂)₃ (2Cb-2)

   wherein individual reference symbols have the same definition as described above. Next, the compound represented by the formula (1Cb-2) or (2Cb-2) is allowed to react with a compound represented by the following formula (6C):

   HSiR⁶³ₘR⁶⁴₃₋ₘ (6C)

   wherein
   R⁶³ is each independently a hydroxyl group or a hydrolyzable group,
   R⁶⁴ is each independently a monovalent organic group, and
   m is 1 to 3,
thereby obtaining a silane compound represented by the formula (1C-2) or (2C-2):

   R^{S1}-R⁶¹-CONH-R⁶⁶-C(R⁶²'-SiR⁶³ₘR⁶⁴₃₋ₘ)₃ (1C-2)

   (R⁶³ₘR⁶⁴₃₋ₘSi-R⁶²')₃C-R⁶⁶-NHCO-R⁶¹-R^{S2}-R⁶¹-CONH-R⁶⁶- C(R⁶²'-SiR⁶³ₘR⁶⁴₃₋ₘ)₃ (2C-2)

   wherein
   R⁶²' is a C₂₋₁₄ alkylene group, and
   the other reference symbols have the same definition as described above.

As another method, a compound represented by the following formula (1Cb-1) or (2Cb-1):

R^{S1}-R⁶¹-COOR⁶⁵ (1Cb-1)

R⁶⁵OCO-R⁶¹-R^{S2}-R⁶¹-COOR⁶⁵ (2Cb-1)

wherein
R^{S1} and R^{S2} have the same definition as for R^{S1} and R^{S2} in the formulae (1C) and (2C),
R⁶¹ is a C₁₋₁₂ alkylene group, and
R⁶⁵ is a hydrogen atom or a C₁₋₆ alkyl group,

is allowed to react with a compound represented by the following formula (8C):

   HN(R⁶²-CH=CH₂)₂ (8C)

   wherein
   R⁶² is a C₁₋₁₂ alkylene group,
to obtain a compound represented by the following formula (1Cc-2) or (2Cc-2):

   R^{S1}-R⁶¹-CON(R⁶²-CH=CH₂)₂ (1Cc-2)

   (CH=CH₂-R⁶²)₂NCO-R⁶¹-R^{S2}-R⁶¹-CON(R⁶²-CH=CH₂)₂ (2Cc- 2)

   wherein individual reference symbols have the same definition as described above. Next, the compound represented by the formula (1Cc-2) or (2c-2) is allowed to react with a compound represented by the following formula (6C) :

   HSiR⁶³ₘR⁶⁴₃₋ₘ (6C)

   wherein
   R⁶³ is each independently a hydroxyl group or a hydrolyzable group,
   R⁶⁴ is each independently a monovalent organic group, and
   m is 1 to 3,
thereby obtaining a silane compound represented by the formula (1C-3) or (2C-3):

   R^{S1}-R⁶¹-CON(R⁶²'-SiR⁶³ₘR⁶⁴₃₋ₘ)₂ (1C-3)

   (R⁶³ₘR⁶⁴₃₋ₘSi-R⁶²')₂NCO-R⁶¹-R^{S2}-R⁶¹-CON(R⁶²'-SiR⁶³ₘR⁶⁴₃₋ₘ)₂ (2C-3)

   wherein
   R⁶²' is a C₂₋₁₄ alkylene group, and
   the other reference symbols have the same definition as described above.

As another method, a compound represented by the following formula (1Cb-1) or (2Cb-1):

R^{S1}-R⁶¹-COOR⁶⁵ (1b-1)

R⁶⁵OCO-R⁶¹-R^{S2}-R⁶¹-COOR⁶⁵ (2Cb-1)

wherein
R^{S1} and R^{S2} have the same definition as for R^{S1} and R^{S2} in the formulae (1C) and (2C),
R⁶¹ is a C₁₋₁₂ alkylene group, and
R⁶⁵ is a hydrogen atom or a C₁₋₆ alkyl group,

is allowed to react with a compound represented by the following:

   M-R⁶²-CH=CH₂

   wherein
   M is a metal-containing group, such as Li, halogen-Mg, or Zn, and
   R⁶² is a C₁₋₁₂ alkylene group,
to obtain a compound represented by the following formula (1Cd-2) or (2Cd-2):

   R^{S1}-R⁶¹-C(OH)(R⁶²-CH=CH₂)₂ (1Cd-2)

   (CH=CH₂-R⁶²)₂(OH)C-R⁶¹-R^{S2}-R⁶¹-C(OH)(R⁶²-CH=CH₂)₂ (2Cd-2)

   wherein individual reference symbols have the same definition as described above. Next, the compound represented by the formula (1Cd-2) or (2Cd-2) is allowed to react with a compound represented by the following formula (6C):

   HSiR⁶³ₘR⁶⁴₃₋ₘ (6C)

   wherein
   R⁶³ is each independently a hydroxyl group or a hydrolyzable group,
   R⁶⁴ is each independently a monovalent organic group, and
   m is 1 to 3,
thereby obtaining a silane compound represented by the formula (1C-4) or (2C-4):

   R^{S1}-R⁶¹-C(OH)(R⁶²'-SiR⁶³ₘR⁶⁴₃₋ₘ)₂ (1C-4)

   (R⁶³ₘR⁶⁴₃₋ₘSi-R⁶²')2 (OH)C-R⁶¹-R^{S2}-R⁶¹-C(OH)(R⁶²'- SiR⁶³ₘR⁶⁴₃₋ₘ)₂ (2C-4)

   wherein
   R⁶²' is a C₂₋₁₄ alkylene group, and
   the other individual reference symbols have the same definition as described above.

As another method, a compound represented by the following formula (1Cd-2) or (2Cd-2):

R^{S1}-R⁶¹-C(OH)(R⁶²-CH=CH₂)₂ (1Cd-2)

(CH=CH₂-R⁶²)₂(OH)C-R⁶¹-R^{S2}-R⁶¹-C(OH)(R⁶²-CH=CH₂)₂ (2Cd-2)

wherein individual reference symbols have the same definition as described above,
is allowed to react with an olefinating material, such as a compound represented by the following:

   R⁶⁹-R⁶⁸-CH=CH₂

   wherein
   R⁶⁸ is a C₁₋₁₂ alkylene group, and
   R⁶⁹ is a halogen atom such as a fluorine atom, a chlorine atom, a bromine atom, or an iodine atom, and preferably a bromine atom,
to obtain a compound represented by the following formula (1Ce-1) or (2Ce-1):

   R^{S1}-R⁶¹-C(OR⁶⁸-CH=CH₂)(R⁶²-CH=CH₂)₂ (1Ce-1)

   (CH=CH₂-R⁶²)₂(CH=CH₂-R⁶⁸O)C-R⁶¹-R^{S2}-R⁶¹-C(OR⁶⁸- CH=CH₂)(R⁶²-CH=CH₂)₂ (2Ce-1)

   wherein individual reference symbols have the same definition as described above. Next, the compound represented by the formula (1Ce-1) or (2Ce-1) is allowed to react with a compound represented by the following formula (6C) :

   HSiR⁶³ₘR⁶⁴₃₋ₘ (6C)

   wherein
   R⁶³ is each independently a hydroxyl group or a hydrolyzable group,
   R⁶⁴ is each independently a monovalent organic group, and
   m is 1 to 3,
thereby obtaining a silane compound represented by the formula (1C-5) or (2C-5):

   R^{S1}-R⁶¹-C(OR⁶²'-SiR⁶³ₘR⁶⁴₃₋ₘ)(R⁶²'-SiR⁶³ₘR⁶⁴₃₋ₘ)₂ (1C-5)

   (R⁶³ₘR⁶⁴₃₋ₘSi-R⁶²')₂(SiR⁶³ₘR⁶⁴₃₋ₘ-R⁶²'O)C-R⁶¹-R^{S2}-R⁶¹- C(OR⁶²'-SiR⁶³ₘR⁶⁴₃₋ₘ)(R⁶²'-SiR⁶³ₘR⁶⁴₃₋ₘ)₂ (2C-5)

   wherein
   R⁶²' is each independently a C₂₋₁₄ alkylene group, and
   the other individual reference symbols have the same definition as described above.

As another method, a compound represented by the following formula (1Cd-2) or (2Cd-2):

R^{S1}-R⁶¹-C(OH) (R⁶²-CH=CH₂)₂ (1Cd-2)

(CH=CH₂-R⁶²)₂(OH)C-R⁶¹-R^{S2}-R⁶¹-C(OH)(R⁶²-CH=CH₂)₂ (2Cd-2)

wherein individual reference symbols have the same definition as described above,
is allowed to react with a polyether group-introducing agent, such as a compound represented by the following:

   R⁷⁸-R⁷⁵-(OR⁷⁶)ₓ-R⁷⁷

   wherein
   R⁷⁵ is a C₁₋₆ alkylene group,
   R⁷⁶ is a C₁₋₆ alkylene group,
   R⁷⁷ is a hydrogen atom, a hydroxyl group, or a C₁₋₆ alkyl group,
   R⁷⁸ is a halogen atom such as a fluorine atom, a chlorine atom, a bromine atom, or an iodine atom, preferably a chlorine atom, and
   x is an integer of 0 to 20,
to obtain a compound represented by the following formula (1Cf-1) or (2Cf-1):

   R^{S1}-R⁶¹-C(OR⁷⁹)(R⁶²-CH=CH₂)₂ (1Cf-2)

   (CH=CH₂-R⁶²)₂(R⁷⁹O)C-R⁶¹-R^{S2}-R⁶¹-C(OR⁷⁹)(R⁶² -CH=CH₂)₂ (2Cf-2)

   wherein
   R⁷⁹ is -R⁷⁵-(OR⁷⁶)ₓ-R⁷⁷, and
   the other individual reference symbols have the same definition as described above. Next, the compound represented by the formula (1Cf-1) or (2Cf-1) is allowed to react with a compound represented by the following formula (6C) :

      HSiR⁶³ₘR⁶⁴₃₋ₘ (6C)

      wherein
      R⁶³ is each independently a hydroxyl group or a hydrolyzable group,
      R⁶⁴ is each independently a monovalent organic group, and
      m is 1 to 3,
thereby obtaining a silane compound represented by the formula (1C-6) or (2C-6):

   R^{S1}-R⁶¹-C(OR⁷⁹)(R⁶²'-SiR⁶³ₘR⁶⁴₃₋ₘ)₂ (1C-6)

   (R⁶³ₘR⁶⁴₃₋ₘSi-R⁶²')₂(R⁷⁹O)C-R⁶¹-R^{S2}-R⁶¹-C(OR⁷⁹)(R⁶²'- SiR⁶³ₘR⁶⁴₃₋ₘ)₂ (2C-6)

   wherein
   R⁶²' is each independently a C₂₋₁₄ alkylene group, and
   the other individual reference symbols have the same definition as described above.

The present disclosure provides the following as production intermediates for at least one silane compound represented by the formula (1C) or (2C). In the following formulae, the same reference symbols as in the formulae (1C) and (2C) represent the same ones in the formulae (1C) and (2C), and have the same embodiments.

A compound represented by the following formula (1Ca-3) or (2Ca-3):

R^{S1}-R⁶¹'-Si(R⁶²-CH=CH₂)₃ (1Ca-3)

(CH=CH₂-R⁶²)₃Si-R⁶¹'-R^{S2}-R⁶¹'-Si(R⁶²-CH=CH₂)₃ (2Ca-3)

wherein
R^{S1} is each independently R¹-R^{S}-SiR²₂-,
R^{S2} is -R^{S}-SiR²₂-,
R^{S} is each independently a group represented by the following formula: 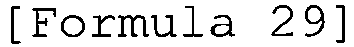 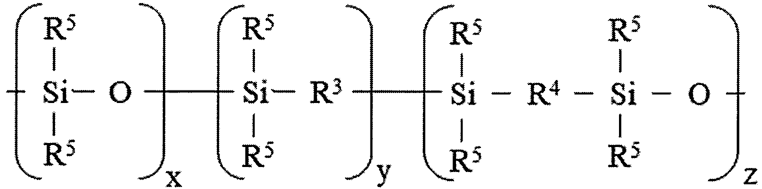 wherein
   R³ is each independently a C₁₋₁₂ alkylene group, -R⁶-OR⁶-, -R⁸-R⁷-R⁸-, -R⁸-R⁷-R⁹-R⁷-R⁸-, -R⁸-R⁷-R⁹-R⁶-R⁹-R⁷-R⁸-, or - R⁹-R⁶-R⁹-R⁷-R⁹-R⁶-R⁹-,
   R⁴ is each independently a C₁₋₁₂ alkylene group, -R⁶-OR⁶-, -R⁸-R⁷-R⁸-, -R⁸-R⁷-R⁹-R⁷-R⁸-, -R⁸-R⁷-R⁹-R⁶-R⁹-R⁷-R⁸-, or - R⁹-R⁶-R⁹-R⁷-R⁹-R⁶-R⁹-,
   R⁶ is each independently a C₁₋₆ alkylene group,
   R⁷ is each independently an optionally substituted phenylene group or naphthylene group,
   R⁸ is each independently a single bond or a C₁₋₆ alkylene group,
   R⁹ is each independently a single bond or an oxygen atom,
      R⁵ is each independently a hydrocarbon group,
      x is an integer of 0 to 200,
      y is an integer of 0 to 200,
      z is an integer of 0 to 200,
      y + z is 1 or more, and
      the occurrence order of the respective repeating units enclosed in parentheses provided with x, y, or z is not limited in the formula,
      R¹ is a hydrocarbon group,
      R² is each independently a hydrocarbon group,
      R⁶² is a single bond or a C₁₋₁₂ alkylene group, and
      R⁶¹' is a divalent organic group.

A compound represented by the formula (1Cb-1) or (2Cb-1):

R^{S1}-R⁶¹-COOR⁶⁵ (1Cb-1)

R⁶⁵OCO-R⁶¹-R^{S2}-R⁶¹-COOR⁶⁵ (2Cb-1)

wherein
R^{S1} is each independently R¹-R^{S}-SiR²₂-,
R^{S2} is -R^{S}-SiR²₂-,
R^{S} is each independently a group represented by the following formula: 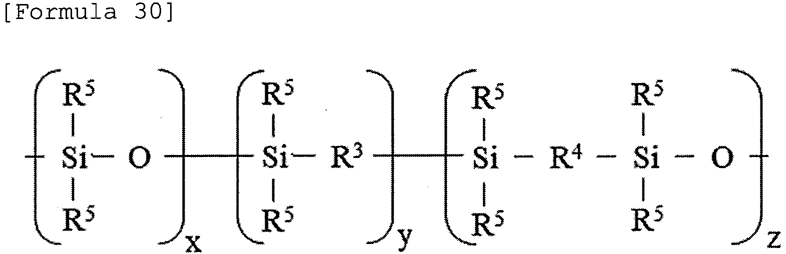 wherein
   R³ is each independently a C₁₋₁₂ alkylene group, -R⁶-OR⁶-, -R⁸-R⁷-R⁸-, -R⁸-R⁷-R⁹-R⁷-R⁸-, -R⁸-R⁷-R⁹-R⁶-R⁹-R⁷-R⁸-, or - R⁹-R⁶-R⁹-R⁷-R⁹-R⁶-R⁹-,
   R⁴ is each independently a C₁₋₁₂ alkylene group, -R⁶-OR⁶-, -R⁸-R⁷-R⁸-, -R⁸-R⁷-R⁹-R⁷-R⁸-, -R⁸-R⁷-R⁹-R⁶-R⁹-R⁷-R⁸-, or - R⁹-R⁶-R⁹-R⁷-R⁹-R⁶-R⁹-,
   R⁶ is each independently a C₁₋₆ alkylene group,
   R⁷ is each independently an optionally substituted phenylene group or naphthylene group,
   R⁸ is each independently a single bond or a C₁₋₆ alkylene group,
   R⁹ is each independently a single bond or an oxygen atom,
   R⁵ is each independently a hydrocarbon group,
   x is an integer of 0 to 200,
   y is an integer of 0 to 200,
   z is an integer of 0 to 200,
   y + z is 1 or more, and
   the occurrence order of the respective repeating units enclosed in parentheses provided with x, y, or z is not limited in the formula,
   R¹ is a hydrocarbon group,
   R² is each independently a hydrocarbon group,
   R⁶¹ is a single bond or a divalent organic group, and
   R⁶⁵ is a hydrogen atom or a C₁₋₆ alkyl group.

A compound represented by the following formula (1Cb-2) or (2Cb-2):

R^{S1}-R⁶¹-CONR⁶⁷-R⁶⁶-C(R⁶²-CH=CH₂)₃ (1Cb-2)

(CH=CH₂-R⁶²)₃C-R⁶⁶-NR⁶⁷CO-R⁶¹-R^{S2}-R⁶¹-CONR⁶⁷-R⁶⁶-C(R⁶²- CH=CH₂)₃ (2Cb-2)

wherein
R^{S1} is each independently R¹-R^{S}-SiR²₂-,
R^{S2} is -R^{S}-SiR²₂-,
R^{S} is each independently a group represented by the following formula: 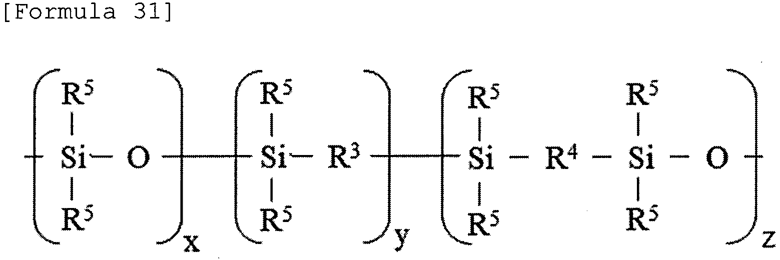 wherein
   R³ is each independently a C₁₋₁₂ alkylene group, -R⁶-OR⁶-, -R⁸-R⁷-R⁸-, -R⁸-R⁷-R⁹-R⁷-R⁸-, -R⁸-R⁷-R⁹-R⁶-R⁹-R⁷-R⁸-, or - R⁹-R⁶-R⁹-R⁷-R⁹-R⁶-R⁹-,
   R⁴ is each independently a C₁₋₁₂ alkylene group, -R⁶-OR⁶-, -R⁸-R⁷-R⁸-, -R⁸-R⁷-R⁹-R⁷-R⁸-, -R⁸-R⁷-R⁹-R⁶-R⁹-R⁷-R⁸-, or - R⁹-R⁶-R⁹-R⁷-R⁹-R⁶-R⁹-,
   R⁶ is each independently a C₁₋₆ alkylene group,
   R⁷ is each independently an optionally substituted arylene group,
   R⁸ is each independently a single bond or a C₁₋₆ alkylene group,
   R⁹ is each independently a single bond or an oxygen atom,
   R⁵ is each independently a hydrocarbon group,
   x is an integer of 0 to 200,
   y is an integer of 0 to 200,
   z is an integer of 0 to 200,
   y + z is 1 or more, and
   the occurrence order of the respective repeating units enclosed in parentheses provided with x, y, or z is not limited in the formula,
   R¹ is a hydrocarbon group,
   R² is each independently a hydrocarbon group,
   R⁶¹ is a single bond or a divalent organic group (preferably, a C₁₋₁₂ alkylene group),
   R⁶² is a single bond or a C₁₋₁₂ alkylene group,
   R⁶⁶ is a single bond or a C₁₋₁₂ alkylene group, and
   R⁶⁷ is a hydrogen atom, a C₁₋₁₈ alkyl group, an aryl group, or a polyether group.]

A compound represented by the following formula (1Cc- 2) or (2Cc-2):

R^{S1}-R⁶¹-CON(R⁶²-CH=CH₂)₂ (1Cc-2)

(CH=CH₂-R⁶²)₂NCO-R⁶¹-R^{S2}-R⁶¹-CON(R⁶²-CH=CH₂)₂ (2Cc- 2)

wherein
R^{S1} is each independently R¹-R^{S}-SiR²₂-,
R^{S2} is -R^{S}-SiR²₂-,
R^{S} is each independently a group represented by the following formula: 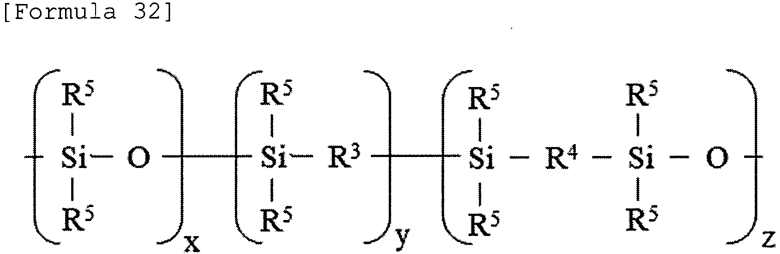 wherein
   R³ is each independently a C₁₋₁₂ alkylene group, -R⁶-OR⁶-, -R⁸-R⁷-R⁸-, -R⁸-R⁷-R⁹-R⁷-R⁸-, -R⁸-R⁷-R⁹-R⁶-R⁹-R⁷-R⁸-, or - R⁹-R⁶-R⁹-R⁷-R⁹-R⁶-R⁹-,
   R⁴ is each independently a C₁₋₁₂ alkylene group, -R⁶-OR⁶-, -R⁸-R⁷-R⁸-, -R⁸-R⁷-R⁹-R⁷-R⁸-, -R⁸-R⁷-R⁹-R⁶-R⁹-R⁷-R⁸-, or - R⁹-R⁶-R⁹-R⁷-R⁹-R⁶-R⁹-,
   R⁶ is each independently a C₁₋₆ alkylene group,
   R⁷ is each independently an optionally substituted arylene group,
   R⁸ is each independently a single bond or a C₁₋₆ alkylene group,
   R⁹ is each independently a single bond or an oxygen atom,
   R⁵ is each independently a hydrocarbon group,
   x is an integer of 0 to 200,
   y is an integer of 0 to 200,
   z is an integer of 0 to 200,
   y + z is 1 or more, and
   the occurrence order of the respective repeating units enclosed in parentheses provided with x, y, or z is not limited in the formula,
   R¹ is a hydrocarbon group,
   R² is each independently a hydrocarbon group,
   R⁶¹ is a single bond or a divalent organic group (preferably, a C₁₋₁₂ alkylene group), and
   R⁶² is a single bond or a C₁₋₁₂ alkylene group.

A compound represented by the following formula (1Cd-2) or (2Cd-2):

R^{S1}-R⁶¹-C(OH) (R⁶²-CH=CH₂)₂ (1Cd-2)

(CH=CH₂-R⁶²)₂(OH)C-R⁶¹-R^{S2}-R⁶¹-C(OH)(R⁶²-CH=CH₂)₂ (2Cd-2)

wherein
R^{S1} is each independently R¹-R^{S}-SiR²₂-,
R^{S2} is -R^{S}-SiR²₂-,
R^{S} is each independently a group represented by the following formula: 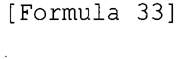 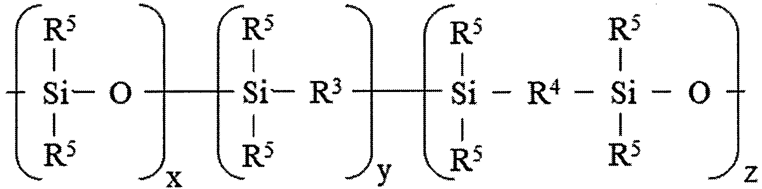 wherein
   R³ is each independently a C₁₋₁₂ alkylene group, -R⁶-OR⁶-, -R⁸-R⁷-R⁸-, -R⁸-R⁷-R⁹-R⁷-R⁸-, -R⁸-R⁷-R⁹-R⁶-R⁹-R⁷-R⁸-, or - R⁹-R⁶-R⁹-R⁷-R⁹-R⁶-R⁹-,
   R⁴ is each independently a C₁₋₁₂ alkylene group, -R⁶-OR⁶-, -R⁸-R⁷-R⁸-, -R⁸-R⁷-R⁹-R⁷-R⁸-, -R⁸-R⁷-R⁹-R⁶-R⁹-R⁷-R⁸-, or - R⁹-R⁶-R⁹-R⁷-R⁹-R⁶-R⁹-,
   R⁶ is each independently a C₁₋₆ alkylene group,
   R⁷ is each independently an optionally substituted arylene group,
   R⁸ is each independently a single bond or a C₁₋₆ alkylene group,
   R⁹ is each independently a single bond or an oxygen atom,
   R⁵ is each independently a hydrocarbon group,
   x is an integer of 0 to 200,
   y is an integer of 0 to 200,
   z is an integer of 0 to 200,
   y + z is 1 or more, and
   the occurrence order of the respective repeating units enclosed in parentheses provided with x, y, or z is not limited in the formula,
   R¹ is a hydrocarbon group,
   R² is each independently a hydrocarbon group,
   R⁶¹ is a single bond or a divalent organic group (preferably, a C₁₋₁₂ alkylene group), and
   R⁶² is a single bond or a C₁₋₁₂ alkylene group.

In the above formulae, R⁶¹ is a divalent organic group. In one embodiment, R⁶¹ is a single bond. In another embodiment, R⁶¹ is a divalent organic group. The divalent organic group is preferably a C₀₋₁₂ alkylene group-CONH-C₀₋₁₂ alkylene group or a C₁₋₁₂ alkylene group.

In the above formulae, R⁶¹' is a divalent organic group. In one embodiment, R⁶¹' is a C₀₋₁₂ alkylene group-CONH-C₂₋₁₄ alkylene group or a C₂₋₁₄ alkylene group.

In the above formulae, R⁶² is a single bond or a C₁₋₁₂ alkylene group.

In the above formulae, R⁶⁵ is a hydrogen atom or a C₁₋₆ alkyl group.

In the above formulae, R⁶⁶ is a hydrogen atom or a C₁₋₆ alkyl group.

R⁶⁷ is a hydrogen atom, a C₁₋₁₈ alkyl group, an aryl group, or a polyether group.

The composition of the present invention will now be described.

In one embodiment, the composition of the present disclosure contains at least one silane compound represented by the formula (1C) or (2C).

In one embodiment, the silane compound in the composition of the present disclosure is a compound represented by the formula (1C).

In another embodiment, the silane compound in the composition of the present disclosure is a compound represented by the formula (2C).

In another embodiment, the silane compound in the composition of the present disclosure is a compound represented by the formula (1C) and a compound represented by the formula (2C).

In the composition of the present disclosure, the content of the compound represented by the formula (2C) is preferably 0.1 mol% or more and 35 mol% or less based on the total of the compound represented by the formula (1C) and the compound represented by the formula (2C). The lower limit of the content of the compound represented by the formula (2C) may be preferably 0.1 mol%, more preferably 0.2 mol%, still more preferably 0.5 mol%, even more preferably 1 mol%, particularly preferably 2 mol%, and especially 5 mol%, based on the total of the compound represented by the formula (1C) and the compound represented by the formula (2C). The upper limit of the content of the compound represented by the formula (2C) may be preferably 35 mol%, more preferably 30 mol%, still more preferably 20 mol%, and even more preferably 15 mol% or 10 mol%, based on the total of the compound represented by the formula (1C) and the compound represented by the formula (2C). The compound represented by the formula (2C) is preferably 0.1 mol% or more and 30 mol% or less, more preferably 0.1 mol% or more and 20 mol% or less, still more preferably 0.2 mol% or more and 10 mol% or less, even more preferably 0.5 mol% or more and 10 mol% or less, and particularly preferably 1 mol% or more and 10 mol% or less, such as 2 mol% or more and 10 mol% or less or 5 mol% or more and 10 mol% or less, based on the total of the compound represented by the formula (1C) and the compound represented by the formula (2C).

In one embodiment, the content of the compound represented by the formula (1C) or (2C) may be preferably 0.1 to 99.0% by mass, more preferably 1.0 to 80.0% by mass, still more preferably 5.0 to 60.0% by mass, and particularly preferably 10.0 to 50.0% by mass, such as 10.0 to 30.0% by mass or 10.0 to 30.0% by mass, based on the entirety of the composition.

In another embodiment, the content of the compound represented by the above formula (1C) or (2C) may be preferably 0.001 to 30% by mass, more preferably 0.01 to 10% by mass, still more preferably 0.05 to 5% by mass, and particularly preferably 0.05 to 2% by mass, based on the entirety of the composition.

In one embodiment, the composition of the present disclosure contains at least one of the silane compound of the present disclosure and a condensed product in which at least a portion of the silane compound of the present disclosure is condensed.

In one embodiment, X^{A} or X^{B} in the component A and X^{B} or X^{C} in the component B have the same structure. In a preferred embodiment, X^{A}, X^{B}, and X^{C} have the same structure containing an amide bond.

In the composition of the present disclosure, the mass ratio between the component A and the component B (component A:component B) may be preferably 1:99 to 99:1, more preferably 10:90 to 90:10, and still more preferably 20:80 to 80:20, such as 50:50 to 80:20.

In one embodiment, a combination in which the component A is a compound represented by the formula (1A) and the component B is a compound represented by the formula (1B) is preferred.

In one embodiment, a combination in which the component A is a compound represented by the formula (1A) and the component B is a compound represented by the formula (1C) is preferred.

In one embodiment, a combination in which the component A is a compound represented by the formula (1A) and the component B is a compound represented by the formula (2C) is preferred.

In one embodiment, a combination in which the component A is a compound represented by the formula (1B) and the component B is a compound represented by the formula (1B) is preferred.

In one embodiment, a combination in which the component A is a compound represented by the formula (1B) and the component B is a compound represented by the formula (1C) is preferred.

In one embodiment, a combination in which the component A is a compound represented by the formula (1B) and the component B is a compound represented by the formula (2C) is preferred.

In the component A and the component B contained in the composition of the present disclosure, R^{Si} at the end may be the same or different.

The composition of the present disclosure may comprise two or more types of the component A. The composition of the present disclosure may also comprise two or more types of the component B. The composition of the present disclosure may comprise two or more types of the component A and two or more types of the component B, or one of them may be of two or more types and the other may be of one type.

In one embodiment, in the composition of the present disclosure, the content of the component A is larger than the content of the component B, on a mass basis. Bymaking the component A more than the component B, the durability of the resulting surface-treating layer is further improved.

In another embodiment, in the composition of the present disclosure, the content of the component B is larger than the content of the component A, on a mass basis. By making the component B more than the component A, the fingerprint removability by wiping of the resulting surface-treating layer is further improved.

The composition of the present disclosure may comprise a solvent, a (non-reactive) silicone compound that may be understood as a silicone oil (hereinafter, referred to as "silicone oil"), an amine compound, an alcohol, a catalyst, a surfactant, a polymerization inhibitor, a sensitizer, and the like.

In one embodiment, the surface-treating agent of the present disclosure comprises a compound represented by R⁹⁰-OH.

R⁹⁰ is a monovalent organic group, preferably a C₁₋₂₀ alkyl group or a C₃₋₂₀ alkylene group, and these groups are optionally substituted with one or more substituents. Examples of the substituents may include a hydroxyl group and -OR⁹¹ (where R⁹¹ is a C₁₋₁₀ alkyl group, preferably a C₁₋₃ alkyl group, such as a methyl group).

In one embodiment, the surface-treating agent of the present disclosure may comprise a solvent selected from compounds represented by R⁸¹OR⁸², R⁸³ₙ₈C₆H₆₋ₙ₈, R⁸⁴R⁸⁵R⁸⁶Si-(O-SiR⁸⁷R⁸⁸)ₘ₈-R⁸⁹, and (OSiR⁸⁷R⁸⁸)ₘ₉,
wherein
R⁸¹ to R⁸⁹ are each independently a monovalent organic group having 1 to 10 carbon atoms,
m8 is an integer of 1 to 6,
m9 is an integer of 3 to 8, and
n8 is an integer of 0 to 6.

The monovalent organic group having 1 to 10 carbon atoms may be linear or may be branched, and may further contain a cyclic structure.

In one embodiment, the monovalent organic group having 1 to 10 carbon atoms may contain an oxygen atom, a nitrogen atom, or a halogen atom.

In another embodiment, the monovalent organic group having 1 to 10 carbon atoms does not contain a halogen atom.

In a preferred embodiment, the monovalent organic group having 1 to 10 carbon atoms is a hydrocarbon group optionally substituted with a halogen, and preferably a hydrocarbon group not substituted with a halogen.

In one embodiment, the hydrocarbon group is linear.

In another embodiment, the hydrocarbon group is branched.

In another embodiment, the hydrocarbon group contains a cyclic structure.

In one embodiment, the solvent is R⁸¹OR⁸².

R⁸¹ and R⁸² may be each independently preferably a hydrocarbon group having 1 to 8 carbon atoms, and more preferably a C₁₋₆ alkyl group or a C₅₋₈ cycloalkyl group.

In one embodiment, the solvent is R⁸³ₙ₈C₆H₆₋ₙ₈.

C₆H₆₋ₙ₈ is an n8-valent benzene ring. That is, R⁸³ₙ₈C₆H₆₋ₙ₈ is benzene substituted with n8 R⁸³ groups.

R⁸³ may be each independently a halogen, or a C₁₋₆ alkyl group optionally substituted with a halogen.

n8 is preferably an integer of 1 to 3.

In one embodiment, the solvent is R⁸⁴R⁸⁵R⁸⁶Si-(O-SiR⁸⁷R⁸⁸)ₘ₈-R⁸⁹.

In one embodiment, the solvent is (OSiR⁸⁷R⁸⁸)ₘ₉. (OSiR⁸⁷R⁸⁸)ₘ₉ is a cyclic siloxane formed by a plurality of OSiR⁸⁷R⁸⁸ units bonded in a cyclic form.

R⁸⁴ to R⁸⁹ are each independently a hydrogen atom or a C₁₋₆ alkyl group, preferably a C₁₋₆ alkyl group, more preferably a C₁₋₃ alkyl group, and still more preferably a methyl group.

m8 is preferably an integer of 1 to 6, more preferably an integer of 1 to 5, and still more preferably 1 to 2.

m9 is preferably an integer of 3 to 6, and more preferably an integer of 3 to 5.

In one embodiment, examples of the solvent include: aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, iso-propanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide, N,N-dimethylacetamide, and N-methylpyrrolidone; ether alcohols such as methyl cellosolve, cellosolve, isopropyl cellosolve, butyl cellosolve, and diethylene glycol monomethyl ether; diethylene glycol monoethyl ether acetate; ethers such as cyclopentyl methyl ether; siloxanes such as hexamethyldisiloxane, hexaethyldisiloxane, octamethyltrisiloxane, octamethylcyclotetrasiloxane, decamethylcyclopentasiloxane, decamethyltetrasiloxane, dodecamethylpentasiloxane, and tetradecamethylhexasiloxane; and fluorine-containing solvents such as 1,1,2-trichloro-1,2,2-trifluoroethane, 1,2-dichloro-1,1,2,2-tetrafluoroethane, dimethyl sulfoxide, 1,1-dichloro-1,2,2,3,3-pentafluoropropane (HCFC 225), ZEORORA H, 1,3-bis(trifluoromethyl)benzene, HFE 7100, HFE 7200, HFE 7300, CF₃CH₂OH, CF₃CF₂CH₂OH, and (CF₃)₂CHOH. Alternatively, the solvent may be a mixed solvent of two or more of such solvents. In particular, aliphatic hydrocarbons, esters, glycol ethers, alcohols, ether alcohols, and siloxanes are preferred. For example, hexane, cyclohexane, heptane, octane, nonane, decane, undecane, dodecane, mineral spirits, methyl acetate, ethyl acetate, propyl acetate, n-butyl acetate, isopropyl acetate, isobutyl acetate, propylene glycol monomethyl ether, propylene glycol monoethyl ether, propylene glycol monobutyl ether, methanol, ethanol, iso-propanol, n-butanol, isobutanol, tert-butanol, sec-butanol, diethylene glycol monomethyl ether, hexamethyldisiloxane, hexaethyldisiloxane, octamethyltrisiloxane, decamethyltetrasiloxane, dodecamethylpentasiloxane, tetradecamethylhexasiloxane, octamethylcyclotetrasiloxane, and octamethylcyclopentasiloxane are preferred.

The silicone oil is not limited, and examples thereof include a compound represented by the following general formula (3a):

R^{1a}-(SiR^{3a}₂-O)ₐ₁-SiR^{3a}₂-R^{1a} ... (3a)

wherein
R^{1a} is each independently a hydrogen atom or a hydrocarbon group,
R^{3a} is each independently a hydrogen atom or a hydrocarbon group, and
a1 is 2 to 3,000.

R^{3a} is each independently a hydrogen atom or a hydrocarbon group. Such a hydrocarbon group is optionally substituted.

R^{3a} is, each independently, preferably an unsubstituted hydrocarbon group or a hydrocarbon group substituted with a halogen atom. Such a halogen atom is preferably a fluorine atom.

R^{3a} is, each independently, preferably a C₁₋₆ alkyl group or aryl group optionally substituted with a halogen atom, and more preferably a C₁₋₆ alkyl group or aryl group.

The C₁₋₆ alkyl group may be linear or may be branched, and is preferably linear. The C₁₋₆ alkyl group is preferably a C₁₋₃ alkyl group, and more preferably a methyl group.

The aryl group is preferably a phenyl group.

In one embodiment, R^{3a} is each independently a C₁₋₆ alkyl group, preferably a C₁₋₃ alkyl group, and more preferably a methyl group.

In another embodiment, R^{3a} is a phenyl group.

In another embodiment, R^{3a} is a methyl group or a phenyl group, and preferably a methyl group.

R^{1a} is each independently a hydrogen atom or a hydrocarbon group, and has the same definition as R^{3a}.

R^{1a} is, each independently, preferably a C₁₋₆ alkyl group or aryl group optionally substituted with a halogen atom, and more preferably a C₁₋₆ alkyl group or aryl group.

In one embodiment, R^{1a} is each independently a C₁₋₆ alkyl group, preferably a C₁₋₃ alkyl group, and more preferably a methyl group.

In another embodiment, R^{1a} is a phenyl group.

In another embodiment, R^{1a} is a methyl group or a phenyl group, and preferably a methyl group.

a1 is 2 to 1,500. a1 may be preferably 5 or more, more preferably 10 or more, and still more preferably 15 or more, such as 30 or more or 50 or more. a1 may be preferably 1,000 or less, more preferably 500 or less, still more preferably 200 or less, and even more preferably 150 or less, such as 100 or less or 80 or less.

a1 may be preferably 5 to 1,000, more preferably 10 to 500, still more preferably 15 to 200, and even more preferably 15 to 150.

Examples of another silicone oil include a compound represented by the following (3b):

R^{1a}-R^{S2}-R^{3a} ... (3b)

wherein
R^{1a} is each independently a hydrocarbon group,
R^{3a} is each independently a hydrocarbon group, and
R^{S2} has the same definition as described for the formula (2).

The silicone oil may have an average molecular weight of 500 to 1,000,000, and preferably 1,000 to 100,000. The molecular weight of the silicone oil may be measured using GPC.

As the silicone oil, a linear or cyclic silicone oil in which a1 in -(SiR^{3a}₂-O)ₐ₁- is 30 or less can be used, for example. The linear silicone oil may be a so-called straight silicone oil or modified silicone oil. Examples of the straight silicone oil include dimethyl silicone oil, methyl phenyl silicone oil, and methyl hydrogen silicone oil. Examples of the modified silicone oil include those obtained by modifying a straight silicone oil with alkyl, aralkyl, polyether, higher fatty acid ester, fluoroalkyl, amino, epoxy, carboxyl, alcohol, or the like. Examples of the cyclic silicone oil include cyclic dimethylsiloxane oil.

The silicone oil may be contained in an amount of, for example, 0 to 50% by mass, preferably 0.001 to 30% by mass, and more preferably 0.1 to 5% by mass, based on the composition of the present disclosure.

In the composition of the present disclosure, such a silicone oil may be contained in an amount of, for example, 0 to 300 parts by mass, preferably 0 to 100 parts by mass, more preferably 0 to 50 parts by mass, and still more preferably 0 to 10 parts by mass, based on 100 parts by mass in total of the compound of the present disclosure (in the case of two or more types, the total thereof, and the same applies below).

The silicone oil contributes to improving the surface lubricity of the surface-treating layer.

Examples of the alcohol include methanol, ethanol, iso-propanol, n-butanol, isobutanol, tert-butanol, sec-butanol, 3-pentanol, octyl alcohol, 3-methyl-3-methoxybutanol, and tert-amyl alcohol. Such an alcohol added to the composition improves the stability of the composition.

Examples of the catalyst include acids (for example, acetic acid, hydrochloric acid, nitric acid, sulfuric acid, phosphoric acid, sulfonic acid, p-toluenesulfonic acid, trifluoroacetic acid, and the like), bases (for example, sodium hydroxide, potassium hydroxide, ammonia, triethylamine, diethylamine, and the like), transition metals (for example, Ti, Ni, Sn, Zr, Al, B, Si, Ta, Nb, Mo, W, Cr, Hf, V, and the like), and sulfur-containing compounds or nitrogen-containing compounds having an unshared electron pair in the molecular structure (for example, sulfoxide compounds, aliphatic amine compounds, aromatic amine compounds, phosphoric acid amide compounds, amide compounds, and urea compounds).

Examples of the aliphatic amine compounds may include diethylamine and triethylamine. Examples of the aromatic amine compounds may include aniline and pyridine.

In a preferred embodiment, the transition metal is contained as a transition metal compound represented by M-R, wherein M is a transition metal atom and R is a hydrolyzable group. By making the transition metal compound a compound in which a transition metal and a hydrolyzable group are bonded, the transition metal atom can be contained in the surface-treating layer more efficiently, and the friction durability and chemical resistance of the surface-treating layer can be further improved.

The hydrolyzable group means a group that can undergo a hydrolysis reaction in the same manner as the hydrolyzable group with respect to the compound, that is, means a group that can be removed from the transition metal atom by a hydrolysis reaction. Examples of the hydrolyzable group include -OR^{m}, -OCOR^{m}, -O-N=CR^{m}₂, -NR^{m}₂, -NHR^{m}, -NCO, and a halogen (in these formulae, R^{m} represents a substituted or unsubstituted C₁₋₄ alkyl group).

In a preferred embodiment, the hydrolyzable group is - OR^{m}, and preferably methoxy or ethoxy. By using an alkoxy group as the hydrolyzable group, the transition metal atom can be contained in the surface-treating layer more efficiently, and the friction durability and chemical resistance of the surface-treating layer can be further improved.

In one embodiment, the hydrolyzable group may be the same as the hydrolyzable group contained in the compound described above. By making the hydrolyzable groups in the compound and in the transition metal compound the same group, even when such hydrolyzable groups are mutually exchanged, its effect can be minimized.

In another embodiment, the hydrolyzable group may be different from the hydrolyzable group contained in the compound described above. By making the hydrolyzable groups in the compound and in the transition metal compound different, the reactivity of hydrolysis can be controlled.

In one embodiment, the hydrolyzable group and the hydrolyzable group contained in the compound may be mutually interchanged in the composition.

In a preferred embodiment, the transition metal compound is Ta(OR^{m})₅ (wherein R^{m} is a substituted or unsubstituted C₁₋₄ alkyl group), and may be preferably Ta(OCH₂CH₃)₅ or Si(OR^{m})₁₋ₘ₁R^{m}'ₘ₁ (wherein R^{m} is a substituted or unsubstituted C₁₋₄ alkyl group, R^{m}' is a C₁₋₄ alkyl group, and m1 is 0 or 1), and preferably tetraethoxysilane, methyltrimethoxysilane, methyltriethoxysilane, tetraisopropoxysilane, dimethyldiethoxysilane, or dimethyldimethoxysilane.

The catalyst may be contained in an amount of, for example, 0.0002% by mass or more based on the entirety of the composition. The catalyst may be contained in an amount of preferably 0.02% by mass or more, and more preferably 0.04% by mass or more, based on the entirety of the composition. The catalyst may be contained in an amount of, for example, 10% by mass or less based on the entirety of the composition, and in particular, it is contained in an amount of 1% by mass or less. The composition of the present disclosure can contribute to the formation of a surface-treating layer with better durability when the catalyst is contained in the concentration as described above.

The content of the catalyst is preferably 0 to 10% by mass, more preferably 0 to 5% by mass, and particularly preferably 0 to 1% by mass, based on the compound of the present disclosure.

The catalyst promotes hydrolysis and dehydrative condensation of the compound of the present disclosure, and promotes formation of a layer formed of the composition of the present disclosure.

Examples of other components include, in addition to those described above, tetraethoxysilane, methyltrimethoxysilane, 3-aminopropyltrimethoxysilane, 3-glycidoxypropyltrimethoxysilane, and methyltriacetoxysilane.

The composition of the present disclosure may contain, in addition to the components described above, trace amounts of Pt, Rh, Ru, 1,3-divinyltetramethyldisiloxane, triphenylphosphine, NaCl, KCl, silane condensation product, and the like as impurities.

In one embodiment, the composition of the present disclosure is for a dry coating method, and preferably for vacuum deposition.

In one embodiment, the composition of the present disclosure is for a wet coating method, and preferably for dip coating.

The composition of the present disclosure can be formed into pellets by impregnating a porous material such as a porous ceramic material or a metal fiber such as a fiber obtained by, for example, solidifying steel wool in a cotton-like form therewith. Such pellets can be used in, for example, vacuum deposition.

The composition of the present disclosure is preferably used as a surface-treating agent or as a component of a surface-treating agent.

Hereinafter, an article of the present disclosure will be described.

The article of the present disclosure comprises a substrate and a layer (surface-treating layer) on the substrate surface, the layer being formed of the surface-treating agent of the present disclosure.

The substrate usable in the present disclosure may be composed of any suitable material such as glass, resin (which may be natural or synthetic resin such as a commonly used plastic material), metal, ceramics, semiconductors (such as silicon and germanium), fiber (such as woven fabric and nonwoven fabric), fur, leather, wood, pottery, stone, building materials, and sanitary articles.

For example, when the article to be produced is an optical member, the material constituting the surface of the substrate may be a material for an optical member, such as glass or a transparent plastic. When the article to be produced is an optical member, some layer (or film), such as a hard coat layer or an antireflection layer, may be formed on the surface (the outermost layer) of the substrate. The antireflection layer may be any of a single-layer antireflection layer and a multi-layer antireflection layer. Examples of inorganic substances usable in the antireflection layer include SiO₂, SiO, ZrO₂, TiO₂, TiO, Ti₂O₃, Ti₂O₅, Al₂O₃, Ta₂O₅, Ta₃O₅, Nb₂O₅, HfO₂, Si₃N₄, CeO₂, MgO, Y₂O₃, SnO₂, MgF₂, and WO₃. One of these inorganic substances may be used singly, or two or more types thereof may be used in combination (for example, as a mixture). In the case of a multi-layer antireflection layer, it is preferable to use SiO₂ and/or SiO for the outermost layer thereof. When the article to be produced is an optical glass component for a touch panel, a part of the surface of the substrate (glass) may have a transparent electrode such as a thin film in which indium tin oxide (ITO), indium zinc oxide, or the like is used. The substrate, according to its specific configuration or the like, may have an insulating layer, an adhesive layer, a protecting layer, a decorated frame layer (I-CON), an atomizing film layer, a hard coating layer, a polarizing film, a phase difference film, a liquid crystal display module, or the like.

The shape of the substrate is not limited, and may be, for example, in the form of a plate, a film, or the like. The surface region of the substrate on which a surface-treating layer is to be formed may be at least a portion of the substrate surface, and may be suitably determined according to the application, specific configuration, and the like of an article to be produced.

In one embodiment, the substrate, or at least the surface portion thereof, may be composed of a material originally having a hydroxyl group. Examples of the material include glass, as well as metal (in particular, base metal) where a natural oxidized film or a thermal oxidized film is formed on the surface, ceramics, and semiconductors. Alternatively, when the substrate has an insufficient amount of hydroxyl groups or when the substrate originally has no hydroxyl group as in resin and the like, a pre-treatment may be performed on the substrate to thereby introduce or increase hydroxyl groups on the surface of the substrate. Examples of such a pre-treatment include a plasma treatment (for example, corona discharge) and ion beam irradiation. The plasma treatment can be suitably utilized to not only introduce or increase hydroxyl groups on the substrate surface, but also clean the substrate surface (remove foreign matter and the like). Another example of such a pre-treatment is a method wherein a monolayer of a surface adsorbent having a carbon-carbon unsaturated bonding group is formed on the surface of the substrate by a LB method (a Langmuir-Blodgett method), a chemical adsorption method, or the like beforehand, and thereafter cleaving the unsaturated bond under an atmosphere containing oxygen, nitrogen, or the like.

In another embodiment, the substrate, or at least the surface portion thereof, may be composed of a material comprising another reactive group such as a silicone compound having one or more Si-H groups or alkoxysilane.

In a preferred embodiment, the substrate is glass. As the glass, sapphire glass, soda-lime glass, alkali aluminosilicate glass, borosilicate glass, alkali-free glass, crystal glass, and quartz glass are preferred, and chemically tempered soda-lime glass, chemically tempered alkali aluminosilicate glass, and chemically bonded borosilicate glass are particularly preferred.

In one embodiment, the article of the present disclosure may comprise a silicon oxide-containing intermediate layer between the glass and the surface-treating layer. By providing such an intermediate layer, the adhesion between the glass and the surface-treating layer is improved, and the durability is improved.

In a preferred embodiment, the intermediate layer may comprise an alkali metal in addition to silicon oxide.

Examples of the alkali metal include lithium, sodium, and potassium. The alkali metal is preferably sodium.

The thickness of the intermediate layer is not limited, and it is preferably 1 to 200 nm, and particularly preferably 1 to 20 nm. By setting the thickness of the intermediate layer to the lower limit value of the above range or more, the improvement effect of adhesion by the intermediate layer becomes greater.

The concentration of alkali metal atoms in the intermediate layer can be measured by various surface analyzers, such as TOF-SIMS, XPS, and XRF.

The proportion of alkali metal atoms in all atoms of the entire intermediate layer can be obtained by XPS depth profile analysis by ion sputtering, which is performed by alternately repeating XPS measurements and etching of the surface by ion sputtering using an ion gun built into the XPS device.

In the intermediate layer, the average value of the concentration of alkali metal in the area with a depth of 1 nm or less from the surface in contact with the surface-treating layer is determined by obtaining the depth profile of the concentration of alkali metal atoms by TOF-SIMS (time-of-flight secondary ion mass spectrometry) depth profile analysis by ion sputtering, and then calculating the average value of the concentration of alkali metal atoms in the profile. The TOF-SIMS depth profile analysis by ion sputtering is performed by alternately repeating TOF-SIMS measurements and etching of the surface by ion sputtering using an ion gun built into the TOF-SIMS device.

The article of the present disclosure can be produced by forming a layer of the surface-treating agent of the present disclosure on the surface of the substrate and post-treating this layer as necessary, thereby forming a layer from the surface-treating agent of the present disclosure.

The layer of the surface-treating agent of the present disclosure can be formed by applying the surface-treating agent on the surface of the substrate such that the surface-treating agent coats the surface. The coating method is not limited. For example, a wet coating method and a dry coating method can be used.

Examples of the wet coating method include dip coating, spin coating, flow coating, spray coating, roll coating, gravure coating, wipe coating, squeegee coat method, die coat, inkjet, cast method, Langmuir-Blodgett method, and similar methods.

Examples of the dry coating method include deposition (usually, vacuum deposition), sputtering, CVD, and similar methods. Specific examples of the deposition method (usually, a vacuum deposition method) include resistive heating, highfrequency heating using electron beam, microwave, or the like, ion beam, and similar methods. Specific examples of the CVD method include plasma-CVD, optical CVD, thermal CVD, and similar methods.

Furthermore, coating by an atmospheric pressure plasma method can be performed.

When using the wet coating method, the surface-treating agent of the present disclosure can be applied to the substrate surface after being diluted with a solvent. From the viewpoint of the stability of the composition of the present disclosure and the volatility of the solvent, the following solvents are preferably used: aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, iso-propanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide, N,N-dimethylacetamide, and N-methylpyrrolidone; ether alcohols such as methyl cellosolve, cellosolve, isopropyl cellosolve, butyl cellosolve, and diethylene glycol monomethyl ether; diethylene glycol monoethyl ether acetate; polyfluoroaromatic hydrocarbons (for example, 1,3-bis(trifluoromethyl)benzene); polyfluoroaliphatic hydrocarbons (for example, C₆F₁₃CH₂CH₃ (for example, ASAHIKLIN(R) AC-6000 manufactured by AGC Inc.), and 1,1,2,2,3,3,4-heptafluorocyclopentane (for example, Zeorolla(R) H manufactured by ZEON Corporation); ether alcohols such as hydrofluoroethers (HFE) (for example, alkyl perfluoroalkyl ethers (the perfluoroalkyl group and the alkyl group may be linear or branched), such as perfluoropropyl methyl ether (C₃F₇OCH₃) (for example, Novec(TM) 7000 manufactured by SUMITOMO 3M LIMITED), perfluorobutyl methyl ether (C₄F₉OCH₃) (for example, Novec(TM) 7100 manufactured by SUMITOMO 3M LIMITED), perfluorobutyl ethyl ether (C₄F₉OC₂H₅) (for example, Novec(TM) 7200 manufactured by SUMITOMO 3M), and perfluorohexyl methyl ether (C₂F₅CF(OCH₃)C₃F₇) (for example, Novec(TM) 7300 manufactured by SUMITOMO 3M LIMITED), or CF₃CH₂OCF₂CHF₂ (for example, ASAHIKLIN (R) AE-3000 manufactured by AGC Inc.)) and cyclopentyl methyl ether; siloxanes such as hexamethyldisiloxane, hexaethyldisiloxane, octamethyltrisiloxane, octamethylcyclotetrasiloxane, octamethylcyclopentasiloxane, decamethyltetrasiloxane, dodecamethylpentasiloxane, and tetradecamethylhexasiloxane; and the like. One of these solvents may be used singly, or two or more may be used as a mixture. In particular, aliphatic hydrocarbons, esters, glycol ethers, alcohols, ether alcohols, and siloxanes are preferred. For example, hexane, cyclohexane, heptane, octane, nonane, decane, undecane, dodecane, mineral spirits, methyl acetate, ethyl acetate, propyl acetate, n-butyl acetate, isopropyl acetate, isobutyl acetate, propylene glycol monomethyl ether, propylene glycol monoethyl ether, propylene glycol monobutyl ether, methanol, ethanol, iso-propanol, n-butanol, isobutanol, tert-butanol, sec-butanol, diethylene glycol monomethyl ether, hexamethyldisiloxane, hexaethyldisiloxane, octamethyltrisiloxane, decamethyltetrasiloxane, dodecamethylpentasiloxane, tetradecamethylhexasiloxane, octamethylcyclotetrasiloxane, and octamethylcyclopentasiloxane are particularly preferred.

When using the dry coating method, the surface-treating agent of the present disclosure may be directly subjected to the dry coating method, or may be diluted with the solvent before being subjected to the dry coating method.

A layer of the surface-treating agent is preferably formed such that the surface-treating agent of the present disclosure coexists in the layer with a catalyst for hydrolysis and dehydration condensation. Conveniently, in the case of a wet coating method, the surface-treating agent of the present disclosure is diluted with a solvent, and then, immediately before application to the substrate surface, a catalyst may be added to the diluted solution of the surface-treating agent of the present disclosure. In the case of a dry coating method, the surface-treating agent of the present disclosure to which a catalyst has been added is directly used to a deposition (usually vacuum deposition) treatment, or a pellet-like material may be used to a deposition (usually vacuum deposition) treatment, wherein the pellets are obtained by impregnating a porous body of metal such as iron or copper with the surface-treating agent of the present disclosure to which the catalyst has been added.

As the catalyst, any appropriate acids or bases, transition metals (such as Ti, Ni, Sn, Zr, Al, and B), sulfur-containing compounds or nitrogen-containing compounds having an unshared electron pair in the molecular structure (such as sulfoxide compounds, aliphatic amine compounds, aromatic amine compounds, phosphoric acid amide compounds, amide compounds, and urea compounds), and the like can be used. As the acid catalyst, for example, acetic acid, formic acid, trifluoroacetic acid, hydrochloric acid, nitric acid, sulfuric acid, phosphoric acid, sulfonic acid, methanesulfonic acid, p-toluenesulfonic acid, and the like can be used. Also, as the base catalyst, for example, ammonia, sodium hydroxide, potassium hydroxide, organic amines such as triethylamine and diethylamine, and the like can be used. Examples of the transition metals, aliphatic amine compounds, and aromatic amine compounds include the same as those described above.

The surface-treating layer contained in the article of the present disclosure has both high abrasion durability and fingerprint removability by wiping. In addition, the surface-treating layer may have not only high abrasion durability, but also have, depending on the compositional features of the surface-treating agent used, water-repellency, oil-repellency, antifouling property (for example, preventing fouling such as fingerprints from adhering), waterproof property (preventing water from penetrating into electronic components and the like), surface lubricity (or lubricity, such as removability of fouling including fingerprints by wiping and the like and excellent tactile sensations to the fingers), chemical resistance, and the like, and may be suitably utilized as a functional thin film.

Therefore, the present disclosure further relates to an optical material having the surface-treating layer in the outermost layer.

The optical material preferably includes a wide variety of optical materials, in addition to optical materials relating to displays and the like as exemplified below: for example, displays such as cathode ray tubes (CRTs; for example, PC monitors), liquid crystal displays, plasma displays, organic EL displays, inorganic thin-film EL dot matrix displays, rear projection displays, vacuum fluorescent displays (VFDs), field emission displays (FEDs); protective plates for such displays; and those obtained by performing an antireflection film treatment on their surfaces.

The article of the present disclosure may be, but is not limited to, an optical member. Examples of the optical member include lenses of glasses or the like; front surface protective plates, antireflection plates, polarizing plates, and anti-glare plates for displays such as PDPs and LCDs; touch panel sheets for equipment such as cell phones and portable information terminals; disc surfaces of optical discs such as Blu-ray(R) discs, DVD discs, CD-Rs, and MOs; optical fibers; and display surfaces of watches and clocks.

The article of the present disclosure may be medical equipment or a medical material. The article having a layer that is obtained according to the present disclosure may be an automobile interior or exterior member. Examples of the exterior material include the following: windows, light covers, and external camera covers. Examples of the interior material include the following: instrument panel covers, navigation system touch panels, and decorative interior materials.

The thickness of the layer is not limited. The thickness of the layer in the case of an optical member may be in the range of, for example, 1 to 50 nm, preferably 1 to 30 nm, and more preferably 1 to 15 nm, from the viewpoint of optical performance, abrasion durability, and antifouling property.

As a device for performing X-ray photoelectron spectroscopy for measuring the atomic composition and ratio of constituent atoms in the surface-treating layer, XPS, PHI 5000 VersaProbe II manufactured by ULVAC-PHI, Inc. can be used. The measurement conditions of the XPS analysis can be as follows: the X-ray source is 25 W monochromatic AlKα radiation; the photoelectron detection surface is 1,400 µm × 300 µm; the photoelectron detection angle is in the range of 20° to 90° (for example, 20°, 45°, 90°); the pass energy is 23.5 eV; and gas cluster ion beams, Ar ions, and the like are used for sputtering. With the device and measurement conditions described above, the peak areas of C1s, O1s, and Si2p can be observed, and the atomic ratios of carbon, oxygen, and silicon can be calculated, thereby determining the compositional features of the surface-treating layer and intermediate layer.

It is also possible to perform depth profile analysis. The measurement conditions of the XPS analysis can be as follows: the X-ray source used is 25 W monochromatic AlKα radiation; the photoelectron detection surface is 1,400 µm × 300 µm; the photoelectron detection angle is in the range of 20° to 90° (for example, 20°, 45°, 90°); the pass energy is 23.5 eV; and Ar ions, gas cluster ions, C60 ions, and the like are used as sputtering ions. Etching for 1 to 100 nm by sputtering may be performed, and the compositional features in the coating film at each post-etching depth may be obtained.

By adjusting the photoelectron detection angle of the XPS analysis, the detection depth can be appropriately adjusted. For example, a shallow angle close to 20 degrees allows a detection depth of about 3 nm, while a deep angle close to 90 degrees allows a detection depth of about 10 nm.

The silicon oxide-containing intermediate layer described above can be formed by applying a silicon oxide precursor to the surface of the substrate. When the intermediate layer comprises an alkali metal, the intermediate layer can be formed by applying a composition containing a silicon oxide precursor and an alkali metal source to the surface of the substrate.

Examples of the silicon oxide precursor include silicic acid, a partially condensed product of silicic acid, an alkali metal silicate, a silane compound having a hydrolyzable group bonded to a silicon atom, and a partially hydrolyzed condensate of the silane compound. Silicic acid or its partially condensed product can be dehydration-condensed to silicon oxide, and an alkali metal silicate can be made into silicic acid or its partially condensed product with an acid or cation exchange resin, and the produced silicic acid or its partially condensed product can be dehydration-condensed to silicon oxide. Examples of the hydrolyzable group in the silane compound having a hydrolyzable group bonded to a silicon atom include an alkoxy group and a chlorine atom. The hydrolyzable group in the silane compound can be hydrolyzed to form a hydroxyl group, and the produced silanol compound can be dehydration-condensed to form silicon oxide. Examples of the silane compound having a hydrolyzable group bonded to a silicon atom include an alkoxysilane such as tetraalkoxysilane and alkyltrialkoxysilane, and tetrachlorosilane.

Examples of the alkali metal source include an alkali metal hydroxide and a water-soluble alkali metal salt. Examples of the water-soluble alkali metal salt include an alkali metal carbonate, an alkali metal bicarbonate, an alkali metal hydrochloride, and an alkali metal nitrate. As the alkali metal source, an alkali metal hydroxide and an alkali metal carbonate are preferred.

The alkali metal silicate can be used both as the silicon oxide precursor and as the alkali metal source. The alkali metal silicate can be converted to silicon oxide via silicic acid, during which a small amount of alkali metal may remain in the produced silicon oxide. Accordingly, the amount of remaining alkali metal can be adjusted to obtain silicon oxide containing a predetermined amount of alkali metal atoms.

The thickness of the intermediate layer is not limited, and for example, it is in the range of 1 to 50 nm, preferably 1 to 30 nm, more preferably 2 to 15 nm, and still more preferably 3 to 10 nm.

Up to now, the compound, composition, and article of the present disclosure have been described in detail. The compound, composition, article, and the like of the present disclosure are not limited to those exemplified above.

### Examples

Hereinafter, the present disclosure will now be described with reference to, but is not limited to, the following Examples.

### Synthetic Example 1

Stearoyl chloride (5 g), allylamine (2.5 mL), and dichloromethane (15 mL) were mixed and stirred at room temperature overnight. The mixed solution was diluted with dichloromethane, washed with hydrochloric acid and water, and then concentrated under reduced pressure to obtain C₁₇H₃₅-CONHCH₂CH=CH₂ (5.0 g).
1H NMR (CDCl3, 400 MHz) δ [ppm]: 0.85-0.88 (m, 3H), 1.23-27 (m, 28H), 1.60-1.70 (m, 2H), 2.15-2.22 (m, 2H), 3.85-3.89 (m,2H), 5.01-5.15 (m, 2H), 5.78-5.86 (m, 1H).

C₁₇H₃₅-CONHCH₂CH=CH₂ (5 g), toluene (70 mL), a solution of Karstedt's catalyst in xylene (2%, 3.5 mL), aniline (0.5 g), and trimethoxysilane (5.9 mL) were mixed and stirred at room temperature overnight, and then concentrated under reduced pressure to obtain C₁₇H₃₅-CONH-CH₂CH₂CH₂Si(OCH₃)₃ (compound a-1, 6.3 g).
Compound a-1
1H NMR (CDCl3, 400 MHz) δ [ppm]: 0.53-0.65 (m, 2H) 0.85-0.91 (m, 3H), 1.24-27 (m, 28H), 1.60-1.648 (m, 4H), 2.12-2.24 (m, 2H), 3.21-3.26 (m, 2H) 3.56-3.60 (m, 9H)

### Synthetic Example 2

Stearoyl chloride (5 g), diallylamine (3.2 g), and dichloromethane (15 mL) were mixed and stirred at room temperature overnight. The mixed solution was diluted with dichloromethane, washed with hydrochloric acid and water, and then concentrated under reduced pressure to obtain C₁₇H₃₅-CON (CH₂CH=CH₂)₂ (4.8 g).
1H NMR (CDCl3, 400 MHz) δ [ppm]: 0.81-0.83 (m, 3H), 1.21-24 (m, 28H), 1.54-1.60 (m, 2H), 2.24-2.27 (m, 2H), 3.82-3.94 (m,4H), 5.05-5.23 (m, 4H), 5.68-5.84 (m, 2H)

C₁₇H₃₅-CON(CH₂CH=CH₂)₂ (3 g), toluene (20 mL), a solution of Karstedt's catalyst in xylene (2%, 1.8 mL), aniline (0.3 g), and trimethoxysilane (6.3 mL) were mixed and stirred at room temperature overnight, and then concentrated under reduced pressure to obtain C₁₇H₃₅-CON{CH₂CH₂CH₂Si(OCH₃)₃}₂ (compound a-2, 5.2 g).
Compound a-2
1H NMR (CDCl3, 400 MHz) δ [ppm]: 0.52-0.67 (m, 4H), 0.83-0.92 (m, 3H), 1.22-26 (m, 28H), 1.56-1.65 (m, 6H), 2.20-2.26(m, 2H), 3.15-3.27 (m,4H), 3.53-3.67 (m, 18H),

### Synthetic Example 3

Stearoyl chloride (5 g), 2,2-diallyl-4-penten-1-amine (5.5 g), and dichloromethane (15 mL) were mixed and stirred at room temperature overnight. The mixed solution was diluted with dichloromethane, washed with hydrochloric acid and water, and then concentrated under reduced pressure to obtain C₁₇H₃₅-CONHCH₂(CH₂CH=CH₂)₃ (7.0 g).
1H NMR (CDCl3, 400 MHz) δ [ppm]: 0.84-0.88 (m, 3H), 1.23-27 (m, 28H), 1.57-59 (m, 2H), 2.24-2.27 (m, 2H), 3.82-3.94 (m,4H) 5.05-5.14 (m, 6H), 5.51-5.60 (m, 1H), 5.80-5.93 (m, 3H)

C₁₇H₃₅-CONHCH₂(CH₂CH=CH₂)₃ (3.5 g), toluene (40 mL), a solution of Karstedt's catalyst in xylene (2%, 1.8 mL), aniline (0.3 mL), and trimethoxysilane (2.1 mL) were mixed. The mixture was stirred at room temperature overnight and then concentrated under reduced pressure to obtain C₁₇H₃₅-CONH-CH₂C{CH₂CH₂CH₂Si(OCH₃)₃}₃ (compound a-3, 7 g).
Compound a-3
1H NMR (CDCl3, 400 MHz) δ [ppm]: 0.43-0.6 (m, 6H),0.83-0.85 (m, 3H), 1.24-27 (m, 28H), 1.59-1.648 (m, 8H), 2.11-2.32 (m, 2H), 3.08-3.19 (m, 6H) 3.53-3.56 (m, 9H)

### Synthetic Example 4

Tricosanoic acid (2.16 g), allylamine (1.47 g), 1-(3-dimethylaminopropyl)-3-ethylcarbodiimide hydrochloride (1.85 g), 4-dimethylaminopyridine (83.2 mg), and dichloromethane (21.6 g) were mixed and stirred at room temperature overnight. The mixed solution was diluted with dichloromethane, washed with hydrochloric acid and water, and then concentrated under reduced pressure to obtain CH₃(CH₂)₂₁CONHCH₂CH=CH₂ (1.39 g).
1H NMR (CDCl3, 400 MHz) δ [ppm]: 0.86-0.90 (m), 1.25-1.29 (m), 1.62-1.67 (m), 2.17-2.21 (m), 3.87-3.91 (m) 3.87-3.91 (m), 5.12-5.21 (m), 5.44 (m), 5.79-5.89 (m)

1.0 g of CH₃(CH₂)₂₁CONHCH₂CH=CH₂ obtained as described above, 3.0 g of toluene, 0.1 mL of pyridine, and a solution of Karstedt's catalyst in xylene (2%, 0.3 mL) were each added, 1.0 mL of trimethoxysilane was then charged, and the mixture was stirred at room temperature overnight. Thereafter, purification was performed, thereby obtaining CH₃(CH₂)₂₁CONHCH₂CH₂CH₂Si(OCH₃)₃ (compound a-4, 1.10 g), which has a trimethoxysilyl group at an end.
Compound a-4
1H NMR (CDCl3, 400 MHz) δ [ppm]: 0.014-0.146 (m), 0.49-0.59 (m), 0.63-0.69 (m), 0.86-0.95 (m), 1.16-1.40 (m), 1.47-1.67 (m), 2.12-2.17 (m), 3.19-3.27 (m), 3.57-3.64 (m)

### Synthetic Example 5

Stearylamine (2.02 g), (3-isocyanatopropyl) trimethoxysilane (1.70 mL), and dichloromethane (14.8 mL) were mixed and stirred at room temperature overnight. Thereafter, the mixture was concentrated under reduced pressure to obtain CH₃(CH₂)₁₇NHCONHCH₂CH₂CH₂Si(OCH₃)₃ (compound a-5, 3.3 g).
Compound a-5
1H NMR (CDCl3, 400 MHz) δ [ppm]: 0.62-0.71 (m), 0.86-0.89 (t), 1.21-1.28 (m), 1.46-1.49 (m), 1.54-1.65 (m), 3.13-3.15 (m), 3.48-3.58 (m)

### Synthetic Example 6

Stearyl alcohol (2.00 g), (3-isocyanatopropyl)trimethoxysilane (1.70 mL), dibutyltin dilaurate (58.9 mg), and dichloromethane (14.8 mL) were mixed and stirred at room temperature overnight. Thereafter, the mixture was concentrated under reduced pressure and washed with hexamethyldisiloxane to obtain CH₃(CH₂)₁₇OCONHCH₂CH₂CH₂Si(OCH₃)₃ (compound a-6, 3.0 g).
Compound a-6
1H NMR (CDCl3, 400 MHz) δ [ppm]: 0.61-0.70 (m), 0.85-0.88 (t), 1.21-1.28 (m), 1.56-1.64 (m), 3.10-3.16 (m), 3.47-3.73 (m), 4.00-4.03 (t)

### Synthetic Example 7

To 2-hexadecyloctadecanoic acid (1 g) were added thionyl chloride (2.8 g) and dimethylformamide (1 drop), and the mixture was stirred at 60°C for 2 hours and then concentrated under reduced pressure. To the residue were added toluene (10 mL), triethylamine (0.22 g), and bis[3-(trimethoxysilyl)propyl]amine (0.74 g), and the mixture was stirred for 18 hours. Chloroform was added, and after washing with water three times, the organic layer was dried over anhydrous sodium sulfate, filtered, and concentrated under reduced pressure to obtain {CH₃(CH₂)₁₅}₂CCONHCH₂CH₂CH₂Si(OCH₃)₃ (compound a-7, 1.44 g, colorless liquid).
Compound a-7
1H NMR (CDCl3, 400 MHz) δ [ppm]: 0.56-0.62 (m, 4H), 0.88 (t, 6H, J = 6.9 Hz), 1.24-1.32 (m, 56H), 1.59-1.74 (m, 8H), 2.47-2.54 (m, 1H), 3.23 (t, 2H, J = 7.8 Hz), 3.30 (t, 2H, J = 7.5 Hz), 3.55 (s, 9H), 3.58 (s, 9H)

### Synthetic Example 8

R-COOH (7.2 g), allylamine (0.4 g), 1-(3-dimethylaminopropyl)-3-ethylcarbodiimide hydrochloride (1.36 g), 4-dimethylaminopyridine (60 mg), and dichloromethane (30 mL) were mixed and stirred at room temperature overnight. The mixed solution was diluted with dichloromethane, washed with hydrochloric acid and water, and then concentrated under reduced pressure to obtain R-CONHCH₂CH=CH₂ (7.0 g). R is (CH₃)₃Si-(OSi(CH₃)₂)ₙ-(CH₂)₁₀-. The average value of the number of repeating units, n, is 19.
1H NMR (CDCl3, 400 MHz) δ [ppm]: -0.01-0.30 (m), 0.49-0.53 (m, 2H), 1.20-1.40 (m, 14H), 1.55-1.68 (m, 2H), 2.13-2.35 (m, 2H) 3.86-3.89 (m, 2H), 5.05-5.23 (m, 2H), 5.68-5.84 (m, 1H).

R-CONHCH₂CH=CH₂ (5 g), toluene (20 mL), a solution of Karstedt's catalyst in xylene (2%, 0.7 mL), aniline (0.12 g), and trimethoxysilane (1.20 mL) were mixed and stirred at room temperature overnight, and then concentrated under reduced pressure to obtain R-CONH-CH₂CH₂CH₂Si(OCH₃)₃ (compound b-1, 4.7 g). R is (CH₃)₃Si-(OSi(CH₃)₂)ₙ-(CH₂)₁₀-. The average value of the number of repeating units, n, is 19.
Compound b-1
1H NMR (CDCl3, 400 MHz) δ [ppm]: -0.01-0.30 (m), 0.509-0.55 (m, 2H), 1.23-1.44 (m, 14H), 1.49-1.60 (m, 4H), 2.13-2.35 (m, 2H), 3.17-3.25 (m, 2H), 3.55-59 (m, 9H).

### Synthetic Example 9

R-COOH (10 g), diallylamine (2.01 g), 1-(3-dimethylaminopropyl)-3-ethylcarbodiimide hydrochloride (1.98 g), 4-dimethylaminopyridine (84 mg), and dichloromethane (30 mL) were mixed and stirred at room temperature overnight. The mixed solution was diluted with dichloromethane, washed with hydrochloric acid and water, and then concentrated under reduced pressure to obtain R-CON(CH₂CH=CH₂)₂ (9.00 g). R is (CH₃)₃Si-(OSi(CH₃)₂)ₙ-(CH₂)₁₀-. The average value of the number of repeating units, n, is 19.
1H NMR (CDCl3, 400 MHz) δ [ppm]: -0.25-0.30 (m), 1.45-1.59 (m, 2H), 1.20-1.40(m, 14H), 1.55-1.68 (m, 2H), 2.30 (t, 2H, 7.2Hz), 3.86 (d, 2H, 5.2Hz), 3.98 (d,2H, 6.0Hz), 5.05-5.23 (m, 4H), 5.68-5.84 (m, 2H).
13C NMR (CDCl3, 133 MHz) δ [ppm]: 0.2, 1.0, 1.8, 18.3, 23.2, 25.4, 29.4, 29.5, 29.6, 33.1, 33.5, 47.8, 49.1, 116.5, 117.0, 133.0, 133.5, 173.2.

R-CON(CH₂CH=CH₂)₂ (2 g), toluene (10 mL), a solution of Karstedt's catalyst in xylene (2%, 0.20 mL), aniline (32 mg), and trimethoxysilane (1.00 mL) were mixed and stirred at room temperature overnight, and then concentrated under reduced pressure to obtain R-CON{CH₂CH₂CH₂Si(OCH₃)₃}₂ (compound b-2, 2.23 g). R is (CH₃)₃Si-(OSi(CH₃)₂)ₙ-(CH₂)₁₀-. The average value of the number of repeating units, n, is 19.
Compound b-2
1H NMR (CDCl3, 400 MHz) δ [ppm]: -0.20-0.31 (m), 0.42-0.65 (m, 6H), 1.10-1.40(m, 14H), 1.63-1.71 (m, 6H), 2.26 (t, 2H, 7.2 Hz), 3.19 (t, 2H, 7.6 Hz), 3.27(t, 2H, 7.6 Hz), 3.45-3.65 (m, 18H).
13C NMR (CDCl3, 133 MHz) δ [ppm]: 0.2, 1.0, 1.7, 6.3, 6.4, 18.2, 20.8, 22.3, 23.2, 25.6, 29.4, 29.5, 29.6, 33.2, 33.4, 48.2, 50.2, 50.48, 50.53, 172.8

### Synthetic Example 10

R-COOH (10 g), 2,2-diallyl-4-penten-1-amine (1.71 g), 1-(3-dimethylaminopropyl)-3-ethylcarbodiimide hydrochloride (1.98 g), 4-dimethylaminopyridine (84 mg), and dichloromethane (30 mL) were mixed and stirred at room temperature overnight. The mixed solution was diluted with dichloromethane, washed with hydrochloric acid and water, and then concentrated under reduced pressure to obtain R-CONHCH₂C(CH₂CH=CH₂)₃ (8.88 g). R is (CH₃)₃Si-(OSi(CH₃)₂)ₙ-(CH₂)₁₀-. The average value of the number of repeating units, n, is 19.
1H NMR (CDCl3, 400 MHz) δ [ppm]: -0.20-0.25 (m), 1.45-1.59 (m, 2H), 1.20-1.48(m, 14H), 1.53-1.65 (m, 2H), 2.03 (d, 2H, 7.6Hz), 2.16 (t, 2H, 7.6Hz), 3.20 (d,2H, 6.4Hz), 5.05-5.14 (m, 6H), 5.51-5.60 (m, 1H), 5.80-5.93 (m, 3H).
13C NMR (CDCl3, 133 MHz) δ [ppm]: 0.2, 1.0, 1.8, 18.3, 23.2, 29.3, 29.4, 29.6, 30.3, 33.5, 37.1, 40.0, 40.1, 45.0, 118.1, 134.2, 172.9.

R-CONH-CH₂C(CH₂CH=CH₂)₃ (2 g), toluene (10 mL), a solution of Karstedt's catalyst in xylene (2%, 0.29 mL), aniline (46 mg), and trimethoxysilane (1.43 mL) were mixed. The mixture was stirred at room temperature overnight and then concentrated under reduced pressure to obtain R-CONH-CH₂C{CH₂CH₂CH₂Si(OCH₃)₃}₃ (compound b-3, 2.21 g). R is (CH₃)₃Si-(OSi(CH₃)₂)ₙ-(CH₂)₁₀-. The average value of the number of repeating units, n, is 19.
Compound b-3
1H NMR (CDCl3, 400 MHz) δ [ppm]: -0.2-0.21 (m), 0.41-0.65 (m, 8H), 1.10-1.50 (m,26H), 1.55-1.65 (m, 2H), 2.14 (t, 2H, 7.2 Hz), 3.09 (d, 2H, 6.0 Hz), 3.45-3.62(m, 27H), 5.67-5.75 (m, 1H)
13C NMR (CDCl3, 133 MHz) δ [ppm]: 0.1, 1.0, 1.7, 9.5, 16.1, 18.2, 23.2, 26.0, 29.4, 29.4, 29.6, 30.2, 33.4, 37.0, 38.1, 39.1, 43.6, 50.4, 173.0.

### Synthetic Example 11

0.21 g of methyl 10-methylundecanoate, 0.96 g of toluene, 0.1 mL of pyridine, and a solution of Karstedt's catalyst in xylene (2%, 0.2 mL) were each added, 8.33 g of CH₃CH₂CH₂CH₂(Si(CH₃)₂O)ₙSi(CH₃)₂H was then charged, and the mixture was stirred at room temperature overnight. Thereafter, purification was performed, thereby obtaining a polydimethylsiloxane group-containing compound CH₃CH₂CH₂CH₂(Si(CH₃)₂O)ₙSi(CH₃)₂(CH₂)₁₀COOMe (8.18 g). The average value of the number of repeating units, n, is 60.
1H NMR (CDCl3, 400 MHz) δ [ppm]: -0.10-0.31 (m), 0.51-0.57 (m), 0.87-0.91 (t), 1.24-1.36 (m), 1.61-1.65 (m), 2.29-2.32 (t)

2.50 g of CH₃CH₂CH₂CH₂(Si(CH₃)₂O)ₙSi(CH₃)₂(CH₂)₁₀COOMe obtained as described above, 0.24 g of 1,5,7-triazabicyclo[4.4.0]dec-5-ene, and 1.06 g of allylamine were mixed and stirred at 80°C for 4 hours. Thereafter, by washing with hydrochloric acid and water and then concentrating under reduced pressure, CH₃CH₂CH₂CH₂(Si(CH₃)₂O)ₙSi(CH₃)₂(CH₂)₁₀CONHCH₂CH=CH₂ (2.24 g) was obtained. The average value of the number of repeating units, n, is 60.
1H NMR (CDCl3, 400 MHz) δ [ppm]: -0.08-0.22 (m), 0.52-0.56 (m), 0.87-0.90 (t), 1.23-1.32 (m), 1.59-1.72 (m), 2.17-2.21 (t), 3.88-3.91 (t), 5.12-5.20 (m), 5.80-5.89 (m)

2.0 g of CH₃CH₂CH₂CH₂(Si(CH₃)₂O)ₙSi(CH₃)₂(CH₂)₁₀CONHCH₂CH=CH₂ obtained as described above, 2.0 g of toluene, 0.1 mL of pyridine, and a solution of Karstedt's catalyst in xylene (2%, 0.2 mL) were each added, 0.5 mL of trimethoxysilane was then charged, and the mixture was stirred at room temperature overnight. Thereafter, purification was performed, thereby obtaining CH₃CH₂CH₂CH₂(Si(CH₃)₂O)ₙSi(CH₃)₂(CH₂)₁₀CONHCH₂CH₂CH₂Si(CH₃)₃ (compound b-4, 1.93 g), which has a trimethoxysilyl group at an end. The average value of the number of repeating units, n, is 60.
Compound b-4
1H NMR (CDCl3, 400 MHz) δ [ppm]: -0.11-0.22 (m), 0.52-0.59 (m), 0.63-0.67 (m), 0.87-0.90 (t), 1.26-1.33 (m), 1.62 (m), 2.13-2.17 (t), 3.54-3.62 (m)

### Synthetic Example 12

R-CH₂OH (201 g, Shin-Etsu Chemical Co., Ltd., X-22-170DX), acetone (400 mL), and a saturated aqueous sodium bicarbonate solution (100 mL) were mixed and cooled to 0°C with ice water. While stirring the mixed solution at 0°C, potassium bromide (1.02 g) and TEMPO (0.210 g) were added. After stirring for 10 minutes, trichloroisocyanuric acid (19.9 g) was added. The temperature was raised to room temperature spontaneously and the mixed solution was stirred overnight. Isopropyl alcohol (200 mL) was added to the mixed solution, and the volatile components were concentrated under reduced pressure. Water (300 mL) was added to the concentrated liquid, extraction was performed with dichloromethane, drying was performed, and then the solvent was distilled off under reduced pressure to obtain R-COOH (180 g).

R is CH₃CH₂CH₂CH₂Si(CH₃)₂-(OSi(CH₃)₂)ₙ-(CH₂)₃-OCH₂-. The average value of the number of repeating units, n, is 57.
¹H NMR (CDCl₃, 400 MHz) δ [ppm]: -0.11-0.27 (m), 0.52-0.58 (m, 4H), 0.89 (t, J = 7.1 Hz, 3H), 1.28-1.33 (m, 4H), 1.66-1.70 (m, 2H), 3.54 (t, J = 6.9 Hz, 2H), 4.11 (s, 2H)

R-COOH (2.04 g) obtained as described above, allylamine (0.11 mL), 1-(3-dimethylaminopropyl)-3-ethylcarbodiimide hydrochloride (0.30 g), 4-dimethylaminopyridine (6 mg), and dichloromethane (4.0 g) were mixed and stirred at room temperature overnight. The mixed solution was diluted with dichloromethane, washed with hydrochloric acid and water, and then concentrated under reduced pressure to obtain R-CONHCH₂CH₂CH=CH₂ (1.50 g). R is CH₃CH₂CH₂CH₂Si(CH₃)₂-(OSi(CH₃)₂)ₙ-(CH₂)₃-OCH₂-, and the average value of the number of repeating units, n, is 57.
¹H NMR (CDCl₃, 400 MHz) δ [ppm]: -0.01-0.22 (m), 0.52-0.89 (m), 0.86 (t), 1.25-1.33 (m), 1.60-1.69 (m), 3.46-3.49 (t), 3.91-3.95 (m), 5.14-5.23 (m), 5.80-5.91 (m), 6.65 (brs)

The obtained R-CONHCH₂CH₂CH=CH₂ (1.4 g), toluene (1.4 g), a solution of Karstedt's catalyst in xylene (2%, 0.2 mL), pyridine (0.1 mL), and trimethoxysilane (0.13 mL) were mixed. The mixture was stirred at room temperature overnight and then concentrated under reduced pressure to obtain R-CONH-CH₂CH₂CH₂Si(OCH₃)₃ (compound b-5, 1.52 g). R is CH₃CH₂CH₂CH₂Si(CH₃)₂(OSi(CH₃)₂)ₙ-(CH₂)₃-OCH₂-, and the average value of the number of repeating units, n, is 57.
Compound b-5
¹H NMR (CDCl₃, 400 MHz) δ [ppm]: -0.01-0.22 (m), 0.51-0.59 (m), 0.88 (t), 1.25-1.34 (m), 1.55-1.68 (m), 3.54-3.64 (m)

### Synthetic Example 13

R-COOH (2.11 g) obtained in Synthetic Example 12, diallylamine (0.18 mL), 1-(3-dimethylaminopropyl)-3-ethylcarbodiimide hydrochloride (0.14 g), 4-dimethylaminopyridine (6 mg), and dichloromethane (4.0 g) were mixed and stirred at room temperature overnight. The mixed solution was diluted with dichloromethane, washed with hydrochloric acid and water, and then concentrated under reduced pressure to obtain R-CON(CH₂CH=CH₂)₂ (1.88 g). R is CH₃CH₂CH₂CH₂Si(CH₃)₂-(OSi(CH₃)₂)ₙ-(CH₂)₃-OCH₂-, and the average value of the number of repeating units, n, is 57.
¹H NMR (CDCl₃, 400 MHz) δ [ppm]: -0.08-0.30 (m), 0.51-0.56 (m), 0.88 (t), 1.25-1.35 (m), 1.61-1.67 (m), 3.47 (t), 3.91-3.99 (m), 4.14 (s), 5.12-5.21 (m), 5.71-5.81 (m)

The obtained R-CON(CH₂CH=CH₂)₂ (1.70 g), toluene (1.70 g), a solution of Karstedt's catalyst in xylene (2%, 0.2 mL), pyridine (0.1 mL), and trimethoxysilane (0.32 mL) were mixed. The mixture was stirred at room temperature overnight and then concentrated under reduced pressure to obtain R-CON{CH₂CH₂CH₂Si(OCH₃)₃}₂ (compound b-6, 1.97 g). R is CH₃CH₂CH₂CH₂Si(CH₃)₂(OSi(CH₃)₂)ₙ-(CH₂)₃-OCH₂-, and the average value of the number of repeating units, n, is 57.
Compound b-6
¹H NMR (CDCl₃, 400 MHz) δ [ppm] : -0.11-0.22 (m), 0.49-0.62 (m), 0.88 (t), 1.25-1.37 (m), 1.62-1.66 (m), 3.54-3.62 (m)

### Synthetic Example 14

R-COOH (10 g) obtained as described above, 2,2-diallyl-4-penten-1-amine (1.71 g), 1-(3-dimethylaminopropyl)-3-ethylcarbodiimide hydrochloride (1.98 g), 4-dimethylaminopyridine (84 mg), and dichloromethane (30 mL) were mixed and stirred at room temperature overnight. The mixed solution was diluted with dichloromethane, washed with hydrochloric acid and water, and then concentrated under reduced pressure to obtain R-CONH-CH₂C(CH₂CH=CH₂)₃ (8.88 g). R is CH₃CH₂CH₂CH₂Si(CH₃)₂-(OSi(CH₃)₂)ₙ-(CH₂)₃-OCH₂-, and the average value of the number of repeating units, n, is 57.
¹H NMR (CDCl₃, 400 MHz) δ [ppm]: -0.10-0.30 (m), 0.52-0.59 (m, 4H), 0.88 (t, J = 6.9 Hz, 3H), 1.26-1.33 (m, 4H), 1.61-1.69 (m, 2H), 2.05 (d, J = 7.3 Hz, 6H), 3.22 (d, J = 6.4 Hz, 2H), 3.47 (t, J = 6.6 Hz, 2H), 3.93 (s, 2H), 5.08-5.13 (m, 6H), 5.82-5.92 (m, 3H), 6.75 (brs, 1H)

The obtained R-CONH-CH₂C(CH₂CH=CH₂)₃ (5 g), toluene (5 mL), a solution of Karstedt's catalyst in xylene (2%, 0.24 mL), aniline (38 mg), and trimethoxysilane (1.19 mL) were mixed. The mixture was stirred at room temperature overnight and then concentrated under reduced pressure to obtain R-CONH-CH₂C{CH₂CH₂CH₂Si(OCH₃)₃}₃ (compound b-7, 4.8 g). R is CH₃CH₂CH₂CH₂Si(CH₃)₂(OSi(CH₃)₂)ₙ-(CH₂)₃-OCH₂-, and the average value of the number of repeating units, n, is 57.
Compound b-7
¹H NMR (CDCl₃, 400 MHz) δ [ppm]: -0.13-0.32 (m), 0.54-0.63 (m, 10H), 0.90 (t, J = 7.1 Hz, 3H), 1.23-1.37 (m, 16H), 1.62-1.69 (m, 2H), 3.17 (d, J = 5.9 Hz, 2H), 3.47-3.50 (m, 2H), 3.56-3.63 (m, 27H), 3.94 (s, 2H), 6.54 (brs, 1H)

### Synthetic Example 15

3.02 g of 22-tricosenoic acid, 26 mL of toluene, and 17 mL of methanol were each added, 20 mL of trimethylsilyldiazomethane was then added dropwise, and the mixture was stirred at room temperature for 3 hours. Thereafter, the mixture was concentrated under reduced pressure to obtain 3.11 g of CH₂=CH(CH₂)₂₀COOMe.
1H NMR (CDCl3, 400 MHz) δ [ppm]: 1.249-1.649 (m), 2.005-2.061 (m), 2.279-2.316 (t), 1.567-1.622 (m), 3.662 (s), 4.904-5.015 (m), 5.760-5.862 (m)

After adding 0.897 g of the compound obtained as described above, CH₂=CH(CH₂)₂₀COOMe, 5.0 mL of toluene, and 0.158 g of a solution of Karstedt's catalyst in xylene, the mixture was cooled in an ice bath, and 0.7 mL of 1,1,1,3,3-pentamethyldisiloxane was added dropwise. By stirring at 60°C for 7 hours and then performing purification, 1.17 g of Si(CH₃)₃OSi(CH₃)₂(CH₂)₂₂COOMe was obtained.
1H NMR (CDCl3, 400 MHz) δ [ppm]: 0.028-0.120 (m), 0.483-0.522 (t), 1.229-1.258 (m), 1.256-1.285 (m), 1.601-1.638 (m), 2.267-2.322 (t), 3.667 (s)

0.86 g of the compound obtained as described above, Si(CH₃)₃OSi(CH₃)₂(CH₂)₂₂COOMe, 1.0 mL of toluene, 0.60 g of allylamine, and 0.252 g of 1,5,7-triazabicyclo[4.4.0]dec-5-ene were each added, and the mixture was then stirred at 75°C for 6 hours. Thereafter, by washing with an aqueous hydrochloric acid solution, dehydration treatment over magnesium sulfate, and concentration under reduced pressure, Si(CH₃)₃OSi(CH₃)₂(CH₂)₂₂CONHCH₂CH=CH₂ (0.79 g) was obtained.
¹H NMR (CDCl₃, 400 MHz) δ [ppm]: 0.011-0.123 (m), 0.478-0.517 (m), 1.203-1.368 (m), 1.598-1.671 (m), 2.168-2.206 (t), 3.872-3.901 (t), 5.115-5.205(m), 5.479(s), 5.792-5.889 (m)

0.79 g of the compound obtained as described above, Si(CH₃)₃OSi(CH₃)₂(CH₂)₂₂CONHCH₂CH=CH₂, 15.0 mL of toluene, 0.05 mL of pyridine, and 0.6 mL of a solution of Karstedt's catalyst in xylene were each added, 1.0 mL of trimethoxysilane was then charged, and the mixture was stirred at room temperature overnight. Thereafter, purification was performed, thereby obtaining Si(CH₃)₃OSi(CH₃)₂(CH₂)₂₂CONHCH₂CH₂CH₂Si(OCH₃)₃ (compound b-8, 0.91 g), which has a trimethoxysilyl group at an end.
Compound b-8
¹H NMR (CDCl₃, 400 MHz) δ [ppm]: 0.005-0.202 (m), 0.472-0.591 (m), 0.623-0.664 (m), 1.245-1.282 (m), 1.576-1.669 (m), 2.119-2.158 (t), 3.216-3.265 (m), 3.534-3.614 (m)

### Synthetic Example 16

0.84 g of triethylsilanol, 0.22 g of 1,5,7-triazabicyclo[4.4.0]dec-5-ene, and 50 mL of tetrahydrofuran were each added, 23.5 mL of 2,2,5,5-tetramethyl-1,2,5-oxadisilolane was then charged, and the mixture was stirred at 30°C for 3 hours. 2.96 g of pyridine and 5.21 g of methyl 5-(chlorodimethylsilyl)pentanoate were added, and the mixture was stirred at room temperature for 12 hours, then washed with a saturated sodium bicarbonate aqueous solution, and purified by a silica gel column, thereby obtaining (CH₃CH₂)₃SiO(Si(CH₃)₂CH₂CH₂Si(CH₃)₂O)ₙSi(CH₃)₂CH₂CH₂CH₂CH₂COOMe (3.35 g). The average value of the number of repeating units, n, is 20.
1H NMR (CDCl3, 400 MHz) δ [ppm]: -0.04-0.19 (m), 0.36-0.44 (m), 0.47-0.59 (m), 0.90-94 (t), 1.30-1.44 (m), 1.61-1.69 (m), 2.29-2.34 (m), 3.66-3.67 (m)

3.0 g of (CH₃CH₂)₃SiO(Si(CH₃)₂CH₂CH₂Si(CH₃)₂O)ₙSi(CH₃)₂CH₂CH₂CH₂CH₂COOMe obtained as described above, 6 g of tetrahydrofuran, 25 g of water, and lithium hydroxide were mixed, and the mixture was stirred at 50°C overnight. Thereafter, by washing with hydrochloric acid and concentrating under reduced pressure, (CH₃CH₂)₃SiO(Si(CH₃)₂CH₂CH₂Si(CH₃)₂O)ₙSi(CH₃)₂CH₂CH₂CH₂CH₂COOH was obtained. Subsequently, 1.28 g of 4-[2,2-di(2-propylenyl)]pentenylamine, 1.49 g of 1-(3-dimethylaminopropyl)-3-ethylcarbodiimide hydrochloride, and 6.5 g of dichloromethane were each mixed, and the mixture was stirred at room temperature overnight. Thereafter, purification was performed, thereby obtaining (CH₃CH₂)₃SiO(Si(CH₃)₂CH₂CH₂Si(CH₃)₂O)ₙSi(CH₃)₂CH₂CH₂CH₂CH₂CONHCH ₂C(CH₂CH=CH₂)₃ (3.23 g). The average value of the number of repeating units, n, is 60.
1H NMR (CDCl3, 400 MHz) δ [ppm]: -0.05-0.05 (m), 0.34-0.40 (m), 0.43-0.51 (m), 0.87-0.90 (t), 1.07-1.15 (m), 1.18-1.35 (m), 1.58-1.77 (m), 2.14-2.20 (m), 2.24-2.32 (m), 5.01-5.08 (m), 5.74-5.88 (m)

1.01 g of the compound obtained as described above, (CH₃CH₂)₃SiO(Si(CH₃)₂CH₂CH₂Si(CH₃)₂O)ₙSi(CH₃)₂CH₂CH₂CH₂CH₂CONHCH ₂C(CH₂CH=CH₂)₃, 1.74 g of toluene, 0.05 mL of pyridine, and 0.10 g of a solution of Karstedt's catalyst in xylene were each added, 0.4 mL of trimethoxysilane was then charged, and the mixture was stirred at room temperature overnight. Thereafter, purification was performed, thereby obtaining (CH₃CH₂)₃SiO(Si(CH₃)₂CH₂CH₂Si(CH₃)₂O)ₙSi(CH₃)₂CH₂CH₂CH₂CH₂CONHCH ₂C(CH₂CH₂CH₂Si(OCH₃)₃)₃ (compound c-1, 1.08 g), which has a trimethoxysilyl group at an end.
Compound c-1
1H NMR (CDCl3, 400 MHz) δ [ppm]: -0.06-0.18 (m), 0.36-0.47 (m), 0.49-0.62 (m), 0.90-0.94 (t), 1.15-1.40 (m), 1.62-1.80 (m), 2.14-2.23 (m), 3.48-3.62 (m)

### Synthetic Example 17

3.02 g of 22-tricosenoic acid, 26 mL of toluene and 17 mL of methanol were each added, 20 mL of trimethylsilyldiazomethane was then added dropwise, and the mixture was stirred at room temperature for 3 hours. Thereafter, the mixture was concentrated under reduced pressure to obtain 3.11 g of the following compound. 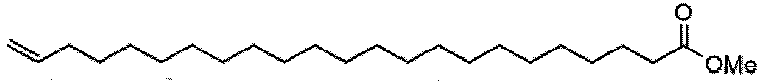 1H NMR (CDCl3, 400 MHz) δ [ppm]: 1.249-1.649 (m), 2.005-2.061 (m), 2.279-2.316(t), 1.567-1.622 (m), 3.662 (s), 4.904-5.015 (m), 5.760-5.862 (m)

0.50 g of the compound obtained as described above, 10.0 mL of toluene, 0.05 mL of pyridine, and 0.3 mL of a xylene solution containing a Pt complex of 1,3-divinyl-1,1,3,3-tetramethyldisiloxane at 2% were each added, and 1.2 mL of 1,1,1,3,5,5,5-heptamethyltrisiloxane was then added dropwise. By stirring at room temperature for 17 hours and then performing purification, 0.87 g of the following compound was obtained. 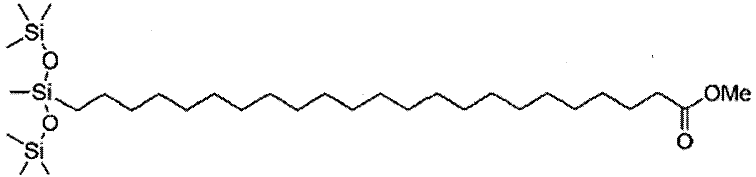 1H NMR (CDCl3, 400 MHz) δ [ppm]: 0.033-0.241 (m), 0.438-0.550 (m), 1.191-1.413(m), 1.607-1.642 (m), 2.242-2.325 (m), 3.669 (s)

0.86 g of the compound obtained as described above, 5.0 mL of allylamine, and 0.20 g of 1,5,7-triazabicyclo[4.4.0]dec-5-ene were each added, and the mixture was then stirred at 75°C for 3 hours. Thereafter, by washing with an aqueous hydrochloric acid solution, dehydration treatment over magnesium sulfate, and concentration under reduced pressure, 0.72 g of the following compound was obtained. 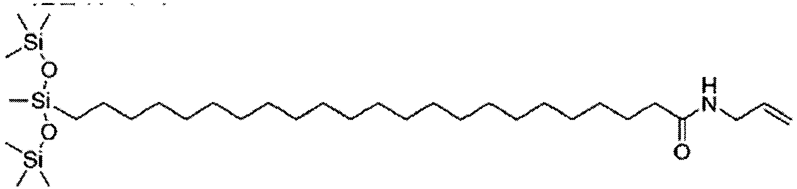 1H NMR (CDCl3, 400 MHz) δ [ppm]: 0.076-0.128 (m), 0.413-0.465 (t), 1.183-1.1.404(m), 1.604-1.677 (m), 2.173-2.248 (t), 3.841-3.942(m), 5.122-5.210(m), 5.809-5.877 (m)

0.72 g of the compound obtained as described above, 6.0 mL of toluene, 0.04 mL of pyridine, and 0.26 mL of a xylene solution containing a Pt complex of 1,3-divinyl-1,1,3,3-tetramethyldisiloxane at 2% were each added, 1.4 mL of trimethoxysilane was then charged, and the mixture was stirred at room temperature overnight. Thereafter, purification was performed, thereby obtaining the following compound (b-9, 0.48 g), which has a trimethoxysilyl group at an end. 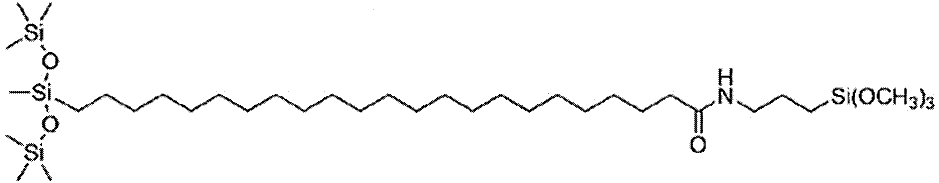 Compound b-9
1H NMR (CDCl3, 400 MHz) δ [ppm]: 0.054-0.149 (m), 0.425-0.464 (t), 0.628-0.681 (m), 1.181-1.402 (m), 1.544-1.768(m), 2.125-2.164 (t), 3.558-3.646 (m)

### Synthetic Example 18

3.02 g of 22-tricosenoic acid, 26 mL of toluene, and 17 mL of methanol were each added, then 20 mL of trimethylsilyldiazomethane was added dropwise, and the mixture was stirred at room temperature for 3 hours. Thereafter, the mixture was concentrated under reduced pressure to obtain 3.11 g of the following compound. 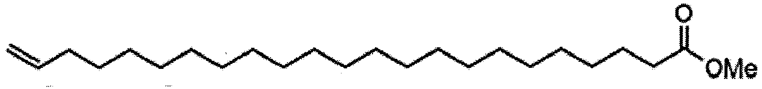 1H NMR (CDCl3, 400 MHz) δ [ppm]: 1.249-1.649 (m), 2.005-2.061 (m), 2.279-2.316(t), 1.567-1.622 (m), 3.662 (s), 4.904-5.015 (m), 5.760-5.862 (m)

0.50 g of the compound obtained as described above, 10.0 mL of toluene, 0.05 mL of pyridine, and 0.3 mL of a xylene solution containing a Pt complex of 1,3-divinyl-1,1,3,3-tetramethyldisiloxane at 2% were each added, and then 1.2 mL of 1,1,1,3,5,5,5-heptamethyltrisiloxane was added dropwise. By stirring at room temperature for 17 hours and then performing purification, 0.87 g of the following compound was obtained. 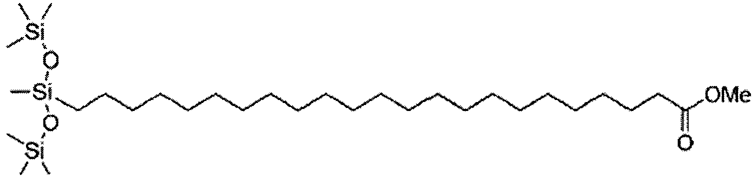 1H NMR (CDCl3, 400 MHz) δ [ppm]: 0.033-0.241 (m), 0.438-0.550 (m), 1.191-1.413(m), 1.607-1.642 (m), 2.242-2.325 (m), 3.669 (s)

1.8 g of the compound obtained as described above, 2.01 mL of 2-allylpent-4-en-1-amine, and 0.43 g of 1,5,7-triazabicyclo[4.4.0]dec-5-ene were each added, and the mixture was then stirred at 75°C for 3 hours. Thereafter, by washing with an aqueous hydrochloric acid solution, dehydration treatment over magnesium sulfate, and concentration under reduced pressure, 1.92 g of the following compound was obtained. 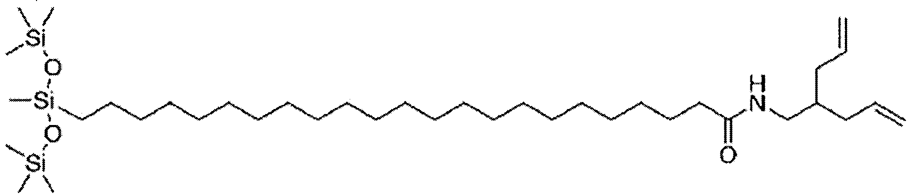 1H NMR (CDCl3, 400 MHz) δ [ppm]: 0.076-0.128 (m), 0.413-0.465 (t), 1.183-1.1.404(m), 1.604-1.677 (m),1.704-1.769 (m), 1.994-2.093 (m), 2.103-2.285 (m), 3.161-3.328(t), 4.997-5.195(m), 5.397-5.595 (s), 5.708-5.975 (m)

0.47 g of the compound obtained as described above, 3.5 mL of toluene, 0.014 mL of pyridine, and 0.1 mL of a xylene solution containing a Pt complex of 1,3-divinyl-1,1,3,3-tetramethyldisiloxane at 2% were each added, 0.52 mL of trimethoxysilane was then charged, and the mixture was stirred at room temperature for 3 hours. Thereafter, purification was performed, thereby obtaining the following compound (compound b-10, 0.48 g), which has a trimethoxysilyl group at an end. 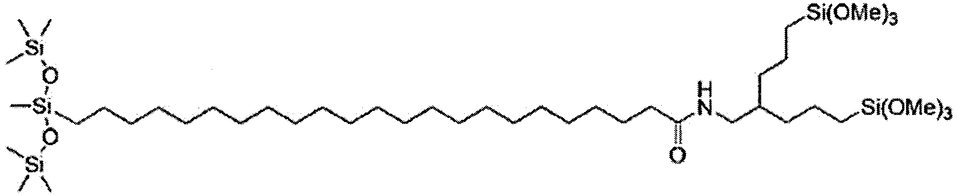 Compound b-10
1H NMR (CDCl3, 400 MHz) δ [ppm]: 0.054-0.149 (m), 0.425-0.464 (t), 0.628-0.681(t), 1.181-1.402 (m), 1.544-1.768(m), 2.125-2.164 (t), 3.135-3.203 (t), 3.558-3.646 (m), 5.449-5.528 (s)

### Synthetic Example 19

Tricosanoic acid (2.16 g), diallylamine (1.47 g), 1-(3-dimethylaminopropyl)-3-ethylcarbodiimide hydrochloride (1.85 g), 4-dimethylaminopyridine (83.2 mg), and dichloromethane (21.6 g) were mixed and stirred at room temperature overnight. The mixed solution was diluted with dichloromethane, washed with hydrochloric acid and water, and then concentrated under reduced pressure to obtain CH₃(CH₂)₂₁-CON(CH₂CH=CH₂)₂ (1.39 g).
1H NMR (CDCl3, 400 MHz) δ [ppm]: 0.86-0.90 (m), 1.25-1.29 (m), 1.62-1.67 (m), 2.17-2.21 (m),3.87-3.91 (m) 3.87-3.91 (m), 5.12-5.21 (m), 5.44 (m), 5.79-5.89 (m)

CH₃(CH₂)₂₁-CON(CH₂CH=CH₂)₂ (3 g), toluene (20 mL), a solution of Karstedt's catalyst in xylene (2%, 1.8 mL), aniline (0.3 g), and trimethoxysilane (6.3 mL) were mixed and stirred at room temperature overnight, and then concentrated under reduced pressure to obtain CH₃(CH₂)₂₁-CON{CH₂CH₂CH₂Si(OCH₃)₃}₂ (compound a-10, 5.2 g).
Compound a-9
1H NMR (CDCl3, 400 MHz) δ [ppm]: 0.83-0.92 (m, 3H), 1.22-26 (m, 28H), 1.56-1.65 (m, 6H), 2.20-2.26(m, 2H), 3.15-3.27 (m, 4H), 3.53-3.67 (m, 18H),

### <Preparation of surface-treating agent>

As shown in Table 1, the compound A, the compound B, and the solvent were mixed to prepare the surface-treating agents 1 to 34 with a solid concentration of 20 wt%. Some did not dissolve completely, but were used as a suspension.

**[Table 1]**

| Surface-treating agent | Compound A | Compound B | Mixing ratio wt/wt | Solvent |
|---|---|---|---|---|
| Surface-treating agent 1 | a-1 | b-1 | 80/20 | Ethanol/ Hexamethyldisiloxane |
| Surface-treating agent 2 | a-1 | b-2 | 80/20 | Ethanol/ Hexamethyldisiloxane |
| Surface-treating agent 3 | a-2 | b-1 | 80/20 | Hexamethyldisiloxane |
| Surface-treating agent 4 | a-2 | b-2 | 80/20 | Hexamethyldisiloxane |
| Surface-treating agent 5 | a-3 | b-1 | 80/20 | Hexamethyldisiloxane |
| Surface-treating agent 6 | a-1 | b-3 | 80/20 | Ethanol/ Hexamethyldisiloxane |
| Surface-treating agent 7 | a-4 | b-1 | 80/20 | Hexamethyldisiloxane |
| Surface-treating agent 8 | a-1 | b-8 | 80/20 | Ethanol/ Hexamethyldisiloxane |
| Surface-treating agent 9 | a-1 | b-4 | 80/20 | Ethanol/ Hexamethyldisiloxane |
| Surface-treating agent 10 | a-2 | b-5 | 80/20 | Hexamethyldisiloxane |
| Surface-treating agent 11 | a-2 | b-6 | 80/20 | Hexamethyldisiloxane |
| Surface-treating agent 12 | a-2 | b-7 | 80/20 | Hexamethyldisiloxane |
| Surface-treating agent 13 | a-5 | b-1 | 80/20 | Hexamethyldisiloxane |
| Surface-treating agent 14 | a-6 | b-1 | 80/20 | Hexamethyldisiloxane |
| Surface-treating agent 15 | a-1 | b-1 | 50/50 | Ethanol/ Hexamethyldisiloxane |
| Surface-treating agent 16 | a-1 | c-1 | 80/20 | Ethanol/ Hexamethyldisiloxane |
| Surface-treating agent 17 | a-7 | b-1 | 80/20 | Ethanol/ Hexamethyldisiloxane |
| Surface-treating agent 18 | a-1 | - | 100/0 | Ethanol |
| Surface-treating agent 19 | a-2 | - | 100/0 | Hexamethyldisiloxane |
| Surface-treating agent 20 | - | b-1 | 0/100 | Hexamethyldisiloxane |
| Surface-treating agent 21 | - | b-2 | 0/100 | Hexamethyldisiloxane |
| Surface-treating agent 22 | - | b-8 | 0/100 | Hexamethyldisiloxane |
| Surface-treating agent 23 | a-4 | b-9 | 20/80 | Heptane |
| Surface-treating agent **24** | a-4 | b-9 | 50/50 | Heptane |
| Surface-treating agent 25 | a-4 | b-9 | 80/20 | Heptane |
| Surface-treating agent 26 | a-9 | b-9 | 50/50 | Heptane |
| Surface-treating agent 27 | a-1 | b-9 | 50/50 | Heptane |
| Surface-treating agent 28 | a-2 | b-9 | 50/50 | Heptane |
| Surface-treating agent 29 | a-4 | b-10 | 50/50 | Heptane |
| Surface-treating agent 30 | a-9 | b-10 | 50/50 | Heptane |
| Surface-treating agent 31 | a-1 | b-10 | 50/50 | Heptane |
| Surface-treating agent 32 | a-2 | b-10 | 50/50 | Heptane |
| Surface-treating agent 33 | a-10 | b-9 | 50/50 | Heptane |
| Surface-treating agent 34 | a-10 | b-9 | 70/30 | Heptane |
| Surface-treating agent 35 | - | b-9 | 0/100 | Heptane |
| Surface-treating agent 36 | - | b-10 | 0/100 | Heptane |

### <Na-containing intermediate layer-forming material>

2.2 g of sodium hydroxide (manufactured by FUJIFILM Wako Pure Chemical Corporation) was dissolved in 24 g of distilled water to obtain an 8.4 mass% aqueous sodium hydroxide solution. 24 g of this 8.4 mass% aqueous sodium hydroxide solution and 20 g of M.S.GEL (M.S.GEL D-100-60A (manufactured by AGC Si-Tech Co., Ltd.)) were mixed to allow the aqueous sodium hydroxide solution to be absorbed into M.S.GEL. M.S.GEL that absorbed the aqueous sodium hydroxide solution was dried at 25°C for 8 hours, then formed with a tablet forming machine (4 MPa for 1 minute), and baked at 1,000°C for 1 hour to obtain a formed product 1 (pellets).

### <Formation of surface-treating layer>

### (SiO₂ intermediate layer)

The surface-treating agent prepared as described above was vacuum-deposited on a chemically tempered glass ("Gorilla" Glass, manufactured by Corning Incorporated, thickness 0.7 mm). Specifically, a molybdenum boat in the vacuum deposition device was filled with 0.1 g of the surface-treating agent, and the vacuum deposition device was evacuated to a pressure of 3.0 × 10⁻³ Pa or lower. Thereafter, a silicon dioxide film with a thickness of 7 nm was formed, followed by heating the boat by the resistance heating scheme to form a surface-treating layer. Thereafter, a heating treatment was performed in an oven at 150°C for 2 hours to obtain a surface-treating layer.

### (Na-containing SiO₂ intermediate layer)

The surface-treating agent prepared as described above was vacuum-deposited on a chemically tempered glass (manufactured by Corning Incorporated, "Gorilla" Glass, thickness 0.7 mm). Specifically, a molybdenum boat in the vacuum deposition device was filled with 0.1 g of the surface-treating agent, and the vacuum deposition device was evacuated to a pressure of 3.0 × 10⁻³ Pa or lower. Thereafter, using the formed product 1, deposition was performed by the electron beam deposition scheme to form a Na-containing silicon dioxide film with a thickness of 7 nm, followed by heating the boat by the resistance heating scheme to form a surface-treating layer. Thereafter, a heating treatment was performed in an oven at 150°C for 2 hours to obtain a surface-treating layer.

### <Evaluation>

### [Evaluation of abrasion resistance]

### (Contact angle measurement)

For the measurement of contact angle, a fully automatic contact angle meter DropMaster 700 (manufactured by Kyowa Interface Science Co., Ltd.) was used under an environment of 25°C. Specifically, the measurement target, substrate having the surface-treating layer, was placed horizontally, water was dropped from a micro syringe onto its surface, and a static image was taken one second after the dropping with a video microscope to thereby measure the static contact angle. The static contact angle was measured at five different points on the surface-treating layer of the substrate, and the average value calculated therefrom was used.

### (Evaluation after abrasion resistance test)

The following friction block was brought into contact with the formed surface-treating layer, a load of 5 N was applied thereon, and the friction block was reciprocated at a speed of 40 mm/second while applying the load. The static water contact angle (°) was measured at 400 friction times. The measurement criteria are shown below.
90° or higher: excellent (double circle)
70° or higher and lower than 90°: good (circle)
50° or higher and lower than 70°: fair (triangle)
Lower than 50°: poor (cross mark)

### - Friction block

The surface of the silicone rubber processed product shown below was covered with cotton soaked in artificial sweat having the compositional features shown below, and the product was used as a friction block.

Compositional features of artificial sweat:
Anhydrous disodium hydrogen phosphate: 2 g
Sodium chloride: 20 g
85% Lactic acid: 2 g
Histidine hydrochloride: 5 g
Distilled water: 1 kg

Silicone rubber processed product:
Silicone rubber stopper SR-51 made of Tiger's polymer processed into a cylindrical shape having a diameter of 1 cm and a thickness of 1 cm.

### [Evaluation of ink removability]

After forming the surface-treating layer, the excess on the surface was wiped off and used as the evaluation sample. After drawing a line on the surface layer of the evaluation sample with an oil-based felt tipped pen (Mckee extra thick black: product name, manufactured by ZEBRA CO., LTD.), the sample was abraded 10 times with BEMCOT M-3II as an abrasion block under the conditions where the moving speed was 70 rpm and the load was 100 g/3 cm2, and then the state of attachment of oil-based ink (line) was visually observed to evaluate ink removability (initial ink removability) in accordance with the following criteria.
Excellent (double circle): the removal ratio of oil-based ink is 90% or more.
Good (circle): the removal ratio of oil-based ink is 60% or more and less than 90%.
Fair (triangle): the removal ratio of oil-based ink is 30% or more and less than 60%.
Poor (cross mark): the removal ratio of oil-based ink is less than 30%.

**[Table 2]**

| Example | Surface-treating agent | Underlying layer | Evaluation results | |
|---|---|---|---|---|
| | | | Contact angle after 400 times of abrasion | Ink removability of abrasion |
| Example 1 | Surface-treating agent 1 | Silicon dioxide film | △ | ○ |
| Example 2 | Surface-treating agent **2** | Silicon dioxide film | ○ | ○ |
| Example 3 | Surface-treating agent 3 | Silicon dioxide film | ○ | ○ |
| Comparative Example 1 | Surface-treating agent 20 | Silicon dioxide film | × | 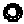 |
| Comparative Example 2 | Surface-treating agent 21 | Silicon dioxide film | × | 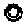 |
| Example 4 | Surface-treating agent 1 | Na-Containing silicon dioxide film | ○ | ○ |
| Example 5 | Surface-treating agent 2 | Na-Containing silicon dioxide film | 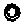 | ○ |
| Example 6 | Surface-treating agent 3 | Na-Containing silicon dioxide film | 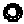 | ○ |
| Example 7 | Surface-treating agent 4 | Na-Containing silicon dioxide film | 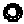 | ○ |
| Example 8 | Surface-treating agent 5 | Na-Containing silicon dioxide film | 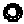 | 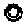 |
| Example 9 | Surface-treating agent 6 | Na-Containing silicon dioxide film | 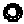 | ○ |
| Example 10 | Surface-treating agent 7 | Na-Containing silicon dioxide film | △ | ○ |
| Example 11 | Surface-treating agent 8 | Na-Containing silicon dioxide film | ○ | ○ |
| Example 12 | Surface-treating agent 9 | Na-Containing silicon dioxide film | △ | 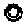 |
| Example 13 | Surface-treating agent 10 | Na-Containing silicon dioxide film | 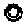 | 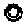 |
| Example 14 | Surface-treating agent 11 | Na-Containing silicon dioxide film | 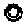 | 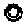 |
| Example 15 | Surface-treating agent 12 | Na-Containing silicon dioxide film | 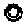 | 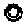 |
| Example 16 | Surface-treating agent 13 | Na-Containing silicon dioxide film | △ | ○ |
| Example 17 | Surface-treating agent 14 | Na-Containing silicon dioxide film | ○ | ○ |
| Example 18 | Surface-treating agent 15 | Na-Containing silicon dioxide film | 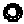 | 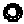 |
| Example 19 | Surface-treating agent 16 | Na-Containing silicon dioxide film | 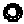 | ○ |
| Example 20 | Surface-treating agent 17 | Na-Containing silicon dioxide film | 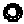 | ○ |
| Comparative Example 3 | Surface-treating agent 18 | Na-Containing silicon dioxide film | ○ | △ |
| Comparative Example 4 | Surface-treating agent 19 | Na-Containing silicon dioxide film | ○ | × |
| Comparative Example 5 | Surface-treating agent 20 | Na-Containing silicon dioxide film | × | 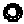 |
| Comparative Example 6 | Surface-treating agent 21 | Na-Containing silicon dioxide film | × | 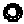 |
| Comparative Example 7 | Surface-treating agent 22 | Na-Containing silicon dioxide film | x | ○ |
| Example 21 | Surface-treating agent 23 | Na-Containing silicon dioxide film | ○ | ○ |
| Example 22 | Surface-treating agent 24 | Na-Containing silicon dioxide film | ○ | ○ |
| Example 23 | Surface-treating agent 25 | Na-Containing silicon dioxide film | ○ | 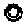 |
| Example 24 | Surface-treating agent 26 | Na-Containing silicon dioxide film | ○ | 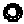 |
| Example 25 | Surface-treating agent 27 | Na-Containing silicon dioxide film | ○ | 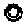 |
| Example 26 | Surface-treating agent 28 | Na-Containing silicon dioxide film | ○ | 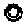 |
| Example 27 | Surface-treating agent 29 | Na-Containing silicon dioxide film | ○ | 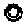 |
| Example 28 | Surface-treating agent 30 | Na-Containing silicon dioxide film | 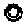 | 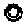 |
| Example 29 | Surface-treating agent 31 | Na-Containing silicon dioxide film | ○ | 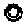 |
| Example 30 | Surface-treating agent 32 | Na-Containing silicon dioxide film | ○ | 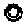 |
| Example 31 | Surface-treating agent 33 | Na-Containing silicon dioxide film | ○ | 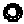 |
| Example 32 | Surface-treating agent 34 | Na-Containing silicon dioxide film | ○ | 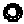 |
| Comparative Example 8 | Surface-treating agent 35 | Na-Containing silicon dioxide film | × | 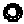 |
| Comparative Example 9 | Surface-treating agent 36 | Na-Containing silicon dioxide film | △ | 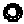 |

### Industrial Applicability

The surface-treating agent of the present disclosure can be suitably utilized in a variety of diverse applications.

## Claims

1. A composition comprising:
(component A) a silane coupling agent containing a long chain alkyl structure; and
(component B) a silane coupling agent containing a siloxane structure.

2. The composition according to claim 1, wherein the component A is
a compound represented by the following formula (1A):
[Formula 1]
**R^{A}-X^{A}-R^{Si}** **(1A)**
wherein
R^{A} is a linear alkyl group having 7 or more carbon atoms,
X^{A} is a divalent group, and
R^{Si} is a monovalent group containing a Si atom to which a hydroxyl group or a hydrolyzable group is bonded, or
a compound represented by the following formula (1B):
[Formula 2]
**R^{S}-X^{B}-**R^{Si} **(1B)**
wherein
R^{S} is a monovalent group containing one or more Si atoms to which a hydroxyl group or a hydrolyzable group is not directly bonded,
X^{B} is a divalent organic group containing an alkylene group having 7 or more carbon atoms, and
R^{Si} is a monovalent group containing a Si atom to which a hydroxyl group or a hydrolyzable group is bonded.

3. The composition according to claim 1 or 2, wherein the component B is
a compound represented by the following formula (1B):
[Formula 3]
**R^{S}-X^{B}-R^{Si}** **(1B)**
wherein
R^{S} is a monovalent group containing one or more Si atoms to which a hydroxyl group or a hydrolyzable group is not directly bonded,
X^{B} is a divalent organic group containing an alkylene group having 7 or more carbon atoms, and
R^{Si} is a monovalent group containing a Si atom to which a hydroxyl group or a hydrolyzable group is bonded,
or
a compound represented by the following formula (1C) or (2C):
[Formula 4]
**R^{SO1}_{α}-X^{C}-R^{Si}_{β}** **(1C)**
**R^{Si}γ-X^{C}-R^{SO2}-X^{C}-R^{Si}_{γ}** **(2C)**
wherein
R^{SO1} is each independently R¹-R^{SO}-SiR²₂-,
R^{SO2} is -R^{SO}-SiR²₂-,
R^{SO} is each independently a group represented by the following formula: 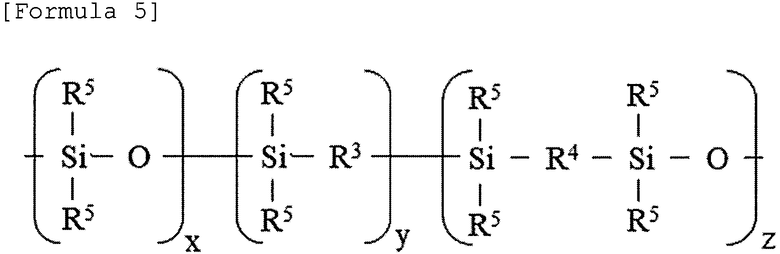 wherein
R³ is each independently a C₁₋₁₂ alkylene group, -R⁶-OR⁶-, -R⁸-R⁷-R⁸-, -R⁸-R⁷-R⁹-R⁷-R⁸-, -R⁸-R⁷-R⁹-R⁶-R⁹-R⁷-R⁸-, or - R⁹-R⁶-R⁹-R⁷-R⁹-R⁶-R⁹-,
R⁴ is each independently a C₁₋₁₂ alkylene group, -R⁶-OR⁶-, -R⁸-R⁷-R⁸-, -R⁸-R⁷-R⁹-R⁷-R⁸-, -R⁸-R⁷-R⁹-R⁶-R⁹-R⁷-R⁸-, or - R⁹-R⁶-R⁹-R⁷-R⁹-R⁶-R⁹-,
R⁶ is each independently a C₁₋₆ alkylene group,
R⁷ is each independently an optionally substituted arylene group,
R⁸ is each independently a single bond or a C₁₋₆ alkylene group,
R⁹ is each independently a single bond or an oxygen atom,
R⁵ is each independently a hydrocarbon group,
x is an integer of 0 to 200,
y is an integer of 0 to 200,
z is an integer of 0 to 200,
x + y + z is 1 or more, and
the occurrence order of the respective repeating units enclosed in parentheses provided with x, y, or z is not limited in the formula,
R¹ is a hydrocarbon group,
R² is each independently a hydrocarbon group,
R^{Si} is each independently a monovalent group containing a Si atom to which a hydroxyl group or a hydrolyzable group is bonded,
X^{C} is each independently a di- to decavalent organic group,
α is an integer of 1 to 9,
β is an integer of 1 to 9, and
γ is each independently an integer of 1 to 9.

4. The composition according to claim 2 or 3, wherein R^{S} is a group represented by the following group:
R⁴³-(SiR⁴⁴₂O)ₙ-SiR44₂-
wherein
R⁴³ is a C₁₋₁₂ alkyl group or a group represented by A group:
[Formula 6]
**R⁵¹ₙₐR⁵²₃₋ₙₐSi-(O)_{z}-** **(A)**
wherein
R⁵¹ is each independently a group represented by -(R⁵⁴-OSiR⁵³₂)ₘₐ-R⁵³,
R⁵⁴ is each independently an oxygen atom or a C₁₋₆ alkylene group,
R⁵³ is each independently a hydrocarbon group or R^{1'},
R^{51'} has the same definition as R⁵¹,
ma is each independently an integer of 1 to 5,
provided that the number of R^{51'} in R⁵¹ is 20 or less,
R⁵² is each independently or a hydrocarbon group,
na is 1 to 3, and
z is 0 or 1,
R⁴⁴ is each independently a C₁₋₁₂ alkyl group, and
n is 0 to 1,500.

5. The composition according to claim 2 or 3, wherein R^{S} is a group represented by A group:
[Formula 7]
**R⁵¹ₙₐR⁵²₃₋ₙₐSi-(O)_{z}-** **(A)**
wherein
R⁵¹ is each independently a group represented by -(R⁵⁴-OSiR⁵³₂)ₘₐ-R⁵³,
R⁵⁴ is each independently an oxygen atom or a C₁₋₆ alkylene group,
R⁵³ is each independently a hydrocarbon group or R^{1'},
R^{51'} has the same definition as R⁵¹,
ma is each independently an integer of 1 to 5, provided that the number of R^{51'} in R⁵¹ is 20 or less,
R⁵² is each independently or a hydrocarbon group,
na is 1 to 3, and
z is 0 or 1.

6. The composition according to any one of claims 2 to 5, wherein R^{Si} is a group represented by the following formula (S1), (S2), (S3), (S4), or (S5): 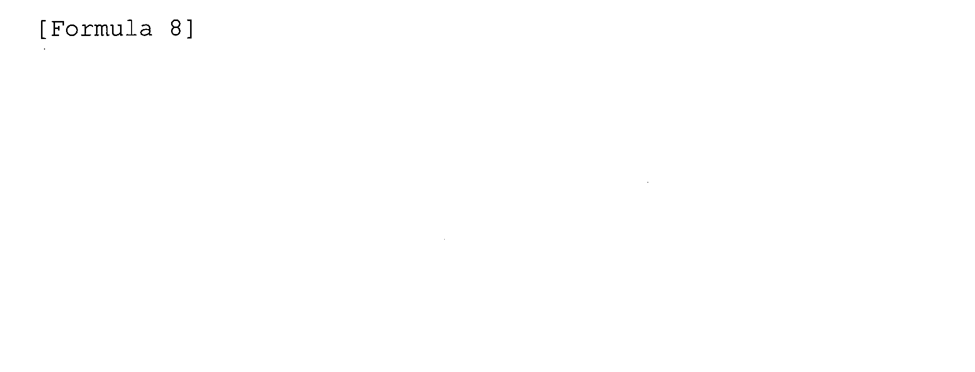 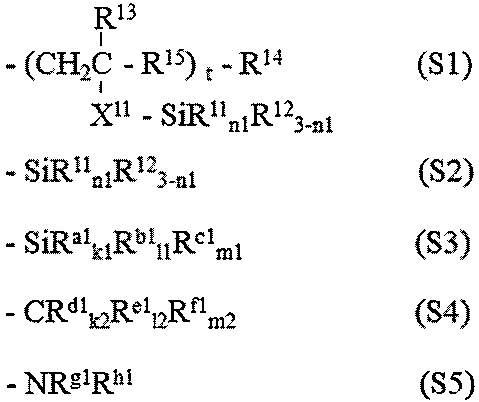 wherein
R¹¹ is each independently a hydroxyl group or a hydrolyzable group,
R¹² is each independently a monovalent organic group,
n1 is each independently an integer of 0 to 3 for each (SiR¹¹ₙ₁R¹²₃₋ₙ₁) unit,
X¹¹ is each independently a single bond or a divalent organic group,
R¹³ is each independently a hydrogen atom or a monovalent organic group,
t is each independently an integer of 2 or more,
R¹⁴ is each independently a hydrogen atom, a halogen atom, or -X¹¹-SiR¹¹ₙ₁R¹²₃₋ₙ₁,
R¹⁵ is each independently a single bond, an oxygen atom, an alkylene group having 1 to 6 carbon atoms, or an alkyleneoxy group having 1 to 6 carbon atoms,
R^{a1} is each independently -Z¹-SiR²¹ₚ₁R²²_{q1}R²³ᵣ₁,
Z¹ is each independently a divalent organic group,
R²¹ is each independently -Z^{1'}-SiR^{21'}_{p1'}R^{22'}_{q1'}R^{23'}_{r1'},
R²² is each independently a hydroxyl group or a hydrolyzable group,
R²³ is each independently a monovalent organic group,
p1 is each independently an integer of 0 to 3,
q1 is each independently an integer of 0 to 3,
r1 is each independently an integer of 0 to 3,
Z^{1'} is each independently a divalent organic group,
R^{21'} is each independently -Z^{1"}-SiR^{22"}_{q1"}R^{23"}_{r1"},
R^{22'} is each independently a hydroxyl group or a hydrolyzable group,
R^{23'} is each independently a monovalent organic group,
p1' is each independently an integer of 0 to 3,
q1' is each independently an integer of 0 to 3,
r1' is each independently an integer of 0 to 3,
Z^{1"} is each independently a divalent organic group,
R^{22"} is each independently a hydroxyl group or a hydrolyzable group,
R^{23"} is each independently a monovalent organic group,
q1" is each independently an integer of 0 to 3,
r1" is each independently an integer of 0 to 3,
R^{b1} is each independently a hydroxyl group or a hydrolyzable group,
R^{c1} is each independently a monovalent organic group,
k1 is each independently an integer of 0 to 3,
l1 is each independently an integer of 0 to 3,
m1 is each independently an integer of 0 to 3,
provided that, in the formula (S3), at least two Si atoms to which a hydroxyl group or a hydrolyzable group is bonded are present,
R^{d1} is each independently -Z²-CR³¹ₚ₂R³²_{q2}R³³ᵣ₂,
Z² is each independently a single bond, an oxygen atom, or a divalent organic group,
R³¹ is each independently -Z^{2'}-CR^{32'}_{q2'}R^{33'}_{r2'},
R³² is each independently -Z³SiR³⁴ₙ₂R³⁵₃₋ₙ₂,
R³³ is each independently a hydrogen atom, a hydroxyl group, or a monovalent organic group,
p2 is each independently an integer of 0 to 3,
q2 is each independently an integer of 0 to 3,
r2 is each independently an integer of 0 to 3,
Z^{2'} is each independently a single bond, an oxygen atom, or a divalent organic group,
R^{32'} is each independently -Z³-SiR³⁴ₙ₂R³⁵₃₋ₙ₂,
R^{33'} is each independently a hydrogen atom, a hydroxyl group, or a monovalent organic group,
q2' is each independently an integer of 0 to 3,
r2' is each independently an integer of 0 to 3,
Z³ is each independently a single bond, an oxygen atom, or a divalent organic group,
R³⁴ is each independently a hydroxyl group or a hydrolyzable group,
R³⁵ is each independently a monovalent organic group,
n2 is each independently an integer of 0 to 3,
R^{e1} is each independently -Z³-SiR³⁴ₙ₂R³⁵₃₋ₙ₂,
R^{f1} is each independently a hydrogen atom, a hydroxyl group, or a monovalent organic group,
k2 is each independently an integer of 0 to 3,
l2 is each independently an integer of 0 to 3,
m2 is each independently an integer of 0 to 3,
provided that, in the formula (S4), at least two Si atoms to which a hydroxyl group or a hydrolyzable group is bonded are present,
R^{g1} and R^{h1} are each independently -Z⁴-SiR¹¹ₙ₁R¹²₃₋ₙ₁, -Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂, and
Z⁴ is each independently a single bond, an oxygen atom, or a divalent organic group,
provided that, in the formula (S5), at least two Si atoms to which a hydroxyl group or a hydrolyzable group is bonded are present.

7. The composition according to any one of claims 2 to 6, wherein
X^{A} is a single bond, or a divalent group containing - CO-, -COO-, -NR⁴¹-, -CONR⁴¹-, -OCONR⁴¹-, -NR⁴¹-CO-NR⁴¹-, -O- or -S-, and
R⁴¹ is a hydrogen atom or a C₁₋₆ alkyl group.

8. The composition according to any one of claims 2 to 7, wherein X^{B} is further a divalent organic group containing - CO-, -COO-, -NR⁴¹-, -CONR⁴¹-, -OCONR⁴¹-, -NR⁴¹-CO-NR⁴¹-, -O- or -S-.

9. The composition according to any one of claims 2 to 8, wherein the number of carbon atoms in the alkylene group in X^{B} in the formula (1B) is larger than the number of Si atoms in R^{S}.

10. The composition according to any one of claims 2 to 9, wherein the number of carbon atoms in the alkylene group in X^{B} in the formula (1B) is 2.5 or more times the number of Si atoms in R^{S}.

11. The composition according to any one of claims 2 to 10, wherein the number of carbon atoms in the alkylene group in X^{B} in the formula (1B) is larger than the number of atoms in a main chain in R^{S}.

12. The composition according to any one of claims 2 to 11, wherein the number of carbon atoms in the alkylene group in X^{B} in the formula (1B) is 2.0 or more times the number of atoms in a main chain in R^{S}.

13. The composition according to any one of claims 3 to 12, wherein X^{c} is a divalent organic group represented by the following formula:
-(R⁵¹)ₚ₅-(X⁵¹)_{q5}-
wherein
R⁵¹ is -(CH₂)ₛ₅-, or an o-, m- or p-phenylene group,
s5 is an integer of 1 to 20,
X⁵¹ is - (X⁵²)ₗ₅-,
X⁵² is each independently a group selected from the group consisting of -O-, -S-, an o-, m- or p-phenylene group, -CO-, -C(O)O-, -CONR⁵⁴-, -O-CONR⁵⁴-, -NR⁵⁴-, and -(CH₂)ₙ₅-,
R⁵⁴ is each independently a hydrogen atom or a monovalent organic group,
n5 is each independently an integer of 1 to 20,
l5 is an integer of 1 to 10,
p5 is 0 or 1, and
q5 is 0 or 1,
where at least one of p5 and q5 is 1, and the occurrence order of the respective repeating units enclosed in parentheses provided with p5 or q5 is not limited.

14. The composition according to any one of claims 3 to 12, wherein X^{A} or X^{B} in the component A and X^{B} or X^{C} in the component B have the same structure.

15. The composition according to claim 14, wherein X^{A}, X^{B}, and X^{C} contain an amide bond.

16. The composition according to any one of claims 1 to 15, wherein a mixing ratio of the component A and the component B is 1:99 to 99:1 in mass ratio.

17. The composition according to any one of claims 1 to 16, wherein at least one of the component A and the component B contains only one of a long chain alkyl structure or a siloxane structure.

18. The composition according to any one of claims 1 to 17, further comprising a solvent selected from compounds represented by R⁸¹OR⁸², R⁸³ₙ₈C₆H₆₋ₙ₈, R⁸⁴R⁸⁵R⁸⁶Si- (O-SiR⁸⁷R⁸⁸)ₘ₈-R⁸⁹, and (OSiR⁸⁷R⁸⁸)ₘ₉,
wherein
R⁸¹ to R⁸⁹ are each independently a monovalent organic group having 1 to 10 carbon atoms,
m8 is an integer of 1 to 6,
m9 is an integer of 3 to 8, and
n8 is an integer of 0 to 6.

19. The composition according to claim 18, wherein the solvent is R⁸⁴R⁸⁵R⁸⁶Si-(O-SiR⁸⁷R⁸⁸)ₘ₈-R⁸⁹.

20. The composition according to claim 18 or 19, wherein the solvent is hexamethyldisiloxane, hexaethyldisiloxane, octamethyltrisiloxane, octamethylcyclotetrasiloxane, or decamethylcyclopentasiloxane.

21. A surface-treating agent comprising the composition according to any one of claims 1 to 20.

22. The surface-treating agent according to claim 21, further comprising a condensed product of a compound of the component A or the component B.

23. The surface-treating agent according to claim 21 or 22, which is for vacuum deposition.

24. The surface-treating agent according to claim 21 or 22, which is for wet coating.

25. A pellet comprising the surface-treating agent according to any one of claims 21 to 24.

26. An article comprising a substrate and a layer on the substrate, the layer being formed from the surface-treating agent according to any one of claims 21 to 24.

27. The article according to claim 26, comprising a silicon oxide-containing intermediate layer between the substrate and the layer.

28. The article according to claim 27, wherein the intermediate layer comprises alkali metal atoms.

29. The article according to claim 28, wherein at least a portion of the alkali metal atoms are sodium atoms.

30. The article according to any one of claims 26 to 29, which is an optical member.

31. The article according to any one of claims 26 to 29, which is a display.
